# EUROPEAN PATENT SPECIFICATION

(11) **EP 3 984 364 B1**
(45) Date of publication and mention of the grant of the patent: **02.12.2026**
(21) Application number: 21191774.5
(22) Date of filing: 20.02.2015
(51) Int. Cl.: A01N 43/80, A01N 37/22, A01P 13/02, A01N 25/32, A01N 25/02, A01N 25/04, A01N 25/28, A01N 33/22, A01N 37/40, A01N 39/02, A01N 41/10, A01N 43/10, A01N 43/40, A01N 43/56, A01N 43/653, A01N 43/70, A01N 43/90, A01N 47/36

(54) **USE OF 3-ISOXAZOLIDINONE COMPOUNDS AS SELECTIVE HERBICIDES**
VERWENDUNG VON 3-ISOXAZOLIDON-VERBINDUNGEN ALS SELEKTIVE HERBIZIDE
UTILISATION DE COMPOSÉS DE 3-ISOXAZOLIDINONE COMME HERBICIDES SÉLECTIFS

(30) Priority: 23.02.2014 US 201461943437 P; 11.03.2014 US 201461951269 P
(43) Date of publication of application: 20.04.2022
(62) Document number(s) of the earlier application(s) in accordance with Art. 76 EPC: 15752754.0 / 3 107 393
(73) Proprietor: FMC Corporation, Philadelphia, Pennsylvania 19104 (US)
(72) Inventor: WALTER, James, F., Philadelphia, PA 19104 (US); NICHOLSON, Paul, Philadelphia, PA 19104 (US); BURNETT, Alison, Philadelphia, PA 19104 (US); LAPPIN, James, Philadelphia, PA 19104 (US); CHAHAL, Gurinderbir, Philadelphia, PA 19104 (US); SHINN, Sandra, Philadelphia, PA 19104 (US); D'AMICO, Jr., Frank J., Philadelphia, PA 19104 (US)
(74) Representative: Dehns

(56) References cited:
- EP-A1- 0 958 742
- WO-A2-2012/148689
- AU-B2- 767 610
- CN-A- 102 428 942
- CN-A- 102 894 004
- FR-A1- 2 618 053
- US-A- 4 405 357
- US-A- 5 691 274
- GREGORY R. ARMEL: "Differential Response of Several Carotenoid Biosynthesis Inhibitors in Mixtures with Atrazine", WEED TECHNOLOGY, vol. 21, 1 December 2007 (2007-12-01), pages 947 - 953, XP009195131, DOI: http://www.jstor.org/stable/25194954

## Description

### TECHNICAL FIELD

The present invention is directed to compositions comprising 2-(2,4-dichlorophenyl)methyl-4,4-dimethyl-3-isoxazolidinone ("2,4-DC") in combination with a second herbicide as defined in claim 1. The invention is also directed to methods of controlling undesired vegetation in a crop as defined in claim 4.

### BACKGROUND

The protection of crops from undesirable plants known as weeds which can interfere with crop growth and can reduce crop yield has long been a goal in agriculture. One approach which has been taken to achieve this goal is the development of selective herbicides which can control weeds without exhibiting unacceptable phytotoxicity to the crops sought to be protected. More recently, crops have been protected from weeds by genetically modifying the crop to be tolerant to a non-selective herbicide (such as glyphosate or glufosinate) and applying such herbicide over the top of such crops. Unfortunately, this latter approach has led to the evolution of herbicide-resistant weeds, with the result that there is still a need for a means of selectively controlling undesirable vegetation in crops.

WO 2012/148689 A2 discloses a method of selectively controlling undesirable vegetation in a grassy monocot or brassica crop selected from the group consisting of corn, rice, soghum, sugarcane and canola (or oil seed rape) comprising applying at least one 3-isoxazolidone herbicide selected from 2-(2,4-dichlorophenyl)methyl-4,4-dimethyl-3-isoxazolidone and 2-(2,5-dichlorophenyl)methyl-4,4-dimethyl-3-isoxazolidone to the locus of such vegetation.

US 5 691 274 A discloses herbicidal compositions comprising a 3-isoxazolidinone herbicide, an antidote therefor and one or more co-herbicides selected from acetamide herbicides, S-triazine herbicides, p-toluidine herbicides and sulfonylurea herbicides.

AU 767 610 B2 discloses herbicidal compositions comprising clomazone and diflufenican.

CN 102 428 942 A discloses a herbicidal composition for rice fields comprising clomazone and certain other herbicides.

CN 102 894 004 A discloses a herbicide composition for controlling weeds in sweet potato fields comprising clomazone and thifensulfuron methyl.

EP 0 958 742 A1 discloses herbicidal compositions comprising clomazone and aclonifen.

FR 2 618 053 A1 discloses a method for controlling undesirable vegetation comprising applying clomazone and at least one herbicide inhibiting photosystem II.

Armel et al, Weed Technology, 2007, 21(4):947-953 discusses differential response of several carotenoid biosynthesis inhibitors in mixtures with atrazine.

United States Patent 4,405,357 discloses certain 3-isoxazolidinones which exhibit desirable selective herbicidal activity. Specifically, such compounds are shown to be effective in controlling grassy and broadleaf weed species while leaving legumes, particularly soybeans, unaffected. Among the compounds specifically disclosed in this patent are 2-(2,4-dichlorophenyl) methyl-4,4-dimethyl-3-isoxazolidinone and 2-(2,5-dichlorophenyl)methyl-4,4-dimethyl-3-isoxazolidinone. Both such compounds are effective against a number of weeds. However, there is still a need for effective combinations of herbicides to reduce or nullify the injury of the crop plants by using selective formulations while not affecting the herbicidal action on the weeds to be controlled.

### SUMMARY OF THE INVENTION

The present invention addresses such need. The present invention is directed to novel compositions for protecting crops from undesirable vegetation as defined in claim 1. One aspect of the invention is directed to a composition containing a first herbicide that is 2-(2,4-dichlorophenyl)methyl-4,4-dimethyl-3-isoxazolidinone ("2,4-DC") and at least one second herbicide selected from clomazone, aclonifen, pyroxasulfone, diflufenican, napropamide, dimethenamid-P, bromoxynil, S-metolachlor, isoxaflutole, dimethachlor, atrazine, metsulfuron-methyl, a mixture of pyroxasulfone and sulfentrazone, or a mixture of pyroxasulfone and carfentrazone.

In a preferred embodiment, the second herbicide is selected from the group consisting of aclonifen, atrazine, bromoxynil, clomazone, diflufenican, dimethachlor, dimethenamid-P, isoxaflutole, S-metolachlor, metsufluron-methyl, napropamide, and pyroxasulfone.

In yet another embodiment, the second herbicide is selected from the group consisting of napropamide, aclonifen, pyroxasulfone, and diflufenican.

Compositions of the invention may be used in methods of controlling undesirable vegetation and protecting a crop, wherein the composition of the invention comprises a first herbicide which is 2,4-DC and a second herbicide selected from the group that includes aclonifen, atrazine, bromoxynil, clomazone, diflufenican, dimethachlor, dimethenamid-P, isoxaflutole, S-metolachlor, metsufluron-methyl, napropamide, and pyroxasulfone.

Susceptible crops include plants from groups such as bananas, beans, beets, Cassava, cereals, citrus, cocoas, coconuts, coffee, corn, cotton, fiber crops, flowers, forage corps, forestry, groundnuts, peanuts, hops, horticultures, non-land crops, oil palm, oilseed rape, peas, pomes , potato, rice, stonefruit, spices, sugarcane, sunflower, tea, tobacco, tomatoes, tree nuts, turf, vegetable crops, vines, and grapes.for example crops are selected from potato, soybean, corn, rice, sorghum, oilseed rape, barley, rye, cowpea, and canola.

The present disclosure also describes a method as defined in claim 4 of controlling undesired vegetation in a crop that includes applying to the locus of such vegetation a herbicidally-effective amount of a composition of the invention. Crops may be selected from the group that includes potato, soybean, corn, rice, sorghum, oilseed rape, barley, rye, and canola.

In another further embodiment, the second herbicide is selected from the group that includes dimethenamid-P, napropamide, dimethachlor, S-metolachlor, aclonifen, pyroxasulfone, and diflufenican.

### DETAILED DESCRIPTION

As used in this application and unless otherwise indicated the term "herbicide" refers to a compositional mixture that is produced, sold, or used in a field in order to kill or otherwise inhibit the growth of unwanted plants such as, but not limited to, deleterious or annoying weeds, broadleaf plants, grasses, and sedges; and can be used for crop protection, edifice protection or turf protection. The term "herbicide" includes the end-use herbicidal product. This composition can be a pure compound, a solution of chemical compounds, a mixture of chemical compounds, an emulsion, a suspension, a solid-liquid mixture, or a liquid- liquid mixture.

The term "herbicide" also refers to the product that passes through the commercial channels from the manufacturer to the ultimate end user who can either apply the herbicide to the affected field as sold, or mix it with other excipients.

The term "weed" means and includes any plant which grows where not wanted.

The term "herbicidally effective amount" means an amount necessary to produce an observable herbicidal effect on unwanted plant growth, including one or more of the effects of necrosis, death, growth inhibition, reproduction inhibition, inhibition of proliferation, and removal, destruction, or otherwise diminishing the occurrence and activity of unwanted plants.

The definition of the term "herbicidal composition" refers to an herbicide, and in addition, to any composition that comprises an herbicidally active ingredient. This composition can be a solution or a mixture. Further, the definition of the term "herbicidal composition" also refers to a product intended for use in manufacturing, or any product intended for formulation or repackaging into other agricultural products.

The term "herbicidally active ingredient" means the active ingredient in the herbicide that causes the herbicide to prevent, destroy, repel or mitigate any weed. Other ingredients of the herbicide that are not herbicidally active ingredients are excipients that aid in forming, storing, or delivering herbicidally active ingredient to the target. Examples of excipients in the present embodiment include, without limitation, an organic liquid in which herbicidally active ingredient is dissolved, a polyurea shell, a water-soluble polymer, and one or more salts.

The term "2,4 DC" refers to 2-(2,4-dichlorophenyl)methyl-4,4-dimethyl-3-isoxazolidinone.

The compositions of the present disclosure can be in any conventional agriculturally useful form, for example, in the form of a twin pack, or in a ready-to-use formulation, or in the form of a tank mix. Additionally, the active compounds can be supplied (either separately or pre-mixed) in any appropriate formulation type, for example an emulsifiable concentrate (EC), a suspension concentrate (SC), a suspo-emulsion (SE), a capsule suspension (CS), a water dispersible granule (WG), an emulsifiable granule (EG), a water in oil emulsion (EO), an oil in water emulsion (EW), a micro-emulsion (ME), an oil dispersion (OD), an oil miscible flowable (OF), an oil miscible liquid (OL), a soluble concentrate (SL), an ultra-low volume suspension (SU), an ultra-low volume liquid (UL), a dispersible concentrate (DC), a wettable powder (WP) or any other technically feasible formulation in combination with agriculturally acceptable adjuvants. In one preferred embodiment, the compositions of the present disclosure are supplied as an emulsifiable concentrate, a suspension concentrate or a capsule suspension.

As such the composition of the present invention can be in any one of SC, SE, CS, WG, EC, EG, EO, EW, ME, OD, OF, OL, SL, SU, UL, DC, or WP formulation in combination with agriculturally acceptable adjuvants.

In one preferred embodiment, the second herbicide is selected from the group consisting ofaclonifen, atrazine, bromoxynil, clomazone, diflufenican, dimethachlor, dimethenamid-P, isoxaflutole, S-metolachlor, metsufluron-methyl, napropamide, and pyroxasulfone.

In a more preferred embodiment, the second herbicide is selected from the group that includes dimethenamid-P, napropamide, dimethachlor, S-metolachlor, aclonifen, pyroxasulfone, and diflufenican. In another embodiment, the second herbicide is napropamide.

In yet another embodiment, the first herbicide is 2,4 DC and the second herbicide is selected from the group consisting of dimethenamid-P, dimethachlorbromoxynil, atrazine, aclonifen, napropamide, pyroxasulfone and diflufenican.

In another embodiment, the second herbicide are any one of dimethenamid-P, napropamide, dimethachlor, S-metolachlor, aclonifen, pyroxasulfone, diflufenican, and agriculturally acceptable salts and esters thereof having particle sizes of less than 250, 100 or preferably 50 microns. In yet another embodiment, the second herbicide can be anyone of napropamide, aclonifen, pyroxasulfone, diflufenican, and agriculturally acceptable salts and esters thereof having particle sizes of less than 250, 100 or preferably 50 microns.

Compositions described herein may selectively protect crops that are a member of the any of the following crop groups including, bananas, beans, beets, cassava, cereals, citrus, cocoas, coconuts, coffee, corn, cotton, fiber crops, flowers, forge corps, forestry, groundnuts, peanuts, hops, horticultures, non-land crops, oil palm, oilseed rape, peas, pomes, potato, rice, stonefruit, spices, sugar cane, Sunflower, tea, tobacco, tomatoes, tree nuts, turf, vegetable crops, vines, grapes, for example potato, soybean, corn, rice, sorghum, oil seed rape, barley, rye, cowpea or canola.

More specifically, such crops include bananas, plantains, beet: fodder, beets, sugar beets, cassava, barley, barley-spring, barley-winter, oats, oats+triticale-winter, oats-spring, oats-winter, rye, rye-winter, stubble, triticale, triticale+rye, wheat, wheat/barley, wheat-durum, wheat-spring, wheat-winter, citrus, grapefruit, lemons/limes, oranges, cocoa, coconuts, coffee, corn, corn: fodder, corn: grain, corn: sweet, corn+sorghum-spring, cotton, flax, carnation, chrysanthemum, flowers, gladioli, ornamentals: nursery, roses, alfalfa, brassicas: fodder, clover: seed, forage crops, grass-seed, pasture, rangeland, rye: seed, forestry, groundnuts, peanuts, hops, horticulture, industrial markets, aquatic weed, fallow land, idle crop land, land reclamation, summer fallow, oil palm, canola, rapeseed, rapeseed-spring, rapeseed-winter, linseed, lupin, mustard, oil seeds, safflower seed, sesame seed, olives, berries, blackberries, cranberries, currants, durians, guavas, kiwifruit, lychees, mangoes, papayas, persimmon, pineapple, rambutans, strawberries, tropical fruits, beans, chick-peas, lentils, mung beans, peas, pulses/gram, apples, apricots, avocados, cherries, fruit, peaches, nectarines, pears, plums, pome fruit, pome/stone fruit, tree crops: waxapples, potatoes, potatoes: seed, potatoes: sweet, rice, rice: paddy, rice: upland, rubber, millet, sm.grain: other, sorghum, soybeans, cardamom, cloves, ginsing, pepper: black, spices, sugar cane, sunflower, tea, tobacco, tomatoes, field tomatoes, green tomatoes, red tomatoes, almonds, betel nuts, cashews, hazelnuts, macadamia nuts, pecans, pistachios, walnuts, turf/lawns, agave, asparagus, brassicas: vegetable, broccoli, cabbage, Chinese cabbage, carrots, chicory, cruciferae, cucumbers, cucurbits, eggplant, garlic, herbs, lettuce, melons, onions, onions/garlic, peppers/chillies, field peppers, Japanese radish, squash, vegetable crops, field vegetables, other vegetables, watermelons, and grapes. Cucurbits include such crops as Melons: *Benincasa* spp., *Citrullus* spp., *Cucumis* spp., *Momordica* spp.; Watermelon: *Citrullus lanatus*; Pumpkin: *Cucurbita pepo;* Squash: *Cucurbita argyrosperma, C. ficifolia, C. maxima, C. moschata*; and Cucumber: *Cucumis sativus.* The crop may include wheat varieties such as Bloc, Kord, Wyalkatchem and Mace.

In an aspect of the present invention, the presently claimed composition may be selective against weeds including jimsonweed (*Datura stramonium*)*,* velvetleaf (*Abutilon theophrasti*), Italian ryegrass (*Lolium perenne. multiflorum*), annual bluegrass (*Poa annua*), common lambsquarters (*Chenopodium album*), common chickweed (*Stellaria media*), yellow nutsedge (*Cyperus esculentus*), and benghal dayflower (*Commelina benghalensis*), *Capsella bursa-pastoris, solanum nigrum, Stellaria media.*

When the observed activity of a herbicide combination is the same as expected, the activity of the combination is additive. In an embodiment, the combination of first and second herbicides provides an activity that is greater than the expected additive, and thus the combination provides synergistic properties. In contrast, when the combined activity is less than expected, the activity is deemed antagonistic. According to at least one aspect of the present invention, combinations of the first and second herbicides provide synergistic effects in terms of weed control.

In at least one embodiment, synergistic effects of the presently described combinations are observed in such species including annual bluegrass, Benghal dayflower, black nightshade, blackgrass, cheat, common chickweed, common lambsquarters, common ragweed, Italian ryegrass, ivyleaf morningglory, jimsonweed, quackgrass, shepherd's purse, velvetleaf, wild oat, and yellow nutsedge.

Methods of controlling undesired vegetation in a crop are described by applying to the locus of such vegetation an herbicidally-effective amount of a composition containing a first herbicide 2,4-DC and a second herbicide as defined herein. Crops include wheat, potato, soybean, corn, rice, sorghum, oilseed rape, barley, rye, cowpea, oat, sunflower, and canola, such as wheat, sunflower and canola.

In at least one aspect of the present invention, the present compositions comprising 2,4-DC may be applied pre-emergently or post emergently. The amount constituting an effective amount is variable and generally depends on a number of factors such as the type of soil, the expected pattern of rainfall or irrigation, the plant species to be controlled and the susceptibility of the particular crop involved. However, the effective amounts are typically between about 1 and about 4000 grams of the herbicide active ingredient may need to be applied per hectare. Such compounds are generally applied at a rate between 75 to about 2000 grams a.i./hectare. In more preferred embodiments, the amounts are applied at a rate of between about 125 and 1500 grams a.i./hectare.

The compositions of the present invention can further contain one or more adjuvants or carriers. In at least one embodiment, herbicidal active ingredients are present in concentrations ranging between 0.01% to about 95%. In another embodiment, agriculturally acceptable carriers constitute about 4% to about 98.5%. Surface active or surfactant agents, viscocity enhancing agents, and solvents respectively can constitute about between 1% to 15% of the final formulation by weight. In one preferred embodiment, the compositions of the present invention are formulated as an EC an SC or a CS.

In yet another aspect of this invention, the compositions of the present invention further contain at least one inactive component selected from the group consisting of at least one an antimicrobial, at least one surfactant, at least one thickener, at least one antifoam, at least one antifreeze, at least one solvent, and at least one co-solvent.

In yet another aspect of this invention, a composition is described for example in a SC form that may contain a surfactant from a very large variety of surfactants known in the art which can also be commercially available. Surfactants may belong to different classes such as cationic surfactants, anionic surfactants, non-ionic surfactants, ionic surfactants, and amphoteric surfactants. According to the invention, the surfactant can be any surfactant or combination of two or more surfactants useful to dissolve the herbicide compound, for example, in its acid form to produce a microemulsion-forming-concentrate.

Examples of some preferred surfactants include cationic, non-ionic, and anionic surfactants. Of these, some even more specific types of preferred surfactants include non-ionic linear or branched alcohol ethoxylate surfactants, anionic phosphoric acid ester surfactants (sometimes referred to as "phosphate ester" surfactants), and cationic ethoxylated tallow amine surfactants.

Non-ionic surfactants suitable for the present invention include ethoxylated linear alcohol, ethoxylated alkyl phenol, alkyl EO/PO copolymer, polyalkylene glycol monobutyl ether ethoxylated fatty acids/oils, sorbitan laurate, polysorbate, sorbitan oleate, ethoxylated fatty acid alcohols, or alkyl phenols.

In another aspect of the present invention, the composition of the preset invention, may contain a thickener. Suitable thickeners are rice, starch, gum arabic, gum tragacanth, guar flour, British gum, starch ethers and starch esters, gum resins, galactomannans, magnesium aluminum silicate, xanthan gum, carrageenan, cellulose derivatives, methyl cellulose, alginates and combinations thereof. Other known commercial products may include Lattice NTC 50, Lattice NTC 60, methocel, clay, veegum silica.

In another embodiment, the compositions of the present invention may contain an antifreeze agent such as ethylene glycol, propylene glycol, urea, calcium chloride sodium nitrate, magensiul chloride and ammonium sulfate. Other inactive agents may include an antimicrobial such as Proxel GXL, Bronopol, BHT, BHA, Dowcided A Kathon; solvnts including Aromatic and liniear solvents. Aromatic solvents include aromatic 100, aromatic 150, aromatice 150 ND, aromatic 200 ND, isopar M, paraffinic oil, Sunspray 6 or 11 N, vegetable oil, methyl ester of fatty acid, Dimethyl caprylamide. Anti foam agents such as Xiameter AFE-100, Dow Coming AFs, Dow Corning 1520, 1530, or 1540 may also be used in the presently claimed formulations.

At least another embodiment is directed to composition containing the 2,4 DC in the amounts ranging from about 30-about 50% w/w, preferably about 35-about 45% and more preferably about 40%w/w. In another embodiment, the compositions of the present invention conatin an antifreeze agents in amounts of ranging from about 1-about 15%, preferably about 3-about 8% and more preferably about 5-about 7% w/w. In another embodiment, the amounts of the surfactant within the compositions of the present invention ranging from about 1-about 10%, preferably about 3-about 8%, and more preferably about 5-about7% w/w. In one embodiment, the antifreeze agent is propylene glycol in amount ranging from about 3-about 8 % w/w, and the surfactant is Tergiot in amount ranging from about 6% w/w.

In a more preferred embodiment, the composition is in the form of an SC comprising at least one a surfactant, a thicker and a solvent and optionally an antifoam agent. In yet another embodiment, the formulation is a CS formulation comprising a thickener, Reax or lignin derivatives, and a solvent. In yet another embodiment, the formulation is an EC formulation comprising a solvent, a surfactant, castor oil ethoxylated or nonyl phenol and DDBS or equivalents thereof. In another aspect of the present invention, the compositions of the present invention are prepared by a process following the steps of combining the herbicidal active ingredient in effective amounts with suitable surface active agent, emulsifier desired amounts, viscosity enhancing agents, and suitable solvent.

In another embodiment, the mixture is further undergoing a milling process until suitable particle size ranging from about 1 to about 250 microns are obtained. In a preferred embodiment, the mixture is milled until 90% of the particle size (D90) is less than about 50 microns.

One aspect of the invention is directed to a composition further comprising:at least one formulation component selected from the group consisting of adjuvants for an EC formulation; adjuvants for an SC formulation; and adjuvants for a CS formulation.

The adjuvants for an EC formulation may be selected from the group consisting of pluronic or Tergitol, caster oil ethoxylated or nonyl phenol, DDBS or equivelant, and a solvent. The adjuvants for an SC formulation may be selected from the group consisting of Tergitols, Pluronics, Dextrol, Soprophor FLK, Glycol, Glycerine, Water, antifoam, clay and a thickener. The adjuvants for a CS formulation are selected from the group consisting of solvent, polymeric material, Reax or lignin derivatives, salts and thickeners such as xanthan. Generally, glycols may also be used in CS, EW, SE or SS type formulations as an antifreeze agent.

In one embodiment, the additional active ingredient is clomozone. One embodiment of the composition comprises 2,4-DC, propylene glycol and surfactants. In a preferred embodiment the composition comprises about 36% by weight of 2,4-DC, the propylene glycol comprises about 6% by weight, and the surfactant blend comprises about 3% by weight of the composition. Another embodiment of the composition comprises 2,4-DC, calcium chloride and sodium nitrate. In a preferred embodiment the composition comprises about 36% by weight of 2,4-DC, the calcium chloride comprises about 6.156% by weight, and the sodium nitrate comprises about 6.156% by weight of the composition.

In yet another embodiment, the present disclosure describes an agricultural formulation containing about 36% of 2,4-dichlorophenyl-4,4-dimethyl-3-isoxazolidinone (410 g/L), about 6% of propylene glycol, about 3% of a surfactant blend, and about 55% of other ingredients, which may include agriculturally acceptable formulation ingredients known to one of skill in the art. In one embodiment, this agricultural formulation is a suspension concentrate (SC).

In another embodiment, the formulation contains about 36% of 2,4-dichlorophenyl-4,4-dimethyl-3-isoxazolidinone (430 g/L), about 6.156% of Calcium Chloride Hexahydrate (CAS No. 7774-34-7), about 6.156% of Sodium Nitrate (CAS No. 7631-99-4), and about 51.69% other ingredients, which may include agriculturally acceptable formulation ingredients known to one of skill in the art. In one embodiment, this agricultural formulation is a capsule suspension (CS).

In a preferred embodiment the second herbicide is selected from the group consisting of napropamide, aclonifen, pyroxasulfone, and diflufenican.In one embodiment the second herbicide is selected from the group consisting of acetochlor, aclonifen, atrazine, bromoxynil, clomazone, diflufenican, dimethachlor, dimethenamid-P, isoxaflutole, S-metolachlor, metsufluron-methyl and napropamide. In a preferred embodiment the second herbicide is selected from the group consisting of dimethenamid-P, napropamide, dimethachlor, S-metolachlor, aclonifen, pyroxasulfone, diflufenican. Another aspect of the invention is directed to a method of controlling undesired vegetation in a crop as defined in claim 4 comprising applying to the locus of such vegetation a herbicidally-effective amount of a composition of the invention, wherein the crop may be selected from the group consisting of broadleaf crops and grass crops. The crop may be selected from the group consisting of wheat, potato, soybean, corn, rice, sorghum, oil seed rape, barley, rye, cow pea, oat and canola, such as wheat.

In one embodiment of the method, the second herbicide is selected from the group consisting of aclonifen, atrazine, bromoxynil, clomazone, diflufenican, dimethachlor, dimethenamid-P, isoxaflutole, S-metolachlor, metsufluron-methyl, napropamide, and pyroxasulfone. In one embodiment the second herbicide may be selected from the group consisting of dimethenamid-P, napropamide, dimethachlor, S-metolachlor, aclonifen, pyroxasulfone, and diflufenican.

Yet another aspect of the invention is directed to a method as defined in claim 4 of controlling undesired vegetation in a crop comprising applying to the locus of such vegetation a herbicidally-effective amount of a composition of the invention. Crops may be selected from the group consisting of bananas, beans, beets, cassava, cereals, citrus, cocoas, coconuts, coffee, corn, fiber crops, flowers, forestry, forage crops, grapes, groundnuts, hops, horticultures, non-land crops, oil palm, oilseed rape, peas, peanuts, pomes, potato, rice, spices, stonefruit, sugarcane, sunflower, tea, tobacco, tree nuts, turf, vegetable crops, vines, and wheat. The undesired vegetation may be selected from the group consisting of annual bluegrass, Benghal dayflower, blackgrass, black nightshade, cheat, common ragweed, Italian ryegrass, jimsonweed, quackgrass, shepherd's-purse, wild oat (*Avena fatua*), and yellow nutsedge (*Cyperus esculentus*). Crops may be is selected from the group consisting of beets, cereals, corn, groundnuts, peanuts, oil palm, oilseed rape, peas, potato, rice, sugarcane, sunflower, tobacco, vegetable crops, and wheat, for example wherein the crop is wheat.

### EXAMPLES

### Example 1: Suspension Concentrate (SC) Formulations of 2-(2,4-dichlorophenyl)methyl-4,4-dimethyl-3-isoxazolidinone (2,4-DC)

Formulation 1A (Reference): An SC formulation of 2,4-DC was prepared by combining 37.89% 2,4-DC, 1.50% TERGITOL^{™} XD (Dow Chemical Company), 1.50% DEXTROL^{™} OC-180 (Ashland Specialty Company), 1.00% of INDULIN^{®} C, 0.10% of XIAMETER^{®} AFE 100, 6.0% of propyleneglycol, 0.15 % of KELZAN^{®} M xanthan gum (CPKelco A Huber Company), 0.15% of PROXEL^{®} GXL, and 42.00 % water (% by weight).

The present formulations may be prepared using the following microencapsulation procedures as follows: employing the slurry and letdown vessels, attritor, melt TERGITOL^{®} XD in a 55°C oven prior to use.

### Preparing KELZAN/Glycol Slurry:

To a separate vessel weigh the propylene glycol. While mixing vigorously, slowly add the KELZAN M. Mix until uniform.

### Preparing pre-mill Slurry:

Charge the water to the mixing vessel and Add the XIAMETER^{®} AFE-100, TERGITOL^{®} XD, DEXTROL^{®} OC-180, and PROXEL^{®} GXL to the tank and mix until uniform. Then add the 2,4-DC technical in portions, allowing each portion to mix in prior to adding more. Measure the starting viscosity.

### Milling steps:

Charge a portion of the slurry to the attritor and mill. Measure the particle size every 20 minutes and continue milling until the D90 is < 10 microns. Discharge the milled portion into a tared letdown tank and charge remaining portions of pre-mill slurry. Mill remaining portions as before and collect. Once the milling is complete, charge 500 grams of the holdback water to the attritor, rinse, and combine with mill base. Record weight and viscosity of mill base. Based on the weight recovered, determine the amount of INDULIN^{®} C to add using the following calculation: Grams of INDULIN^{®} C to add = (weight of recovered mill base, in grams / 9149.6) x 104. Then add the INDULIN^{®} C and allow it to mix in thoroughly. Finally, add half the KELZAN^{®}/glycol slurry to the batch, mix for a minimum of 4 hours, and submit for in-process assay. Continue stirring the batch overnight. Measurements of viscosity should be done after stirring. Based on the in-process assay and viscosity, add additional KELZAN^{®}/glycol and/or water as needed and stir.

| Assay | Particle Size | | Wet Screens: | | Viscosity | Density |
|---|---|---|---|---|---|---|
| 2,4-DC | D90 | D50 | +100 mesh | +200 mesh | | |
| 36.5% | 11.52 | 5.21 | 0 | 0.0018 | 1200 | 1.1232 |

Formulation 1B (Reference): SC formulation of 2,4-DC was prepared by combining 44.1% 2,4-DC (42.0% active AI), 1.5% TERGITOL^{™} XD (Dow Chemical Company), 1.17% DEXTROL^{™} OC-180 (Ashland Specialty Company), 6.0% propyleneglycol, 0.13 % of a 2% aqueous solution of KELZAN^{®} M xanthan gum (CPKelco A Huber Company) and 46.77 % water (% by weight) and milling the mixture until a particle size of D90 is less than about 50 microns.

Formulation 1C (Reference): SC formulation of 2,4-DC was prepared by combining 44.0% 2,4-DC, 1.5% TERGITOL^{™} XD (Dow Chemical Company), ETHOX ERS 01293 (Ethox Chemicals), 6.0% propyleneglycol, 0.13 % of a 2% aqueous solution of KELZAN^{®} M xanthan gum (CPKelco A Huber Company), 0.15% DOW AF antifoam (Dow Chemical Company) and 46.7 % water (all % by weight) and milling the mixture until a particle size of D90 is less than about 50 microns.

Formulation 1D (Reference): SC formulation of 2,4-DC was prepared by combining 38% 2,4-DC (36% active AI), 1.17% TERGITOL^{™} XD (Dow Chemical Company), 1.17% DEXTROL^{™} OC-180 (Ashland Specialty Company), 0.078 XIAMETER^{®} AFE 100 AF Emulsion (Dow Chemical Company), 0.12 PROXEL^{™} GXL Antimicrobial (Arch chemicals Inc.) 4.68% propyleneglycol, 3.0% ATTAFLOW^{®} AF(BASF), 1.0% INDULIN^{®} C (MeadWestvaco) 0.12 % of a 2% aqueous solution of KELZAN^{®} M xanthan gum (CPKelco A Huber Company) and 50.662 % water (% by weight) and milling the mixture until a particle size of D90 is less than about 50 microns.

Formulation 1E (Reference): SC formulation of 2,4-DC was prepared by combining 37.5% 2,4-DC, 1.5% DEXTROL^{™}, 1.5% TERGITOL^{™} XD, 1.0% INDULIN^{®} C, 0.1% XIAMETER^{®} AFE 100, 0.15% PROXEL^{®} GXL, 0.2% KELZAN^{®} M, 6.0% of propylene glycol, and 52.05% of water.

### Formulation 1F (Reference): SC formulation of 2,4-DC:

| Raw Material | Wt% |
|---|---|
| 2,4-DC | 36.00 |
| DEXTROL^{®} OC-180 | 2.00 |
| INDULIN^{®} C | 2.00 |
| TERGITOL^{®} XD | 2.00 |
| Veegum | 0.50 |
| Propylene Glycol | 6.00 |
| KELZAN^{®} M | 0.30 |
| PROXEL^{®} GXL | 0.15 |
| Water | 51.05 |
| total | 100.00 |

### Formulation 1G (Reference): SC formulation of 2,4 DC with sulfentrazone:

| Raw Material | Wt% |
|---|---|
| 2,4-DC Tech 95% | 24.00 |
| Sulfentrazone | 12.00 |
| DEXTROL^{®} OC-180 | 2.00 |
| TERGITOL^{®} XD | 2.00 |
| Veegum | 0.50 |
| Propylene Glycol | 6.00 |
| KELZAN^{®} M | 0.30 |
| PROXEL^{®} GXL | 0.15 |
| Water | 53.05 |
| total | 100.00 |

### Formulation 1H: SC formulation of 2,4 DC with diflufenican:

| Raw Material | Wt% |
|---|---|
| 2,4-DC | 20.00 |
| Diflufenican tech | 16.00 |
| DEXTROL^{®} OC-180 | 2.00 |
| TERGITOL^{®} XH | 1.40 |
| TERGITOL^{®} XD | 2.00 |
| Veegum | 0.50 |
| Propylene Glycol | 6.00 |
| KELZAN^{®} M | 0.30 |
| PROXEL^{®} GXL | 0.15 |
| Water | 51.65 |
| total | 100.00 |

### Formulation 1I (Reference): SC formulation of 2,4 DC with metolachlor:

| Raw Material | Wt% |
|---|---|
| 2,4-DC | 10.00 |
| metolachlor | 42.00 |
| AGNIQUE^{®} CSO-40 | 5.00 |
| CaDDBS | 5.00 |
| TERGITOL^{®} XD | 2.00 |
| Aromatic 150 | 36.00 |
| total | 100.00 |

### Example 3: Pre-emergent Herbicidal Evaluation of 2-(2,4-dichlorophenyl)methyl-4,4-dimethyl-3-isoxazolidinone in Mixtures with Napropamide.

Compositions of the present disclosure were tested for herbicidal efficacy in the following manner:
Test compositions containing 2,4-DC Example 1C (reference) and napropamide (Devrinol^{®} 50-DF, 50% active ingredient, United Phosphorus Inc., reference) and mixtures of 2-(2,4-dichlorophenyl)methyl-4,4-dimethyl-3-isoxazolidinone and napropamide, were diluted with water to provide the appropriate test rate concentrations.

The test crop was canola (*Brassica napus*) and wheat, the test weeds were Italian ryegrass (IR) (*Lolium perenne. multiflorum*), annual bluegrass (AB) (*Poa annua*), blackgrass (BG) (*Alopecurus myosuroides*), wild buckwheat (WB) (*Polygonum convolvulus*)*,* common chickweed (CC) (*Stellaria media*), littleseed canarygrass (LC) (*Phalaris minor*) and wild oat (WO) (*Avena fatua*).

For pre-emergence testing, four disposable fiber flats (6" by 10" (15 cm by 25 cm)) for each rate of application of each herbicide solution were filled with top soil, to which seeds of each species were planted in furrows made by a template pressed on the top of the soil. The furrows with seeds were covered with soil and were watered well before application of the test compounds. Fiber flats designated for treatment were placed in a spray chamber having a static platform and a movable sprayer and height of the spray nozzle was 10.5 inches (27 cm) above the soil level. Once the sprayer was calibrated using water for spray volume of 30 gallons per acre, flats were sprayed with sprayer at a speed to receive a coverage equivalent of 30 gallons per acre.

The application rates are those shown in Table 2 below for the individual herbicidal solutions and the herbicide compositions of the present invention. The pre-emergence flats were immediately placed in the greenhouse and watered lightly after treatment. Thereafter they were watered and fertilized regularly for the duration of the test. The control of weeds was evaluated in each experimental test at 27 days after treatment (DAT) for all species. The results, shown as an average of the replications, were compared with results observed in non-treated control flats in the same tests.

The results are in Table 2 below. Accordingly, the compositions of the present invention provide far superior results as compared to the individual agents respectively. Percent control was determined by a method similar to the 0 to 100 rating system disclosed in "Research Methods in Weed Science," 2nd ed., B. Truelove, Ed.; Southern Weed Science Society; Auburn University, Auburn, Ala., 1977. The rating system is as follows:

| Weed Control Rating System | | |
|---|---|---|
| Rating Percent Control | Description of Main Categories | Weed Description |
| 0 | No Effect | No weed control |
| 10 | | Very poor weed control |
| 20 | Slight Effect | Poor weed control |
| 30 | | Poor to deficient weed control |
| 40 | | Deficient weed control |
| 50 | Moderate Effect | Deficient to moderate weed control |
| 60 | | Moderate weed control |
| 70 | | Control somewhat less than satisfactory |
| 80 | Severe | Satisfactory to good weed control |
| 90 | | Very good to excellent weed control |
| 100 | Complete Effect | Complete weed destruction |

**Table 2: Percent Crop Injury and Control of Weeds Using Mixtures of 2,4-DC and Napropamide 27 Days After Treatment (DAT) Four replications)**

| Treatment | Rate (gram ai/ha) | % inury Control | | | | | | | |
|---|---|---|---|---|---|---|---|---|---|
| | | Canola | LC | BG | WB | WO | AB | CC | IR |
| 2,4-DC + napropamide | 31.2 + 315 | 12 | 84 | 18 | 22 | 10 | 0 | 93 | 23 |
| 2,4-DC + napropamide | 31.2 + 630 | 10 | 93 | 62 | 30 | 18 | 85 | 95 | 57 |
| 2,4-DC + napropamide | 31.2 + 1260 | 10 | 96 | 67 | 27 | 37 | 94 | 95 | 53 |
| 2,4-DC + napropamide | 62.5 + 315 | 13 | 78 | 70 | 37 | 33 | 82 | 97 | 60 |
| 2,4-DC + napropamide | 62.5 + 630 | 12 | 96 | 72 | 42 | 37 | 82 | 99 | 79 |
| 2,4-DC + napropamide | 62.5 + 1260 | 10 | 100 | 83 | 43 | 65 | 83 | 98 | 86 |
| 2,4-DC + napropamide | 125 + 315 | 18 | 77 | 89 | 73 | 33 | 83 | 99 | 89 |
| 2,4-DC + napropamide | 125 + 630 | 25 | 98 | 91 | 80 | 83 | 89 | 99 | 88 |
| 2,4-DC + napropamide | 125 + 1260 | 23 | 98 | 85 | 73 | 76 | 100 | 99 | 93 |
| 2,4-DC + napropamide | 250 + 315 | 33 | 88 | 93 | 75 | 57 | 87 | 99 | 97 |
| 2,4-DC + napropamide | 250 + 630 | 37 | 95 | 96 | 86 | 73 | 90 | 99 | 99 |
| 2,4-DC + napropamide | 250 + 1260 | 37 | 100 | 95 | 80 | 84 | 100 | 100 | 98 |
| 2,4-DC + napropamide | 375 + 315 | 43 | 87 | 97 | 57 | 70 | 86 | 100 | 99 |
| 2,4-DC + napropamide | 375 + 630 | 50 | 90 | 97 | 82 | 82 | 95 | 100 | 100 |
| 2,4-DC + napropamide | 375 + 1260 | 53 | 99 | 97 | 78 | 85 | 99 | 99 | 100 |
| 2,4-DC (comparative) | 31.2 | 7 | 8 | 10 | 10 | 7 | 0 | 94 | 23 |
| 2,4-DC (comparative) | 62.5 | 10 | 12 | 18 | 8 | 13 | 2 | 99 | 60 |
| 2,4-DC (comparative) | 125 | 27 | 18 | 84 | 8 | 53 | 12 | 100 | 83 |
| 2,4-DC (comparative) | 250 | 32 | 27 | 93 | 23 | 65 | 40 | 100 | 97 |
| 2,4-DC (comparative) | 375 | 50 | 53 | 97 | 37 | 78 | 63 | 100 | 98 |
| Napropamide (comparative) | 315 | 7 | 50 | 5 | 23 | 7 | 1 | 80 | 15 |
| Napropamide (comparative) | 630 | 10 | 87 | 7 | 23 | 8 | 77 | 81 | 20 |
| Napropamide (comparative) | 1260 | 8 | 100 | 15 | 38 | 81 | 92 | 83 | 90 |

### Example 6 (Reference): Emulsifiable Concentrate (EC) Formulation of 2-(2,5-dichlorophenyl)methyl-4,4-dimethyl-3-isoxazolidinone (2,5-DC)

An EC formulation of 2,5-DC was prepared by combining 46.5 % 2,5-DC, 0.71% of a blend of 80% calcium dodecyl benzene sulfonate and 20% 6 mole ethylene oxide adduct of nonyl phenol, 5.47% of a blend of 60% calcium dodecyl benzene sulfonate and 40% of the 30 mole ethylene oxide adduct of nonyl phenol, 1.56 TERGITOL^{™} XD (Dow Chemical Company), and 45.689 % Aormatic 100 fluid (ExxonMobile Chemical). The mixture was subjected to shear blending for about 1 minute then stirred until a homogenous mixture was obtained.

### Example 8 (Reference): Emulsifiable Concentrate (EC) Formulation of 2-(2,4-dichlorophenyl)methyl-4,4-dimethyl-3-isoxazolidinone (2,4-DC)

Two different EC formulations were prepared for 2,4-DC using the procedure of Example 6, with the components and proportions found in the following Table 6 (with and without alkylphenol ethoxylate (APE)).

**Table 6:**

| Component | 8A: APE*-free Formula, wt% | 8B: APE*-containing Formula, wt% |
|---|---|---|
| 2,4-DC technical | 20.74 | 20.74 |
| Aromatic 100 | 64.6 | 67.71 |
| RHODACAL^{®} 70/B | 6.69 | |
| ANTAROX^{®} B848 | 3.34 | |
| RHODASURF^{®} BC 840 | 4.63 | |
| NIAGARA^{®} 1 | | 1.15 |
| NIAGARA^{®} 2 | | 8.1 |
| TERGITOL^{®} XD | | 2.3 |

| | | |
|---|---|---|
| *APE = alkylphenol ethoxylate | | |

Example 9A (Reference): A Capsule Suspension (CS) Formulation of 2,4-DC was prepared using the following microencapsulation procedures as follows:
Organic phase: 36.29% of 2,4-DC and 6.48% of Aromatic 200ND.
Aqueous phase: 1.15% of REAX^{®} 88B, 5.33% of sodium nitrate, 5.33% of anhydrous calcium chloride, 3.68% of 2% KELZAN^{®}/2% PROXEL^{®} mixture, 0.03% glacial acetic acid, 2.16% of hexamethylenediamine (HMDA), 2.16% of polymethylene polyphenylisocyanate (polymeric MDI; PAPI^{®} 27) and 37.39% of water.
Feed rate: 420 grams/minute
Run time: 44.02 minutes
Organic feed rate 209.78 grams/minute
Aqueous feed rate: 189.03 grams/minute
PAPI^{®} 27 feed rate: 10.59 grams/minute
HMDA feed rate: 10.59 grams/minute

### Procedure:

First, heat the aqueous and organic feed vessels. Then heat organic flush unit to 80°C for circulated heating of static mixer, and flush solvent to 80°C. Initiate heating of microcap unit to a target temp of 85°C. Set cure reactor temperature to 55°C and prepare data logging.

### Feed Solutions:

Add the organic solvent to the organic reactor preheated to 80 - 85°C. Charge the 2,4-DC technical and warm to 80-85°C. Hold at temp with stirring until the solution is clear and uniform. Complete preparation of the aqueous phase. Prepare feeds of 43% HMDA, PAPI, and 2% kelzan/2% Proxel solution.

### Unit Setup and Running:

Next, circulate organic flush stream to heat static mixer and prep it. Setup PAPI and amine feed systems and start recirculation of both lines close to set rates. Once feed solutions and vessels are at set temp, first add the aqueous feed system to the reactor tank. Hold system until set temperature is reached. Monitor system and data log for fluctuations feed rates and wait till system is stable. Once stable, transfer the organic phase to the organic feed tank. Hold before feeding forward. Keep the organic flush solvent circulating. Set up a separate waste container to collect 2,4-DC waste. Once ready, feed aqueous forward to the waste container. Slowly increasing the homogenizer speed to around 3000rpm, feed the solvent flush forward within 30 seconds, and then switch to the actual organic feed right away (this keeps the organic return line primed with solvent). Immediately increase the homogenizer RPM to the set level. Feed both the amine and PAPI streams forward within 30 seconds. Manually control the feed rates to being them close to the target levels. Once close, set the feed rates to automatic and set the target feed rates. Confirm system is running at set feed rates. Once stable, feed forward into cure reactor.

### Cure Reaction and Workup:

Hold reactor at 55°C for 4 hours. Cool to room temperature. Add the calcium chloride and sodium nitrate salts. Allow each to dissolve before adding more. As necessary, adjust the as is pH using acetic acid to between 6.0 and 7.5. Add the required amount of 2% Kelzan/2% Proxel based on recovery and mix. Sample for assay and continue stirring to hydrate Kelzan Screen through 200 mesh (0.074 mm) sieve, pack out, and complete physicals.

| Wt% of 2,4-DC | Particle Size | | Wet screens | | Density (g/ml) | | |
|---|---|---|---|---|---|---|---|
| | D90 | D50 | +100 | +200 | | Viscosity | pH |
| 36.3% | 13.50 | 7.264 | 0.19% | 0.80% | 1.1665 | 1560 | 7.34 |

### Example 9B (Reference): CS formulation of 2,4-DC:

| Raw Material | Wt% |
|---|---|
| 2,4-DC | 36.00 |
| Aromatic 200ND | 6.00 |
| REAX^{®} 88B | 1.00 |
| Calcium Chloride | 5.00 |
| Sodium Nitrate | 5.00 |
| Acetic acid RUBINATE^{®} M | 0.08 |
| (polymeric MDI) | 1.97 |
| KELZAN^{®} S | 0.10 |
| hexamethylene diamine | 1.28 |
| PROXEL^{®} GXL | 0.15 |
| Water | 43.42 |
| total | 100.00 |

### Examples 9C to 9E (Reference): CS formulations of 2,4-DC:

| Example | **9C** | **9D** | **9E** |
|---|---|---|---|
| 2,4-DC | 25.5% | 25.5% | 25.5% |
| Aromatic 200ND | 17.7 | 17.7 | 17.7 |
| PAPI^{®} 2027 | 2.13 | 1.14 | 1.42 |
| HMDA 43% | 2.13 | 1.14 | 1.14 |
| Water | 42.01 | 43.00 | 43.43 |
| REAX^{®} 88B | 1.14 | 1.14 | 1.14 |
| MgCl₂ | 9.23 | 9.23 | 9.23 |
| KELZAN^{®} 2% | 0.06 | 0.06 | 0.06 |
| Acetic acid | 0.03 | 0.03 | 0.03 |

### Examples 9F and 9G (Reference): CS formulations of 2,4-DC:

Both Examples 9F and 9G were prepared, in separate batches, from 255 gm of 2,4-DC, 45 gm of Aromatic 200ND, 31 gm of PAPI 27, 288 gm of water, 8 gm of REAX 88B, 31 gm of 43% HMDA and 37 gm of sodium nitrate.

### Biological Testings

Consideration of "Weed Control" - For the purposes of the present invention, weed control at 85% or higher is acceptable and more importantly desireable. When weeds have 85% or higher injury, they cannot compete with crops for water, nutrients, and physical space, and probability of significant reduction in crop yield is reduced to a minimum. Generally weed control is assessed at 28 DAT. In view of these considerations, synergy was evaluated at 28 DAT while crop safety was assessed at 7 or 14 DAT. Synergy was calculated using the method of Colby. As used herein, the terms "synergy" and "synergistic", or the phrase "in a synergistic manner", refer to the *in vivo* interaction of two or more biologically active compounds, in the present case the 2,4-DC, with a secondary active compound, so that their combined effect when administered together is greater than the sum of the effects observed when each is administered individually. That is, the herbicidal effect of administering the combination of 2,4-DC and the second agent as disclosed above and exemplified below. In this way the applied rate of the herbicidal combination can be lower than the registered use rates, thereby reducing the total chemical burden on the field to which such a combination is applied.

The method of Colby is for synergism is described in Colby, S.R., "Calculating Synergistic and Antagonistic Responses of Herbicide Combinations", Weeds 1967, 15, pg 20-22. According to this methodology, the presence of a synergistic effect between the two active ingredients is established with the aid of the Colby equation: E=X+Y-(XY/100). Using the method of Colby, the presence of a synergistic interaction between two active ingredients is established by first calculating the expected activity, 'E', of the mixture based on activities of the two components applied alone. In the equation above, 'X' is the herbicidal activity in percentage control of the disclosed 3-isoxazolidinone applied as a mixture at rate 'x'. The 'Y' term is the herbicidal activity of the second active applied as a mixture at rate 'y'. The equation calculates 'E', the herbicidal activity of the mixture of 'X' at rate 'x' with 'Y' at rate 'y'. If 'E' is lower than the observed activity, synergy is present. If the herbicidal effect is strictly additive and no interaction has occurred, 'E' will be equal to or higher than the observed activity. The following Tables in examples below summarize the % control of tested weed and the expected value verses observed % control of mixtures of 3-isoxazolidinone compound tested and the other actives in all greenhouse trials. As intended herein, control of the the weed species at 85% or higher, by the exemplified 3-isoxazolidinoine compoundsin combination with a second active ingredient would show synergy according to Colby.

In at least one observation, those of ordinary skill in the art can appreciate that the inventive combinations described herein provide synergistic weed control_(with the 85% cutoff) in at least 26 weed species. These species include annual bluegrass, Benghal dayflower, black nightshade, blackgrass, cheat, common chickweed, common cocklebur, common lambsquarters, common ragweed, hairy beggarticks, Italian ryegrass, ivyleaf morningglory, jimsonweed, johnsongrass, littleseed canarygrass, Pennsylvania smartweed, pitted morningglory, purple nutsedge, quackgrass, shepherd's purse, velvetleaf, wild buckwheat, wild mustard, wild oat, wild poinsettia, yellow nutsedge. While synergistic efficacy is at least one unexpected observation, those of ordinary skill in the art can appreciate the improved safety profile of the same lending the instantly disclosed combination highly desirable in various stages of crop development.

Consideration of "Crop Injury" - For the purposes of the present invention, the upper limit of acceptable crop injury (phytotoxicity) is 10% for most crops because injury higher than 10% may result in significant reduction in crop yield. Early crop safety is desirable (within 7 to 14 DAT) in order for the crop to be able to outcompete weeds for water, nutrients, and physical space. The following examples are submitted to further provide and highlight the findings of the biological tests in accordance to the present invention.

### Example 10: Weed Control with 2,4-DC and Aclonifen Tank-mix Combinations.

In this example a greenhouse study was conducted to determine the weed efficacy of 2,4-DC, when 2,4-DC alone (reference) or in combination with aclonifen as preemergence (PRE) treatment against the following weeds: Blackgrass (*Alopecurus myosuroides, ALMOY*), *redroot pigweed* (*Amaranthus retroflexus, AMARE*), littleseed canarygrass (*Phalaris minor,* PHAMI), *common lambsquarters (Chenopodium album, CHEAL), ivyleaf morningglory (Ipomoea hederacea, IPOHE), shepherd's-purse (Capsella bursa-pastoris, CAPBP), wild oat (Avena fatua, AVEFA), quackgrass (Elymus repens, AGRRE), annual bluegrass (Poa annua, POAAN), black nightshade (Solanum nigrum, SOLNI).*

### Methods:

2,4-DC (CS 36.7%) was applied at 0, 125, 170, 210, or 250 g ai/ha alone or as tank-mix with aclonifen (53% WP) and Aclonifen rates for alone or tank-mix application were 1500, 1800, or 2100 g ai/ha. Treatments 1-12 of 2,4-DC and aclonifen tank-mix combinations follow same rates listed above. A non-treated check was included as reference standard. All plant species were direct seeded into 6 x 10" (15 x 25 cm) fiber flats utilizing Pennington soil. Sulfentrazone (Spartan 4F^{®} 39.6%) at 280 g ai/ha, pendimethalin (Prowl 3.3^{®}EC, 37.4%) at 784 g ai/ha, or *S-*metolachlor (Dual II Magnum^{®} 82.4%) at 1084 g ai/ha were applied as commercial standards. Treatments were replicated 3 times and flats were watered after planting but before the treatment and lightly watered after treatment application. Thereafter flats were watered and fertilized routinely. Treatments were applied with compressed air in a track spray chamber at 30 GPA using a TeeJet 8001E nozzle at 40 PSI (280 kPa). Visual percent weed control was recorded at 14, 21, and 28 days after treatment (DAT), using a scale of 0 (no control) to 100 (complete plant death). Shepherd's-purse was rated at 21 and 28 DAT only, due to delayed emergence. Data (not included) were analyzed using Minitab statistical software at 95% confidence interval.

### Results at 28 DAT:

All twelve 2,4-DC and aclonifen tank-mix combinations gave ≥85% control of wild oat, common lambsquarters, quackgrass, black nightshade, redroot pigweed, littleseed canarygrass, annual bluegrass, blackgrass, and shepherd's-purse. No combination controlled ivyleaf morningglory. 2,4-DC alone at 250 g ai/ha controlled common lambsquarters and control of shepherd's-purse was seen at all rates except at 170 g. Aclonifen alone at all three rates controlled common lambsquarters, quackgrass, redroot pigweed, littleseed canarygrass, annual bluegrass, blackgrass, and shepherd's purse. Sulfentrazone at 280 g provided control of all weeds except quackgrass, annual bluegrass, and blackgrass. Pendimethalin at 784 g gave control of 5 out of 10 weeds. S-metolachlor at 1064 g controlled only two weeds. The tables below highlight analysis of data representing unexpected synergistic effects of the tested combinations.

### 2,4-DC + Aclonifen- (28 DAT)-PRE emergence against Wild oat-28 DAT

| Tmt | X | Y | Expected | observed | synergy^{α} | 2,4-DC ^{β} | Aclonifen^{ρ} |
|---|---|---|---|---|---|---|---|
| 1 | 34 | 80 | 86.8 | 100 | Y | 125 | 1500 |
| 2 | 34 | 88 | 92.08 | 100 | Y | 125 | 1800 |
| 3 | 34 | 65 | 76.9 | 97 | Y | 125 | 2100 |
| 4 | 37 | 80 | 87.4 | 93 | Y | 170 | 1500 |
| 5 | 37 | 88 | 92.44 | 100 | Y | 170 | 1800 |
| 6 | 37 | 65 | 77.95 | 97 | Y | 170 | 2100 |
| 7 | 48 | 80 | 89.6 | 97 | Y | 210 | 1500 |
| 8 | 48 | 88 | 93.76 | 100 | Y | 210 | 1800 |
| 9 | 48 | 65 | 81.8 | 97 | Y | 210 | 2100 |
| 10 | 73 | 80 | 94.6 | 93 | N | 250 | 1500 |
| 11 | 73 | 88 | 96.76 | 100 | Y | 250 | 1800 |
| 12 | 73 | 65 | 90.55 | 100 | Y | 250 | 2100 |

α - measurement of synergistic behavior as Y = YES; N = NO
β and ρ- Rate - g ai/ha

### 2,4-DC + Aclonifen- (28 DAT)-Black nightshade-28 DAT

| Tmt | X | Y | Expected | observed | synergy^{α} | 2,4-DC ^{β} | Aclonifen^{ρ} |
|---|---|---|---|---|---|---|---|
| 1 | 33 | 80 | 86.6 | 100 | Y | 125 | 1500 |
| 2 | 33 | 83 | 88.61 | 88 | N | 125 | 1800 |
| 3 | 33 | 77 | 84.59 | 100 | Y | 125 | 2100 |
| 4 | 47 | 80 | 89.4 | 100 | Y | 170 | 1500 |
| 5 | 47 | 83 | 90.99 | 100 | Y | 170 | 1800 |
| 6 | 47 | 77 | 87.81 | 100 | Y | 170 | 2100 |
| 7 | 67 | 80 | 93.4 | 100 | Y | 210 | 1500 |
| 8 | 67 | 83 | 94.39 | 100 | Y | 210 | 1800 |
| 9 | 67 | 77 | 92.41 | 100 | Y | 210 | 2100 |
| 10 | 83 | 80 | 96.6 | 100 | Y | 250 | 1500 |
| 11 | 83 | 83 | 97.11 | 100 | Y | 250 | 1800 |
| 12 | 83 | 77 | 96.09 | 87 | N | 250 | 2100 |

| | | | | | | | |
|---|---|---|---|---|---|---|---|
| α - measurement of synergistic behavior as Y = YES; N = NO β and ρ- Rate - g ai/ha | | | | | | | |

### Example 11-: Preemergence (PRE) efficacy and oilseed rape selectivity with 2,4-DC and clomazone tank-mix combinations.

In this example a greenhouse study was conducted to determine the efficacy and oilseed rape injury when 2,4-DC and clomazone tank-mix combinations are applied at different rate as preemergence treatment against the following weeds: *redroot pigweed (Amaranthus retroflexus, AMARE), tall morningglory (Ipomoea purpurea, PHBPU), wild mustard (Sinapis arvensis, SINAR), common lambsquarters (Chenopodium album, CHEAL), Italian ryegrass (Lolium multiflorum, LOLMU), common chickweed (Stellaria media, STEME), corn poppy (Papaver rhoeas, PAPRH), and wild buckwheat (Polygonum convolvulus, POLCO).* The crop tested was Oilseed rape.

### Materials and Methods

To determine PRE efficacy and oilseed rape injury, four rates of 2,4-DC (36.7% CS) and three rates clomazone (Command 3ME^{®}, 31.4%) were applied either alone (reference) or as tank-mix. 2,4-DC was applied at 125, 170, 210, or 250 g ai/ha and clomazone was applied at 60, 90, or 120 g ai/ha in combination treatments 1-12. Additional reference treatments included applications of metazachlor (Butisan^{®}, 43.1%) at 750 g ai/ha, napropamide (Devrinol DF^{®}, 50%) at 1260 g, and dimethachlor (Teridox^{®}, 48%) at 1000 g. A non-treated check was included as reference standard. Treatments were applied just after the planting of tall morningglory, wild mustard, common lambsquarters, Italian ryegrass, wild buckwheat, redroot pigweed, common chickweed, corn poppy, and oilseed rape.

Plant species were planted in fiber flats (6" X 10" (15 cm X 25 cm)) containing Pennington soil and flats were watered well before application and watered lightly after application. Flats were watered and fertilized routinely after treatment application. Each treatment was replicated three times. Treatments were applied using compressed air track spray chamber at 30 GPA using a TeeJet 8001E nozzle at 40 PSI (280 kPa). Visual percent weed control and oilseed rape injury were recorded at 14, 21, and 28 days after treatment using a scale of 0 (no control/no injury) to 100 (complete plant death).

Oilseed rape injury was rated for bleaching and stunting. Data (not included) were analyzed using Minitab statistical software at 95% confidence interval.

### Results at 28 DAT:

Data collected at 28 DAT suggested that out of twelve 2,4-DC and clomazone combinations, no combination gave control of tall morningglory, wild mustard, redroot pigweed, and corn poppy. Eight combinations controlled common lambsquarters, seven combinations controlled wild buckwheat, and three combinations controlled Italian ryegrass. All twelve combinations controlled common chickweed. Six 2,4-DC and clomazone combinations caused greater than 10% injury (bleaching) to oilseed rape. 2,4-DC or clomazone alone at any rate did not able to control any species except common chickweed. Metazachlor controlled all weeds except tall morningglory and wild mustard. Napropamide controlled Italian ryegrass, wild buckwheat, redroot pigweed, common chickweed, and corn poppy. Dimethachlor controlled only two species, Italian ryegrass and corn poppy. All three herbicides, metazachlor, napropamide, or dimethachlor at the rates mentioned in the methodology were safe on oilseed rape.

In summary all 2,4 DC plus clomazone combinations controlled (≥85%) common chickweed while most of the combinations controlled common lambsquarters and wild buckwheat. Six combinations were safe (≤10% injury) on oilseed rape. The following tables highlight the unexpected results observed in connection to this study. The tables below highlight analysis of data representing unexpected synergistic effects of the tested combinations.

### 2,4-DC + Clomazone- (28 DAT) -PRE Common lambsquarters-28 DAT

| Tmt | X | Y | Expected | observed | synergy^{α} | 2,4-DC^{β} | Clomazone^{ρ} |
|---|---|---|---|---|---|---|---|
| 1 | 30 | 77 | 83.9 | 82 | N | 125 | 60 |
| 2 | 30 | 80 | 86 | 82 | N | 125 | 90 |
| 3 | 30 | 80 | 86 | 83 | N | 125 | 120 |
| 4 | 33 | 77 | 84.59 | 83 | N | 170 | 60 |
| 5 | 33 | 80 | 86.6 | 87 | Y | 170 | 90 |
| 6 | 33 | 80 | 86.6 | 85 | N | 170 | 120 |
| 7 | 42 | 77 | 86.66 | 85 | N | 210 | 60 |
| 8 | 42 | 80 | 88.4 | 86 | N | 210 | 90 |
| 9 | 42 | 80 | 88.4 | 85 | N | 210 | 120 |
| 10 | 51 | 77 | 88.73 | 85 | N | 250 | 60 |
| 11 | 51 | 80 | 90.2 | 85 | N | 250 | 90 |
| 12 | 51 | 80 | 90.2 | 88 | N | 250 | 120 |

| | | | | | | | |
|---|---|---|---|---|---|---|---|
| α - measurement of synergistic behavior as Y = YES; N = NO β and ρ- Rate - g ai/ha | | | | | | | |

### 2,4-DC + Clomazone- (28 DAT) -PRE Italian ryegrass-28 DAT

| Tmt | X | Y | Expected | observed | synergy^{α} | 2,4-DC^{β} | Clomazone^{ρ} |
|---|---|---|---|---|---|---|---|
| 1 | 32 | 42 | 60.56 | 58 | N | 125 | 60 |
| 2 | 32 | 58 | 71.44 | 66 | N | 125 | 90 |
| 3 | 32 | 70 | 79.6 | 73 | N | 125 | 120 |
| 4 | 38 | 42 | 64.04 | 68 | Y | 170 | 60 |
| 5 | 38 | 58 | 73.96 | 67 | N | 170 | 90 |
| 6 | 38 | 70 | 81.4 | 76 | N | 170 | 120 |
| 7 | 58 | 42 | 75.64 | 78 | Y | 210 | 60 |
| 8 | 58 | 58 | 82.36 | 88 | Y | 210 | 90 |
| 9 | 58 | 70 | 87.4 | 75 | N | 210 | 120 |
| 1 0 | 68 | 42 | 81.44 | 88 | Y | 250 | 60 |
| 11 | 68 | 58 | 86.56 | 76 | N | 250 | 90 |
| 12 | 68 | 70 | 90.4 | 93 | Y | 250 | 120 |

| | | | | | | | |
|---|---|---|---|---|---|---|---|
| α - measurement of synergistic behavior as Y = YES; N = NO β and ρ- Rate - g ai/ha | | | | | | | |

### 2,4-DC + Clomazone- (28 DAT) -Wild buckwheat-28 DAT

| Tmt | X | Y | Expected | observed | synergy^{α} | 2,4-DC^{β} | Clomazone^{ρ} |
|---|---|---|---|---|---|---|---|
| 1 | 10 | 70 | 73 | 83 | Y | 125 | 60 |
| 2 | 10 | 80 | 82 | 87 | Y | 125 | 90 |
| 3 | 10 | 79 | 81.1 | 86 | Y | 125 | 120 |
| 4 | 30 | 70 | 79 | 90 | Y | 170 | 60 |
| 5 | 30 | 80 | 86 | 78 | N | 170 | 90 |
| 6 | 30 | 79 | 85.3 | 88 | Y | 170 | 120 |
| 7 | 22 | 70 | 76.6 | 88 | Y | 210 | 60 |
| 8 | 22 | 80 | 84.4 | 87 | Y | 210 | 90 |
| 9 | 22 | 79 | 83.62 | 82 | N | 210 | 120 |
| 10 | 27 | 70 | 78.1 | 72 | N | 250 | 60 |
| 11 | 27 | 80 | 85.4 | 90 | Y | 250 | 90 |
| 12 | 27 | 79 | 84.67 | 70 | N | 250 | 120 |

| | | | | | | | |
|---|---|---|---|---|---|---|---|
| α - measurement of synergistic behavior as Y = YES; N = NO β and ρ- Rate - g ai/ha | | | | | | | |

### Example 12 -Weed Control and Crop Tolerance with 2,4 DC and Dimethenamid-P Combinations.

In this example a greenhouse study was conducted to determine weed efficacy and crop tolerance when 2,4 DC is applied alone (reference) or in combination with dimethenamid-P as preemergence. The tested weeds include: wild buckwheat *(Polygonum convolvulus,* POLCO), velvetleaf *(Abutilon theophrasti,* ABUTH), cheat *(Bromus secalinus,* BROSE), wild oat *(Avena fatua,* AVEFA), radish (*Raphanus sativus,* RAPSN), corn poppy (*Papaver rhoeas,* PAPRH), yellow foxtail (*Setaria pumila,* SETLU), Italian ryegrass (*Lolium perenne ssp. multiflorum,* LOLMU). The tested crop was Oilseed rape.

### Methods:

This greenhouse study was conducted to assess the preemergence (PRE) weed control and oilseed rape tolerance with 2,4 DC (CS 36.7%) and dimethenamid-P (Outlook^{®}, 63.9%) tank-mix combinations. 2,4 DC was applied at 125, 170, 210, or 250 g ai/ha alone or as tank-mix with dimethenamid-P. Dimethenamid-P rates for tank-mix application were applied at 250, 375, or 500 g ai/ha for the treatment numbers 1-12, whereas single application of dimethenamid-P was made at 750 g in addition to three above-mentioned rates. A non-treated check was included as reference standard.

All plant species were direct seeded into 6 x 10" (15 cm x 25 cm) fiber flats utilizing Pennington soil. Metazachlor (Butisan, 43.1%) plus dimethenamid-P applied as tankmix at 500 g each was applied as commercial standard. Treatments were replicated 3 times and flats were watered after planting but before the treatment and then lightly watered after treatment application. Thereafter flats were watered and fertilized routinely. Treatments were applied with compressed air in a track spray chamber at 30 GPA using a TeeJet 8001E nozzle at 40 PSI (280 kPa). Visual percent weed control and oilseed rape injury were recorded at 14, 21, and 28 days after treatment (DAT), using a scale of 0 (no control/no injury) to 100 (complete plant death). Data (not included) were analyzed using Minitab statistical software at 95% confidence interval.

### Results at 28 DAT:

All twelve combinations of 2,4 DC and dimethenamid-P tank-mix gave ≥85% control of corn poppy, yellow foxtail, and Italian ryegrass. Out of 12 tank-mix combinations, cheat and wild oat were controlled with 11 and 4 combinations, respectively. 2,4 DC alone at all rates did not control any weed species. Dimethenamid-P alone at all three rates controlled cheat, corn poppy, yellow foxtail, and Italian ryegrass. Control of wild oat was seen at 500 g or 750 g ai/ha. Metazachlor plus dimethenamid-P tank-mix treatment controlled all weeds except velvetleaf and radish.

All 2,4 DC plus dimethenamid-P combinations were safe (≤10% injury) on oilseed rape. 2,4 DC alone or diflufenican alone were safe on oilseed rape. Metazachlor plus dimethenamid-P was also safe on oilseed rape.

In summary, 2,4 DC and dimethenamid-P combinations controlled (≥85%) 5 out of 8 weeds. At the rates used in this study, 2,4 DC alone did not give control of any weeds; on the other hand, dimethenamid-P gave control of 5 weeds. In most cases, 2, 4 DC plus dimethenamid-P combinations were safe on oilseed rape. The tables below highlight analysis of data representing unexpected synergistic effects of the tested combinations.

### 2,4-DC + dimethenamid-P-Wild buckwheat-28 DAT

| Tmt | X | Y | Expected | observed | synergy^{α} | 2,4-DC^{β} | Dimethenamid-P^{ρ} |
|---|---|---|---|---|---|---|---|
| 1 | 8 | 32 | 37.44 | 58 | Y | 125 | 250 |
| 2 | 8 | 70 | 72.4 | 65 | N | 125 | 375 |
| 3 | 8 | 63 | 65.96 | 90 | Y | 125 | 500 |
| 4 | 25 | 32 | 49 | 35 | N | 170 | 250 |
| 5 | 25 | 70 | 77.5 | 60 | N | 170 | 375 |
| 6 | 25 | 63 | 72.25 | 87 | Y | 170 | 500 |
| 7 | 28 | 32 | 51.04 | 56 | Y | 210 | 250 |
| 8 | 28 | 70 | 78.4 | 83 | Y | 210 | 375 |
| 9 | 28 | 63 | 73.36 | 65 | N | 210 | 500 |
| 10 | 38 | 32 | 57.84 | 37 | N | 250 | 250 |
| 11 | 38 | 70 | 81.4 | 60 | N | 250 | 375 |
| 12 | 38 | 63 | 77.06 | 43 | N | 250 | 500 |

| | | | | | | | |
|---|---|---|---|---|---|---|---|
| α - measurement of synergistic behavior as Y = YES; N = NO β and ρ- Rate - g ai/ha | | | | | | | |

### 2,4-DC + dimethenamid-P- Wild oat-28 DAT

| Tmt | X | Y | Expected | observed | synergy^{α} | 2,4-DC^{β} | Dimethenamid-P^{ρ} |
|---|---|---|---|---|---|---|---|
| 1 | 9 | 66 | 69.06 | 70 | Y | 125 | 250 |
| 2 | 9 | 73 | 75.43 | 60 | N | 125 | 375 |
| 3 | 9 | 90 | 90.9 | 80 | N | 125 | 500 |
| 4 | 27 | 66 | 75.18 | 65 | N | 170 | 250 |
| 5 | 27 | 73 | 80.29 | 69 | N | 170 | 375 |
| 6 | 27 | 90 | 92.7 | 85 | N | 170 | 500 |
| 7 | 27 | 66 | 75.18 | 73 | N | 210 | 250 |
| 8 | 27 | 73 | 80.29 | 85 | Y | 210 | 375 |
| 9 | 27 | 90 | 92.7 | 73 | N | 210 | 500 |
| 10 | 29 | 66 | 75.86 | 84 | Y | 250 | 250 |
| 11 | 29 | 73 | 80.83 | 90 | Y | 250 | 375 |
| 12 | 29 | 90 | 92.9 | 89 | N | 250 | 500 |

| | | | | | | | |
|---|---|---|---|---|---|---|---|
| α - measurement of synergistic behavior as Y = YES; N = NO β and ρ- Rate - g ai/ha | | | | | | | |

### Example 13: Weed Control with 2,4 DC and Diflufenican Combinations.

In this example a greenhouse study was conducted to determine the weed efficacy of 2,4-DC, when 2,4-DC is applied alone (reference) or in combination with diflufenican as preemergence (PRE) treatment against Blackgrass (*Alopecurus myosuroides, ALMOY), silky windgrass (Apera spica-venti, APESV), redroot pigweed (Amaranthus retroflexus, AMARE),* littleseed canarygrass (*Phalaris minor,* PHAMI), wild buckwheat (*Polygonum convolvulus, POLCO), green foxtail (Setaria viridis, SETVI), common lambsquarters (Chenopodium album, CHEAL), wild mustard (Sinapis arvensis, SINAR), tall morningglory (Ipomoea purpurea, PHPBU), shepherd's-purse (Capsella bursa-pastoris, CAPBP).*

### Methods:

2,4-DC (CS 36.7%) was applied at 125, 170, 210, or 250 g ai/ha alone or as tank-mix with diflufenican. Diflufenican rates for alone or tank-mix application were 50, 75, or 100 g ai/ha. All plant species were direct seeded into 6 x 10" (15 x 25 cm) fiber flats utilizing Pennington soil. Pyroxasulfone (KIH-485, 85%) at 74.3 g ai/ha, pendimethalin (Prowl 3.3EC, 37.4%) at 1200 g ai/ha, or a premix of chlorsulfuron plus metsulfuron-methyl (Report Extra, 75%) at 15.8 g ai/ha were applied as commercial standards. A non-treated check was included as reference standard. Treatments were replicated 3 times and flats were watered after planting before the treatment and lightly watered after treatment application. Thereafter flats were watered and fertilized routinely. Treatments were applied with compressed air in a track spray chamber at 30 GPA using a TeeJet 8001E nozzle at 40 PSI (280 kPa).

Visual percent weed control was recorded at 14, 21, and 28 DAT, using a scale of 0 (no control) to 100 (complete plant death). Data (not included) were analyzed using Minitab statistical software at 95% confidence interval.

### Results at 28 DAT:

All twelve 2,4 DC and difulfenican tank-mix combinations gave ≥85% control of silky windgrass, redroot pigweed, green foxtail, common lambsquarters, and shepherd's-purse. Control of blackgrass was noticed when 2,4 DC was applied at 250 g with 75 g ai/ha or higher rates of diflufenican. Complete control of wild buckwheat was observed with 2,4 DC at 210 g plus diflufenican at 75 g. Addition of diflufenican at 100 g to 2,4 DC at any rate controlled (≥85%) wild mustard.

Except for shepherd's-purse 2,4 DC alone at all rates did not control most of the species. Diflufenican alone at all three rates to some degree controlled silky windgrass, redroot pigweed, green foxtail, and shepherd's purse. Wild buckwheat and wild mustard were controlled at 75 g or higher rate. Diflufenican controlled common lambsquarters at 100 g only. Pyroxasulfone at 74.3 g controlled all weeds except tall morningglory and shepherd's-purse. Pendimethalin at 1200 g gave control of 6 out of 10 weeds. Chlorsulfuron plus metsulfuron-methyl at 15.8 g controlled all 10 weeds except blackgrass and littleseed canarygrass.

In summary, 2,4 DC and diflufenican combinations controlled (≥85%) 8 out of 10 weeds. At the rates used in this study, 2,4 DC alone gave control of one weed while diflufenican alone controlled 7 weeds. The tables below highlight analysis of data representing unexpected synergistic effects of the tested combinations.

### 2,4-DC + Diflufenican against Blackgrass 28 DAT

| Tmt | X | Y | Expected | observed | synergy^{α} | 2,4-DC^{β} | Diflufenican^{ρ} |
|---|---|---|---|---|---|---|---|
| 1 | 23 | 33 | 48.41 | 37 | N | 125 | 50 |
| 2 | 23 | 17 | 36.09 | 43 | Y | 125 | 75 |
| 3 | 23 | 27 | 43.79 | 61 | Y | 125 | 100 |
| 4 | 53 | 33 | 68.51 | 62 | N | 170 | 50 |
| 5 | 53 | 17 | 60.99 | 77 | Y | 170 | 75 |
| 6 | 53 | 27 | 65.69 | 66 | Y | 170 | 100 |
| 7 | 66 | 33 | 77.22 | 58 | N | 210 | 50 |
| 8 | 66 | 17 | 71.78 | 78 | Y | 210 | 75 |
| 9 | 66 | 27 | 75.18 | 77 | Y | 210 | 100 |
| 10 | 68 | 33 | 78.56 | 67 | N | 250 | 50 |
| 11 | 68 | 17 | 73.44 | 86 | Y | 250 | 75 |
| 12 | 68 | 27 | 76.64 | 88 | Y | 250 | 100 |

| | | | | | | | |
|---|---|---|---|---|---|---|---|
| α - measurement of synergistic behavior as Y = YES; N = NO β and ρ- Rate - g ai/ha | | | | | | | |

### 2,4-DC + Diflufenican - Common lambsquarters-28 DAT

| Tmt | X | Y | Expected | observed | synergy^{α} | 2,4-DC^{β} | Diflufenican^{ρ} |
|---|---|---|---|---|---|---|---|
| 1 | 15 | 65 | 70.25 | 90 | Y | 125 | 50 |
| 2 | 15 | 73 | 77.05 | 91 | Y | 125 | 75 |
| 3 | 15 | 85 | 87.25 | 92 | Y | 125 | 100 |
| 4 | 26 | 65 | 74.1 | 88 | Y | 170 | 50 |
| 5 | 26 | 73 | 80.02 | 93 | Y | 170 | 75 |
| 6 | 26 | 85 | 88.9 | 98 | Y | 170 | 100 |
| 7 | 58 | 65 | 85.3 | 96 | Y | 210 | 50 |
| 8 | 58 | 73 | 88.66 | 96 | Y | 210 | 75 |
| 9 | 58 | 85 | 93.7 | 93 | N | 210 | 100 |
| 10 | 60 | 65 | 86 | 87 | Y | 250 | 50 |
| 11 | 60 | 73 | 89.2 | 97 | Y | 250 | 75 |
| 12 | 60 | 85 | 94 | 92 | N | 250 | 100 |

| | | | | | | | |
|---|---|---|---|---|---|---|---|
| α - measurement of synergistic behavior as Y = YES; N = NO β and ρ- Rate - g ai/ha | | | | | | | |

### 2,4-DC + Diflufenican - Wild mustard-28 DAT

| Tmt | X | Y | Expected | observed | synergy^{α} | 2,4-DC^{β} | Diflufenican^{ρ} |
|---|---|---|---|---|---|---|---|
| 1 | 10 | 42 | 47.8 | 83 | Y | 125 | 50 |
| 2 | 10 | 89 | 90.1 | 97 | Y | 125 | 75 |
| 3 | 10 | 100 | 100 | 100 | N | 125 | 100 |
| 4 | 15 | 42 | 50.7 | 77 | Y | 170 | 50 |
| 5 | 15 | 89 | 90.65 | 83 | N | 170 | 75 |
| 6 | 15 | 100 | 100 | 100 | N | 170 | 100 |
| 7 | 26 | 42 | 57.08 | 88 | Y | 210 | 50 |
| 8 | 26 | 89 | 91.86 | 97 | Y | 210 | 75 |
| 9 | 26 | 100 | 100 | 100 | N | 210 | 100 |
| 10 | 23 | 42 | 55.34 | 79 | Y | 250 | 50 |
| 11 | 23 | 89 | 91.53 | 87 | N | 250 | 75 |
| 12 | 23 | 100 | 100 | 93 | N | 250 | 100 |

| | | | | | | | |
|---|---|---|---|---|---|---|---|
| α - measurement of synergistic behavior as Y = YES; N = NO β and ρ- Rate - g ai/ha | | | | | | | |

### Example 14 -POST Crop Selectivity and Weed Control with 2,4 DC and Bromoxynil Combinations.

In this example a greenhouse study was conducted to study the postemergence (POST) weed control and wheat and barley selectivity with 2,4 DC alone (reference) or in combination with bromoxynil tank-mix against the following weeds Wild oat (*Avena fatua,* AVEFA) wild buckwheat (*Polygonum convolvulus,* POLCO), common chickweed (*Stellaria media,* STEME), common lambsquarters (*Chenopodium album,* CHEAL), wild mustard (*Sinapis arvensis,* SINAR), Italian ryegrass (Lolium multiflorum, LOLMU). The study further assessed post crop safety on Wheat and Barley.

### Methods:

2,4-DC (SC 36%) was applied at 125, 170, 210, or 250 g ai/ha alone or as tank-mix with bromoxynil. Bromoxynil rates for alone or tank-mix application were 140, 210, or 280 g ai/ha. Thifensulfuron-methyl + tribenuron-methyl + metsulfuron-methyl (Accurate Extra, 37.5%+18.75%+15%) at 31.48 g ai/ha or thifensulfuron-methyl + tribenuron-methyl (Harmony Extra SG, 33.33%+16.67%) at 19.95 g ai/ha were applied as commercial standards, an untreated control was also included for comparison. Nonionic surfactant at 0.5% (v/v) was included with commercial standards application. No adjuvant was applied with any other treatments. All plant species were direct seeded into 3" (7.6 cm) plastic pots using metro-mix as growth media. At treatment application common lambsquarters was 1.75" (4.4 cm), common chickweed was 2" (5.1 cm), wild mustard was 2.25" (5.7 cm), wild oat was 5.5" (14.0 cm), wild buckwheat was 2-5" (5.1-12.7 cm), Italian ryegrass was 2-3" (5.1-7.6 cm), wheat was 5.5" (14.0 cm), and barley was 4.5"in height (11.4 cm). Plants were watered well before application and not watered 24 h after application. Plants were watered and fertilized routinely after treatment application. Each treatment was replicated four times. Treatments were applied with compressed air in a track spray chamber at 30 GPA using a TeeJet 8001E nozzle at 40 PSI (280 kPa).

Visual percent wheat and barley injury and weed control were recorded at 7, 14, 21, and 28 days after treatment (DAT), using a scale of 0 (no control/no crop injury) to 100 (complete plant death). Data (not included) were analyzed using Minitab statistical software at 95% confidence interval.

### Results at 28 DAT:

All tank-mix applications of 2,4-DC (SC 36%) plus bromoxynil gave ≥85% control of wild buckwheat and wild mustard, 11 combinations controlled common lambsquarters, while 3 combinations controlled common chickweed. Wild oat and Italian ryegrass were not controlled by any tank-mix combination, however, Italian ryegrass was suppressed (70-84% injury) by certain combinations.

Wheat was not injured by any combination; barley was moderately injured by 1 combination and safe with all other tank-mix combinations. 2,4-DC (SC 36%) applied alone did not control any weed in the assay, and was safe at all rates on both wheat and barley. Bromoxynil alone controlled wild buckwheat, wild mustard, and common lambsquarters at all rates and was safe on both crops at all rates. Thifensulfuron-methyl + tribenuron-methyl + metsulfuron-methyl or thifensulfuron-methyl + tribenuron-methyl both controlled wild buckwheat, wild mustard, common chickweed, and common lambsquarters and were safe on barley and wheat; neither treatment controlled wild oat or Italian ryegrass.

Italian ryegrass was not controlled by any application in the assay. It was observed however that when 2,4-DC (SC 36%) was applied at ≥210 g ai/ha with any rate of bromoxynil, injury level of Italian ryegrass increased to suppression levels in all cases. That same level of control was not achieved by either herbicide when applied alone.

In summary POST application of all twelve 2,4-DC and bromoxynil tank-mix combinations controlled (≥85%) wild mustard and wild buckwheat, common lambsquarters was controlled with 11 combinations, common chickweed was controlled with 3 combinations. Wild oat and Italian ryegrass were not controlled by any combination. All combinations except one were safe on both barley and wheat. 2,4-DC alone did not control any of the tested weeds in this example, bromoxynil alone controlled wild buckwheat, wild mustard and common lambsquarters. The tables below highlight analysis of data representing unexpected synergistic effects of the tested combinations.

### 2,4-DC + bromoxynil-3129 (28 DAT)- Common chickweed-28 DAT

| Tmt | X | Y | Expected | observed | synergy^{α} | 2,4-DC^{β} | Bromoxynil^{ρ} |
|---|---|---|---|---|---|---|---|
| 1 | 9 | 35 | 40.85 | 76 | Y | 125 | 140 |
| 2 | 9 | 65 | 68.15 | 74 | Y | 125 | 210 |
| 3 | 9 | 38 | 43.58 | 76 | Y | 125 | 280 |
| 4 | 7 | 35 | 39.55 | 72 | Y | 170 | 140 |
| 5 | 7 | 65 | 67.45 | 83 | Y | 170 | 210 |
| 6 | 7 | 38 | 42.34 | 82 | Y | 170 | 280 |
| 7 | 14 | 35 | 44.1 | 88 | Y | 210 | 140 |
| 8 | 14 | 65 | 69.9 | 88 | Y | 210 | 210 |
| 9 | 14 | 38 | 46.68 | 80 | Y | 210 | 280 |
| 10 | 28 | 35 | 53.2 | 79 | Y | 250 | 140 |
| 11 | 28 | 65 | 74.8 | 84 | Y | 250 | 210 |
| 12 | 28 | 38 | 55.36 | 86 | Y | 250 | 280 |

| | | | | | | | |
|---|---|---|---|---|---|---|---|
| α - measurement of synergistic behavior as Y = YES; N = NO β and ρ- Rate - g ai/ha | | | | | | | |

### Example 15- Preemergence (PRE) efficacy against weeds and selectivity of 2,4 DC and S-metolachlor tank-mix combinations in corn.

In this example a greenhouse study was conducted to determine the weed efficacy of 2,4-DC in combination with S-metolachlor in tank-mix combinations as applied to corn at different rates. The weeds tested in this study were redroot pigweed (*Amaranthus retroflexus,* AMARE), Jimsonweed (*Datura stramonium,* DATST), black nightshade (*Solanum nigrum,* SOLNI), large crabgrass (*Digitaria sanguinalis,* DIGSA), Pennsylvania smartweed (*Polygonum pensylvanicum,* POLPY), horseweed (*Conyza canadensis,* ERICA), wild buckwheat (*Polygonum convolvulus,* POLCO). The crop tested was Corn (var. Viking).

### Methods:

To determine PRE efficacy and corn injury, five rates of each 2,4 DC (36.7% CS) and S-metolachlor (Dual II Magnum^{®}, 82.4%) were applied either alone (reference) or as tank-mix. 2,4 DC was applied at 0, 125, 170, 210, or 250 g ai/ha and S-metolachlor was applied at 0, 267, 534, 801, or 1070 g ai/ha. Additional treatments included application of premix of pyroxasulfone plus fluthiacet-methyl (Anthem^{™} 23.3%) at 169.9 g ai/ha and tank-mix of mesotrione (Callisto^{®}, 40%) at 123 g plus S-metolachlor at 1252 g. Treatments were applied just after the planting of large crabgrass, Jimsonweed, black nightshade, redroot pigweed, Pennsylvania smartweed, horseweed, wild buckwheat, and corn. A non-treated check was included as reference standard.

Weed species were planted in fiber flats (6" X 10" (15 x 25 cm)) containing Pennington soil and flats were watered well before application and watered lightly after application. Flats were watered and fertilized routinely after treatment application. Each treatment was replicated three times. Treatments were applied using compressed air track spray chamber at 30 GPA using a TeeJet 8001E nozzle at 40 PSI (280 kPa). Visual percent weed control and corn injury were recorded at 14, 21, and 28 days after treatment using a scale of 0 (no control/no injury) to 100 (complete plant death). Corn injury was rated for bleaching and stunting. Data (not included) were analyzed using Minitab statistical software at 95% confidence interval.

### Results:

All sixteen combinations controlled (≥85%) large crabgrass, black nightshade, redroot pigweed, Pennsylvania smartweed, and horseweed. Nine combinations gave control of Jimsonweed and only three combinations controlled wild buckwheat.

All sixteen combinations caused 5% or lower bleaching of corn foliage while 12 combinations caused greater than 10% stunting of corn. 2,4 DC alone controlled large crabgrass at 170 g ai/ha or 250 g and it was safe on corn at all rate. S-metolachlor alone gave control of all species at different rates except Jimsonweed. S-metolachlor alone caused less than 10% bleaching or stunting to corn at 267 g or 534 g. Premix of pyroxasulfone plus fluthiacet-methyl and tank-mix of mesotrione plus S-metolachlor controlled all species except pyroxasulfone plus fluthiacet-methyl did not control Jimsonweed. Corn injury with pyroxasulfone plus fluthiacet-methyl and mesotrione plus S-metolachlor was severe stunting (>50%).

In summary, all 2,4 DC plus S-metolachlor combinations controlled (≥85%) large crabgrass, black nightshade, redroot pigweed, Pennsylvania smartweed, and horseweed. In many cases, these combinations caused greater than 10% stunting to corn. 2,4 DC alone controlled only large crabgrass, preferably at three rates of 170, 210 and 250 and was safe on corn at all rates. S-metolachlor gave control of six out of seven species and it was safe on corn at 534 g or lower rates. The tables below highlight analysis of data representing unexpected synergistic effects of the tested combinations.

### 2,4-DC + S-metolachlor- Jimsonweed-28 DAT

| Tmt | X | Y | Expected | observed | synergy^{α} | 2,4-DC^{β} | *S*-metolachlor^{ρ} |
|---|---|---|---|---|---|---|---|
| 1 | 37 | 17 | 47.71 | 63 | Y | 125 | 267 |
| 2 | 37 | 17 | 47.71 | 88 | Y | 125 | 534 |
| 3 | 37 | 23 | 51.49 | 73 | Y | 125 | 801 |
| 4 | 37 | 28 | 54.64 | 88 | Y | 125 | 1070 |
| 5 | 40 | 17 | 50.2 | 57 | Y | 170 | 267 |
| 6 | 40 | 17 | 50.2 | 80 | Y | 170 | 534 |
| 7 | 40 | 23 | 53.8 | 90 | Y | 170 | 801 |
| 8 | 40 | 28 | 56.8 | 92 | Y | 170 | 1070 |
| 9 | 48 | 17 | 56.84 | 85 | Y | 210 | 267 |
| 10 | 48 | 17 | 56.84 | 62 | Y | 210 | 534 |
| 11 | 48 | 23 | 59.96 | 68 | Y | 210 | 801 |
| 12 | 48 | 28 | 62.56 | 85 | Y | 210 | 1070 |
| 13 | 53 | 17 | 60.99 | 62 | Y | 250 | 267 |
| 14 | 53 | 17 | 60.99 | 89 | Y | 250 | 534 |
| 15 | 53 | 23 | 63.81 | 95 | Y | 250 | 801 |
| 16 | 53 | 28 | 66.16 | 75 | Y | 250 | 1070 |

| | | | | | | | |
|---|---|---|---|---|---|---|---|
| α - measurement of synergistic behavior as Y = YES; N = NO β and ρ- Rate - g ai/ha | | | | | | | |

### 2,4-DC + s-metolachlor- Black nightshade-28 DAT

| Tmt | X | Y | Expected | observed | synergy^{α} | 2,4-DC^{β} | *S*-metolachlor^{ρ} | |
|---|---|---|---|---|---|---|---|---|
| 1 | 32 | 46 | 63.28 | 99 | Y | 125 | 267 | |
| 2 | 32 | 85 | 89.8 | 93 | Y | 125 | 534 | |
| 3 | 32 | 90 | 93.2 | 88 | N | 125 | 801 | |
| 4 | 32 | 95 | 96.6 | 100 | Y | 125 | 1070 | |
| 5 | 33 | 46 | 63.82 | 90 | Y | 170 | 267 | |
| 6 | 33 | 85 | 89.95 | 97 | Y | 170 | 534 | |
| 7 | 33 | 90 | 93.3 | 93 | N | 170 | 801 | |
| 8 | 33 | 95 | 96.65 | 99 | Y | 170 | 1070 | |
| 9 | 47 | 46 | 71.38 | 93 | Y | 210 | 267 | |
| 10 | 47 | 85 | 92.05 | 97 | Y | 210 | | 534 |
| 11 | 47 | 90 | 94.7 | 100 | Y | 210 | 801 | |
| 12 | 47 | 95 | 97.35 | 100 | Y | 210 | 1070 | |
| 13 | 50 | 46 | 73 | 100 | Y | 250 | 267 | |
| 14 | 50 | 85 | 92.5 | 99 | Y | 250 | 534 | |
| 15 | 50 | 90 | 95 | 100 | Y | 250 | 801 | |
| 16 | 50 | 95 | 97.5 | 100 | Y | 250 | 1070 | |

| | | | | | | | | |
|---|---|---|---|---|---|---|---|---|
| α - measurement of synergistic behavior as Y = YES; N = NO β and ρ- Rate - g ai/ha | | | | | | | | |

### 2,4-DC + S-metolachlor- Pennsylvania smartweed-28 DAT

| Tmt | X | Y | Expected | observed | synergy^{α} | 2,4-DC^{β} | *S*-metolachlor^{ρ} |
|---|---|---|---|---|---|---|---|
| 1 | 38 | 75 | 84.5 | 96 | Y | 125 | 267 |
| 2 | 38 | 95 | 96.9 | 100 | Y | 125 | 534 |
| 3 | 38 | 100 | 100 | 100 | N | 125 | 801 |
| 4 | 38 | 100 | 100 | 100 | N | 125 | 1070 |
| 5 | 67 | 75 | 91.75 | 100 | Y | 170 | 267 |
| 6 | 67 | 95 | 98.35 | 100 | Y | 170 | 534 |
| 7 | 67 | 100 | 100 | 100 | N | 170 | 801 |
| 8 | 67 | 100 | 100 | 100 | N | 170 | 1070 |
| 9 | 80 | 75 | 95 | 100 | Y | 210 | 267 |
| 10 | 80 | 95 | 99 | 100 | Y | 210 | 534 |
| 11 | 80 | 100 | 100 | 100 | N | 210 | 801 |
| 12 | 80 | 100 | 100 | 100 | N | 210 | 1070 |
| 13 | 78 | 75 | 94.5 | 100 | Y | 250 | 267 |
| 14 | 78 | 95 | 98.9 | 100 | Y | 250 | 534 |
| 15 | 78 | 100 | 100 | 100 | N | 250 | 801 |
| 16 | 78 | 100 | 100 | 100 | N | 250 | 1070 |

| | | | | | | | |
|---|---|---|---|---|---|---|---|
| α - measurement of synergistic behavior as Y = YES; N = NO β and ρ- Rate - g ai/ha | | | | | | | |

### 2,4-DC + S-metolachlor- Wild buckwheat -28 DAT

| Tmt | X | Y | Expected | observed | synergy^{α} | 2,4-DC^{β} | S-metolachlor^{ρ} |
|---|---|---|---|---|---|---|---|
| 1 | 15 | 33 | 43.05 | 25 | N | 125 | 267 |
| 2 | 15 | 65 | 70.25 | 43 | N | 125 | 534 |
| 3 | 15 | 82 | 84.7 | 62 | N | 125 | 801 |
| 4 | 15 | 85 | 87.25 | 97 | Y | 125 | 1070 |
| 5 | 43 | 33 | 61.81 | 35 | N | 170 | 267 |
| 6 | 43 | 65 | 80.05 | 47 | N | 170 | 534 |
| 7 | 43 | 82 | 89.74 | 77 | N | 170 | 801 |
| 8 | 43 | 85 | 91.45 | 75 | N | 170 | 1070 |
| 9 | 30 | 33 | 53.1 | 53 | N | 210 | 267 |
| 10 | 30 | 65 | 75.5 | 58 | N | 210 | 534 |
| 11 | 30 | 82 | 87.4 | 72 | N | 210 | 801 |
| 12 | 30 | 85 | 89.5 | 68 | N | 210 | 1070 |
| 13 | 32 | 33 | 54.44 | 37 | N | 250 | 267 |
| 14 | 32 | 65 | 76.2 | 63 | N | 250 | 534 |
| 15 | 32 | 82 | 87.76 | 92 | Y | 250 | 801 |
| 16 | 32 | 85 | 89.8 | 88 | N | 250 | 1070 |

| | | | | | | | |
|---|---|---|---|---|---|---|---|
| α - measurement of synergistic behavior as Y = YES; N = NO β and ρ- Rate - g ai/ha | | | | | | | |

### Example 16- Preemergence (PRE) efficacy of 2,4 DC and pyroxasulfone tank-mix combinations.

In this example a greenhouse study was conducted to determine preemergence efficacy of 2,4 DC and pyroxasulfone tank-mixes when 2,4 DC or pyroxasulfone are applied at different rates against weeds selected from the group of giant foxtail (*Setaria faberi,* SETFA), green foxtail (*Setaria virdis,* SETVI), yellow foxtail (*Setaria pumila,* SETLU), black nightshade *(Solanum nigrum, SOLNI), kochia (Kochia scoparia, KCHSC), redroot pigweed (Amaranthus retroflexus, AMARE), common ragweed (Ambrosia artemisiifolia, AMBEL), barnyardgrass (Echinochloa crus-galli, ECHCG), large crabgrass (Digitaria sanguinalis, DIGSA).*

### Methods:

To determine PRE efficacy, five levels of 2,4 DC (36.7% CS) 0, 125, 170, 210, or 250 g ai/ha and five levels of pyroxasulfone (KIH485-85WG) 0, 50, 65, 80, or 95 g ai/ha were applied either alone (reference) or as tank-mix. Additional reference treatments consisted of premix of pyroxasulfone plus fluthiacet-methyl (Anthem^{™} 23.3%) at 169.9 g ai/ha, S-metolachlor (Dual II Magnum, 82.4%) at 1388 g, and tank-mix of mesotrione (Callisto, 40%) at 123 g plus *S-*metolachlor at 1252 g. A non-treated check was included as reference standard. Treatments were applied before the emergence of black nightshade, giant foxtail, green foxtail, yellow foxtail, large crabgrass, kochia, redroot pigweed, common ragweed, and barnyardgrass.

Weed species were planted in fiber flats (6" X 10" (15 x 25 cm)) containing Pennington soil and flats were watered well before application and watered lightly after application. Flats were watered and fertilized routinely after treatment application. Each treatment was replicated three times. Treatments were applied using compressed air track spray chamber at 30 GPA using a TeeJet 8001E nozzle at 40 PSI (280 kPa). Visual percent weed control data were recorded at 14, 21, and 28 days after treatment using a scale of 0 (no control) to 100 (complete plant death). Data (not included) were analyzed using Minitab statistical software at 95% confidence interval.

### Results:

All sixteen combinations controlled (≥85%) black nightshade, kochia, redroot pigweed, barnyardgrass, large crabgrass, giant foxtail, green foxtail, and yellow foxtail. Out of 16 combinations, 14 combinations gave control of common ragweed. 2,4 DC alone controlled kochia at 210 g ai/ha, barnyardgrass and large crabgrass at 125 g, giant foxtail and green foxtail at 170 g.

Regardless of rates, pyroxasulfone controlled all species except common ragweed which was not controlled at any rate. Premix of pyroxasulfone plus fluthiacet-methyl and tank-mix of mesotrione plus S-metolachlor controlled all species. S-metolachlor controlled black nightshade, redroot pigweed, barnyardgrass, large crabgrass, and all three foxtail species.

In summary, nearly all combinations performed effectively (≥85% control) on all weed species. 2,4 DC alone provided control of kochia at 210 g ai/ha and controlled all grass species except yellow foxtail at 170 g. Pyroxasulfone at all rates controlled all weeds except common ragweed. The tables below highlight analysis of data representing unexpected synergistic effects of the tested combinations.

### 2,4-DC + pyroxasulfone- Common ragweed-28 DAT

| Tmt | X | Y | Expected | observed | synergy^{α} | 2,4-DC^{β} | Pyroxasulfone^{ρ} |
|---|---|---|---|---|---|---|---|
| 1 | 33 | 40 | 59.8 | 83 | Y | 125 | 50 |
| 2 | 33 | 53 | 68.51 | 88 | Y | 125 | 65 |
| 3 | 33 | 40 | 59.8 | 97 | Y | 125 | 80 |
| 4 | 33 | 70 | 79.9 | 95 | Y | 125 | 95 |
| 5 | 40 | 40 | 64 | 80 | Y | 170 | 50 |
| 6 | 40 | 53 | 71.8 | 85 | Y | 170 | 65 |
| 7 | 40 | 40 | 64 | 90 | Y | 170 | 80 |
| 8 | 40 | 70 | 82 | 93 | Y | 170 | 95 |
| 9 | 40 | 40 | 64 | 90 | Y | 210 | 50 |
| 10 | 40 | 53 | 71.8 | 82 | Y | 210 | 65 |
| 11 | 40 | 40 | 64 | 93 | Y | 210 | 80 |
| 12 | 40 | 70 | 82 | 83 | Y | 210 | 95 |
| 13 | 45 | 40 | 67 | 90 | Y | 250 | 50 |
| 14 | 45 | 53 | 74.15 | 85 | Y | 250 | 65 |
| 15 | 45 | 40 | 67 | 90 | Y | 250 | 80 |
| 16 | 45 | 70 | 83.5 | 90 | Y | 250 | 95 |

| | | | | | | | |
|---|---|---|---|---|---|---|---|
| α - measurement of synergistic behavior as Y = YES; N = NO β and ρ- Rate - g ai/ha | | | | | | | |

### Example 17- Preemergence Weed Efficacy and Sugarcane Selectivity with 2,4 DC and Isoxaflutole Tank-mix Combinations.

In this example a study was conducted to determine weed efficacy and sugarcane injury when 2,4 DC or isoxaflutole are applied either alone (reference) or tank-mix as preemergence against the weeds: Ivyleaf morningglory (*Ipomoea hederacea,* IPOHE), hairy beggartickss (*Bidens pilosa,* BIDPI), yellow nutsedge (*Cyperus esculentus,* CYPES), large crabgrass (*Digitaria sanguinalis,* DIGSA), and redroot pigweed (*Amaranthus retroflexus,* AMARE). The crop tested in this study was Sugarcane (var. CTC 20).

### Methods:

To determine weed efficacy and sugarcane selectivity, 2,4 DC (SC 36%) and isoxaflutole (Balance Flexx^{®}, 20%) were applied PRE either alone or as tank-mix partners at rates mentioned below. 2,4 DC was applied at 500, 750, and 1000 g ai/ha while isoxaflutole was applied at 80, 100, and 120 g ai/ha. Two commercial standards, clomazone (Command ^{®}3ME, 31.4%) at 1120 g ai/ha and mesotrione (Callisto^{®} 40%) at 105 g were included. A non-treated check was included as reference standard. Treatments were applied PRE to sugarcane (var. CTC 20), ivyleaf morningglory, hairy beggarticks, yellow nutsedge, large crabgrass, and redroot pigweed. Weed species were planted in fiber flats (6" X 10" (15 x 25 cm)) containing Pennington soil. Soil was watered before application and watered lightly after application. Flats were watered and fertilized routinely after treatment application. Treatments were applied using compressed air track spray chamber at 30 GPA using a TeeJet 8001E nozzle at 40 PSI (280 kPa). Percent weed control and sugarcane injury were recorded at 14, 21, and 28 days after treatment (DAT) using a scale of 0 (no control) to 100 (complete plant death). Data (not included) were analyzed using Minitab statistical software at 95% confidence interval.

### Results:

Tank-mix treatments of 2,4 DC with isoxaflutole at all rates controlled ((≥85% weed control) ivyleaf morningglory, hairy beggarticks, large crabgrass, and redroot pigweed. No tank-mix treatment controlled yellow nutsedge. All tank-mix treatments caused sugarcane bleaching greater than 20%. Ivyleaf morningglory control with 2,4 DC alone was achieved at 1000 g whereas hairy beggarticks was controlled at 750 g of 2,4 DC. Large crabgrass and redroot pigweed were controlled with 2,4 DC alone at 500 g or higher rates. Isoxaflutole alone at 80 g or higher rates controlled hairy beggarticks, large crabgrass, and redroot pigweed. Isoxaflutole alone at three rates caused sugarcane bleaching in the range from 26 to 42%. Mesotrione at 105 g controlled all weeds except ivyleaf morningglory. Clomazone at 1120 g controlled hairy beggarticks, large crabgrass, and redroot pigweed.

In summary, tank-mix combinations of 2,4 DC and isoxaflutole controlled (≥85% weed control) all weeds except yellow nutsedge. All 12 tank-mix combinations caused >20% bleaching on sugarcane at 28 DAT. 2,4 DC alone controlled four out of five, Ivyleaf morningglory, hairy beggarticks, large crabgrass and redroot pigweed were controlled. The tables below highlight analysis of data representing unexpected synergistic effects of the tested combinations.

### 2,4 DC + isoxaflutole- Ivyleaf morningglory-28 DAT

| Tmt | X | Y | Expected | observed | synergy^{α} | 2,4-DC^{β} | Isoxaflutole^{ρ} |
|---|---|---|---|---|---|---|---|
| 1 | 67 | 69 | 89.77 | 90 | Y | 500 | 80 |
| 2 | 67 | 73 | 91.09 | 92 | Y | 500 | 100 |
| 3 | 67 | 81 | 93.73 | 98 | Y | 500 | 120 |
| 4 | 78 | 69 | 93.18 | 95 | Y | 750 | 80 |
| 5 | 78 | 73 | 94.06 | 98 | Y | 750 | 100 |
| 6 | 78 | 81 | 95.82 | 97 | Y | 750 | 120 |
| 7 | 88 | 69 | 96.28 | 98 | Y | 1000 | 80 |
| 8 | 88 | 73 | 96.76 | 99 | Y | 1000 | 100 |
| 9 | 88 | 81 | 97.72 | 100 | Y | 1000 | 120 |

| | | | | | | | |
|---|---|---|---|---|---|---|---|
| α - measurement of synergistic behavior as Y = YES; N = NO β and ρ- Rate - g ai/ha | | | | | | | |

### Example 18- Preemergence (PRE) efficacy with 2,4 DC and clomazone tank-mix combinations.

In this example preemergence efficacy was studied when 2,4 DC and clomazone tank-mix combinations are applied at different rates against the following weeds: Annual bluegrass (*Poa annua,* POAAN); cheat (*Bromus secalinus,* BROSE); wild oat (*Avena fatua,* AVEFA); quackgrass (*Elymus repens,* AGRRE); field violet (*Viola arvensis,* VIOAR); blackgrass (*Alopecurus myosuroides,* ALOMY); littleseed canarygrass (*Phalaris minor,* PHAMI); silky windgrass (*Apera spica-venti*; APESP); yellow foxtail (*Setaria pumila,* SETPU); goosegrass (*Eleusine indica,* ELEIN)

### Methods

To determine PRE efficacy, four rates of 2,4 DC (36.7% CS) and three rates of clomazone (Command 3ME, 31.4%) were applied either alone (reference) or as tank-mix. 2,4 DC was applied at 0, 125, 170, 210, or 250 g ai/ha and clomazone was applied at 0, 60, 90, or 120 g ai/ha. Additional reference treatments included application of metazachlor (Butisan^{®}, 43.1%) at 750 g ai/ha, napropamide (Devrinol DF^{®}, 50%) at 1260 g ai/ha, and dimethachlor (Teridox^{®}, 48%) at 1000 g ai/ha. A non-treated check was included as reference standard. Treatments were applied just after the seeding of annual bluegrass, cheat, wild oat, quackgrass, field violet, blackgrass, littleseed canarygrass, silky windgrass, yellow foxtail, and goosegrass. Plant species were planted in fiber flats (6" X 10" (15 x 25 cm)) containing Pennington soil and flats were watered well before application and watered lightly after application. Flats were watered and fertilized routinely after treatment application. Each treatment was replicated three times. Treatments were applied using compressed air track spray chamber at 30 GPA using a TeeJet 8001E nozzle at 40 PSI (280 kPa). Visual percent weed control was recorded at 14, 21, and 28 days after treatment using a scale of 0 (no control) to 100 (complete plant death). Raw Data (not included) were analyzed using Minitab statistical software at 95% confidence interval.

### Results:

Out of twelve 2,4 DC and clomazone combinations, no combination gave control (≥85% injury) of annual bluegrass, blackgrass, or littleseed canarygrass. Three combinations suppressed (70-84% injury) field violet, quackgrass, and yellow foxtail, six combinations suppressed silky windgrass. Wild oat was controlled by five combinations, cheat by 10 combinations, and goosegrass was controlled by all tank-mix combinations.

Applied alone, 2,4 DC controlled goosegrass at ≥170 g ai/ha while clomazone controlled goosegrass at all rates and cheat at 120 g, other weeds were not controlled by either herbicide applied alone. Metazachlor controlled all weeds; napropamide controlled all weeds except blackgrass. Dimethachlor controlled annual bluegrass, quackgrass, littleseed canarygrass, silky windgrass, yellow foxtail, and goosegrass.

In summary, 2,4 DC alone provides good coverage against goosegrass. 2,4 DC plus clomazone combinations controlled (≥85%) goosegrass. Cheat was synergistically controlled by the tested combinations. Although wild oat was controlled by 5 combinations, the table below provides specific unexpected synergistic effects by the instant combinations. No combination controlled or suppressed annual bluegrass, blackgrass, or littleseed canarygrass.

### 2,4-DC + clomazone- Cheat-28 DAT

| Tmt | X | Y | Expected | observed | synergy^{α} | 2,4-DC^{β} | Comazone^{ρ} |
|---|---|---|---|---|---|---|---|
| 1 | 6 | 40 | 43.6 | 67 | Y | 125 | 60 |
| 2 | 6 | 75 | 76.5 | 87 | Y | 125 | 90 |
| 3 | 6 | 97 | 97.18 | 97 | N | 125 | 120 |
| 4 | 11 | 40 | 46.6 | 76 | Y | 170 | 60 |
| 5 | 11 | 75 | 77.75 | 89 | Y | 170 | 90 |
| 6 | 11 | 97 | 97.33 | 98 | Y | 170 | 120 |
| 7 | 12 | 40 | 47.2 | 86 | Y | 210 | 60 |
| 8 | 12 | 75 | 78 | 92 | Y | 210 | 90 |
| 9 | 12 | 97 | 97.36 | 96 | N | 210 | 120 |
| 10 | 25 | 40 | 55 | 89 | Y | 250 | 60 |
| 11 | 25 | 75 | 81.25 | 95 | Y | 250 | 90 |
| 12 | 25 | 97 | 97.75 | 96 | N | 250 | 120 |

| | | | | | | | |
|---|---|---|---|---|---|---|---|
| α - measurement of synergistic behavior as Y = YES; N = NO β and ρ- Rate - g ai/ha | | | | | | | |

### 2,4-DC + clomazone -Wild oat-28 DAT

| Tmt | X | Y | Expected | observed | synergy^{α} | 2,4-DC^{β} | Comazone^{ρ} |
|---|---|---|---|---|---|---|---|
| 1 | 0 | 40 | 40 | 55 | Y | 125 | 60 |
| 2 | 0 | 47 | 47 | 86 | Y | 125 | 90 |
| 3 | 0 | 77 | 77 | 83 | Y | 125 | 120 |
| 4 | 0 | 40 | 40 | 72 | Y | 170 | 60 |
| 5 | 0 | 47 | 47 | 77 | Y | 170 | 90 |
| 6 | 0 | 77 | 77 | 91 | Y | 170 | 120 |
| 7 | 10 | 40 | 46 | 63 | Y | 210 | 60 |
| 8 | 10 | 47 | 52.3 | 87 | Y | 210 | 90 |
| 9 | 10 | 77 | 79.3 | 94 | Y | 210 | 120 |
| 10 | 20 | 40 | 52 | 59 | Y | 250 | 60 |
| 11 | 20 | 47 | 57.6 | 82 | Y | 250 | 90 |
| 12 | 20 | 77 | 81.6 | 88 | Y | 250 | 120 |

| | | | | | | | |
|---|---|---|---|---|---|---|---|
| α - measurement of synergistic behavior as Y = YES; N = NO β and ρ- Rate - g ai/ha | | | | | | | |

### Example 19: 2,4 DC Weed Efficacy and Crop Safety When Tank-mixed with Diflufenican and Applied PRE.

In this example a greenhouse study was conducted to determine crop selectivity and weed efficacy when 2,4 DC is applied Preemergence (PRE) multiple rates alone (reference) or combined with diflufenican against the following weeds: Italian ryegrass *(Lolium perenne L. ssp. multiflorum,* LOLMU); corn poppy (*Papaver rhoeas,* PAPRH); wild oat (*Avena fatua,* AVEFA); annual bluegrass (*Poa annua,* POAAN); quackgrass (*Elymus repens,* AGRRE); cheat (*Bromus secalinus,* BROSE). In this study, the crops tested included Wheat, barley, and oil seed rape (OSR).

### Methods:

To determine weed efficacy and wheat, barley or OSR selectivity, 2,4 DC (CS 36.7%) and Diflufenican (CS 19.5%) were applied preemergence either alone (reference) or as tank-mix partners at the following rates. 2,4 DC was applied at 125, 170, 210 and 250 g ai/ha while Diflufenican was applied at 50, 75, and 100 g ai/ha. Reference formulations: pyroxasulfone (KIH-485, 85%) at 74.3 g ai/ha, pendimethalin (Prowl 3.3EC, 37.4%) at 1200 g ai/ha, or a premix of chlorsulfuron plus metsulfuron-methyl (Report Extra, 75%) at 15.8 g ai/ha were applied as commercial standards. A non-treated check was included as reference standard.

All plants were direct seeded into 6 x 10" (15 x 25 cm) fiber flats utilizing Pennington soil. 2,4 DC and diflufenican were applied alone or combined as tank-mix at each rate mentioned below. Herbicides included as standards for comparison were pyroxasulfone, pendimethalin, and a pre mix of chlorsulfuron plus metsulfuron methyl, all applied at labeled rates as indicated above. Treatments were replicated 3 times. Flats were watered after seeding but prior to treatment. After application flats were placed in the greenhouse and lightly watered. Thereafter flats were watered and fertilized routinely. Treatments were applied with compressed air in a track spray chamber at 30 GPA using a TeeJet 8001E nozzle at 40 PSI (280 kPa). Visual percent weed control and crop safety were recorded at 14, 21, and 28 days after treatment (DAT), using a scale of 0 (no control/no injury) to 100 (complete plant death). Data (not included) were analyzed using Minitab statistical software at 95% confidence interval.

### Results:

2,4 DC (36.7% CS) applied at 125 g ai/ha provided suppression (70-84% injury) to corn poppy, higher rates controlled (≥85% injury) corn poppy. No other weeds in this assay were controlled by any stand alone application of 2,4 DC. Wheat, barley, and oilseed rape (OSR) were safe (≤10% injury) with all stand alone treatments of 2,4 DC. 2,4 DC plus diflufenican as tank-mix controlled field violet with all combinations, corn poppy with 11 of 12 combinations, annual bluegrass with 7 combinations, and Italian ryegrass with 6 combinations. All combinations were safe on barley; wheat was moderately injured (12%) by only one tank-mix combination, while OSR was injured by all combinations of 2,4 DC plus diflufenican.

Herbicide standards tested to compare efficacy and safety included pyroxasulfone at 74.3 g, which controlled all weeds except field violet and was safe on wheat only; pendimethalin applied at 1200 g, controlled corn poppy and field violet and was safe on barley; and a pre-mix of chlorsulfuron plus metsulfuron methyl (Report Extra) at 15.8 g, which also controlled corn poppy and field violet, while providing selectivity to wheat.

In summary, 2,4 DC applied alone controlled corn poppy when applied ≥170 g ai/ha and was safe on all crops at all rates. Corn poppy and annual bluegrass were controlled with most combinations of 2,4 DC plus diflufenican, while field violet was controlled with all combinations. 2,4 DC plus diflufenican controlled Italian ryegrass with most combinations when 2,4 DC was applied at ≥210g. Barley was not injured by any combination while wheat was moderately injured (12%) by one combination; oilseed rape was injured by all tank-mix combinations of 2,4 DC plus diflufenican. The tables below highlight the data analysis with concerning the unexpected synergistic effects of the tested combinations.

### 2,4-DC + diflufenican- Italian ryegrass-28 DAT

| Tmt | X | Y | Expected | observed | synergy^{α} | 2,4-DC^{β} | Diflufenican^{ρ} |
|---|---|---|---|---|---|---|---|
| 1 | 22 | 1 | 22.78 | 47 | Y | 125 | 50 |
| 2 | 22 | 20 | 37.6 | 63 | Y | 125 | 75 |
| 3 | 22 | 55 | 64.9 | 70 | Y | 125 | 100 |
| 4 | 37 | 1 | 37.63 | 83 | Y | 170 | 50 |
| 5 | 37 | 20 | 49.6 | 70 | Y | 170 | 75 |
| 6 | 37 | 55 | 71.65 | 87 | Y | 170 | 100 |
| 7 | 47 | 1 | 47.53 | 73 | Y | 210 | 50 |
| 8 | 47 | 20 | 57.6 | 91 | Y | 210 | 75 |
| 9 | 47 | 55 | 76.15 | 93 | Y | 210 | 100 |
| 10 | 63 | 1 | 63.37 | 86 | Y | 250 | 50 |
| 11 | 63 | 20 | 70.4 | 87 | Y | 250 | 75 |
| 12 | 63 | 55 | 83.35 | 93 | Y | 250 | 100 |

| | | | | | | | |
|---|---|---|---|---|---|---|---|
| α - measurement of synergistic behavior as Y = YES; N = NO β- Rate - g ai/ha | | | | | | | |

### 2,4-DC + diflufenican- Annual bluegrass-28 DAT

| Tmt | X | Y | Expected | observed | synergy^{α} | 2,4-DC^{β} | Diflufenican^{ρ} |
|---|---|---|---|---|---|---|---|
| 1 | 0 | 57 | 57 | 83 | Y | 125 | 50 |
| 2 | 0 | 85 | 85 | 68 | N | 125 | 75 |
| 3 | 0 | 86 | 86 | 81 | N | 125 | 100 |
| 4 | 0 | 57 | 57 | 85 | Y | 170 | 50 |
| 5 | 0 | 85 | 85 | 75 | N | 170 | 75 |
| 6 | 0 | 86 | 86 | 92 | Y | 170 | 100 |
| 7 | 3 | 57 | 58.29 | 73 | Y | 210 | 50 |
| 8 | 3 | 85 | 85.45 | 88 | Y | 210 | 75 |
| 9 | 3 | 86 | 86.42 | 89 | Y | 210 | 100 |
| 10 | 13 | 57 | 62.59 | 89 | Y | 250 | 50 |
| 11 | 13 | 85 | 86.95 | 92 | Y | 250 | 75 |
| 12 | 13 | 86 | 87.82 | 90 | Y | 250 | 100 |

| | | | | | | | |
|---|---|---|---|---|---|---|---|
| α - measurement of synergistic behavior as Y = YES; N = NO β and p- Rate - g ai/ha | | | | | | | |

### Example 20 -2,4 DC plus Dimethenamid-P- Preemergence (PRE) Weed Efficacy.

In this example a greenhouse study was conducted to determine weed efficacy when 2,4 DC is applied PRE at multiple rates alone (reference) or combined with dimethenamid-P as preemergence treatment against the following weeds: Common lambsquarters (*Chenopodium album,* CHEAL); Canada thistle (*Cirsium arvense,* CIRAR); wild mustard *(Sinapis arvensis,* SINAR), shepherd's-purse (*Capsella bursa-pastoris,* CAPBU); redroot pigweed (*Amaranthus retroflexus,* AMARE); blackgrass *(Alopecurus myosuroides,* ALOMY), giant foxtail (*Setaria faberi,* SETFA); goosegrass (*Eleusine indica,* ELEIN); common chickweed *(Stellaria media,* STEME)

Materials:

### Herbicides:

2,4 DC-21 (36.7% CS): 125, 170, 210, or 250 g ai/ha alone (reference) and as tank-mix with dimethenamid-P
Dimethanamid-P (Outlook, 63.9%): 250, 375, 500 g ai/ha in combination with 2,4 DC and alone (reference), additional treatment alone at 750 g ai/ha (reference).
Metazachlor (comparative) (Butisan 43.1%): 500 g ai/ha

### Weeds:

Common lambsquarters
Canada thistle
Wild mustard
Shepherd's-purse
Redroot pigweed
Blackgrass
Giant foxtail
Goosegrass
Common chickweed

### Methods:

All plants were direct seeded into 6 x 10" (15 x 25 cm) fiber flats utilizing Pennington soil. 2,4 DC and dimethenamid-P were applied alone or combined as tank-mix at each rate mentioned below. Herbicides included as standards for comparison were metazachlor plus dimethenamid-P (500g) as tank mix combination. A non-treated check was included as reference standards. Treatments were replicated 3 times. Flats were watered after seeding but prior to treatment. After application flats were placed in the greenhouse and lightly watered. Thereafter flats were watered and fertilized routinely. Treatments were applied with compressed air in a track spray chamber at 30 GPA using a TeeJet 8001E nozzle at 40 PSI (280 kPa). Visual percent weed control was recorded at 14, 21, and 28 days after treatment (DAT), using a scale of 0 (no control) to 100 (complete plant death). Data were analyzed using Minitab statistical software at 95% confidence interval.

### Results:

2,4 DC (36.7% CS) applied alone at 125 g ai/ha controlled (≥ 85% injury) Canada thistle, giant foxtail, goosegrass, and common chickweed; at 210 g shepherd's-purse was also controlled by 2,4 DC. All tank mix combinations of 2,4 DC plus dimethenamid-P controlled Canada thistle, giant foxtail, goosegrass, common chickweed, shepherd's-purse, and redroot pigweed. Common lambsquarters was controlled or suppressed (70-84% injury) when 2,4 DC was applied at 250 g as tank mix with any rate of dimethenamid-P. Wild mustard was suppressed with 4 tank-mix combinations; blackgrass was suppressed with one combination. Dimethenamid-P alone controlled redroot pigweed, giant foxtail, and goosegrass at all rates; common chickweed at ≥ 375 g; shepherd's-purse at ≥ 500 g; and Canada thistle at 750 g. Common lambsquarters or wild mustard were suppressed by certain rates of dimethenamid-P alone, blackgrass was not controlled or suppressed by any rate of dimethenamid-P applied alone. The combination of metazachlor at 500 g plus dimethenamid-P at 500 g included for comparison controlled all weeds tested except wild mustard.

In summary, 2,4 DC applied alone controlled Canada thistle, giant foxtail, goosegrass, and common chickweed at all rates, shepherd's-purse was controlled at ≥ 210 g ai/ha. 2,4 DC tank-mixes with dimethenamid-P in all cases controlled all weeds previously mentioned in addition to redroot pigweed; common lambsquarters was controlled with certain combinations when 2,4 DC was applied at 250 g. The tables below highlight unexpected synergistic effects of the tested combinations.

### 2,4-DC + Dimethenamid-P- Common lambsquarters-28 DAT

| Tmt | X | Y | Expected | observed | synergy^{α} | 2,4-DC^{β} | Dimethenamid^{ρ} |
|---|---|---|---|---|---|---|---|
| 1 | 27 | 22 | 43.06 | 72 | Y | 125 | 250 |
| 2 | 27 | 43 | 58.39 | 55 | N | 125 | 375 |
| 3 | 27 | 84 | 88.32 | 68 | N | 125 | 500 |
| 4 | 28 | 22 | 43.84 | 68 | Y | 170 | 250 |
| 5 | 28 | 43 | 58.96 | 58 | N | 170 | 375 |
| 6 | 28 | 84 | 88.48 | 48 | N | 170 | 500 |
| 7 | 33 | 22 | 47.74 | 48 | Y | 210 | 250 |
| 8 | 33 | 43 | 61.81 | 55 | N | 210 | 375 |
| 9 | 33 | 84 | 89.28 | 75 | N | 210 | 500 |
| 10 | 62 | 22 | 70.36 | 83 | Y | 250 | 250 |
| 11 | 62 | 43 | 78.34 | 94 | Y | 250 | 375 |
| 12 | 62 | 84 | 93.92 | 86 | N | 250 | 500 |

| | | | | | | | |
|---|---|---|---|---|---|---|---|
| α - measurement of synergistic behavior as Y = YES; N = NO β and p- Rate - g ai/ha | | | | | | | |

### 2,4 DC + Dimethenamid-P-Shepherd's-purse-28 DAT

| Tmt | X | Y | Expected | observed | synergy | 2,4-DC | Dimethenamid^{ρ} |
|---|---|---|---|---|---|---|---|
| 1 | 60 | 20 | 68 | 98 | Y | 125 | 250 |
| 2 | 60 | 58 | 83.2 | 98 | Y | 125 | 375 |
| 3 | 60 | 94 | 97.6 | 98 | Y | 125 | 500 |
| 4 | 68 | 20 | 74.4 | 96 | Y | 170 | 250 |
| 5 | 68 | 58 | 86.56 | 95 | Y | 170 | 375 |
| 6 | 68 | 94 | 98.08 | 96 | N | 170 | 500 |
| 7 | 86 | 20 | 88.8 | 96 | Y | 210 | 250 |
| 8 | 86 | 58 | 94.12 | 96 | Y | 210 | 375 |
| 9 | 86 | 94 | 99.16 | 98 | N | 210 | 500 |
| 10 | 95 | 20 | 96 | 99 | Y | 250 | 250 |
| 11 | 95 | 58 | 97.9 | 98 | Y | 250 | 375 |
| 12 | 95 | 94 | 99.7 | 98 | N | 250 | 500 |

| | | | | | | | |
|---|---|---|---|---|---|---|---|
| α - measurement of synergistic behavior as Y = YES; N = NO β and p- Rate - g ai/ha | | | | | | | |

### Example 21- 2,4 DC Weed Efficacy When Tank-mixed with S-metolachlor preemergence (PRE) on European Weeds

In this example a greenhouse study was conducted to determine weed efficacy when multiple rates of 2,4 DC are applied alone (reference) or as a tank-mix with S-metolachlor at various rates against weeds: Quackgrass (*Elymus repens,* AGREE) common chickweed *(Stellaria media,* STEME); velvetleaf *(Abutilon theophrasti,* ABUTH); yellow foxtail (*Setaria pumila,* SETLU); green foxtail *(Setaria viridis,* SETVI); common lambsquarters (*Chenopodium album,* CHEAL); barnyardgrass (*Echinochloa crus-galli,* ECHCG).

### Methods:

2,4 DC (36.7% CS) was applied PRE at 0, 125, 170, 210, or 250 g ai/ha alone or as a tank-mix with S-metolachlor (Dual II Magnum^{®}, 82.4%) at 0, 267, 534, 801, or 1070 g ai/ha. Reference formulations: pyroxasulfone plus fluthiacet-methyl (Anthem^{™}, 23.3%) applied at 169.9 g ai/ha, and the tank-mix of mesotrione (Callisto^{®}, 40%) at 123 g plus S-metolachlor (Dual II Magnum^{®}, 82.4%) at 1252 g were included as standards for comparison. Quackgrass, common chickweed, velvetleaf, yellow foxtail, green foxtail, common lambsquarters, and barnyardgrass were direct seeded into 6" x 10" (15 x 25 cm) fiber flats utilizing Pennington soil. Flats were watered after seeding but prior to treatment. After application flats were placed in the greenhouse and lightly watered. Thereafter flats were watered and fertilized routinely. Each treatment was replicated three times. Treatments were applied using compressed air in a track spray chamber at 40 psi (280 kPa) and a spray volume of 30 GPA using a TeeJet 8001E nozzle. Visual percent weed control was recorded at 14, 21, and 28 days after treatment (DAT). Weed control was evaluated using a scale of 0 (no control) to 100 (complete plant death). Data (not included) were analyzed using Minitab statistical software at 95% confidence interval.

### Results at 28 DAT:

2,4 DC applied alone controlled (≥85% injury) common chickweed at all rates, barnyardgrass at ≥210 g ai/ha, and green foxtail at 250 g. S-metolachlor applied alone controlled yellow foxtail, green foxtail, and barnyardgrass at all rates, quackgrass or common chickweed at ≥534 g, and common lambsquarters at ≥801 g. All 16 tankmixes of encapsulated 2,4 DC plus S-metolachlor controlled common chickweed, yellow foxtail, green foxtail, and barnyardgrass. Quackgrass was controlled by 10 tank-mix combinations; the other 6 combinations provided quackgrass suppression (in the range of 70 - 84% control).

Common lambsquarters was controlled by 13 combinations of 2,4 DC plus *S-*metolachlor, suppressed by 2 combinations, and not controlled by 1 combination. Velvetleaf was not control or suppressed by any treatment containing 2,4 DC or S-metolachlor, either alone or in combination. Both standards tested, the premix of fluthiacet-methyl plus pyroxasulfone (Anthem), or mesotrione plus S-metolachlor as tank-mix, controlled all weeds in this study.

In summary, 2,4 DC applied alone controlled common chickweed at all rates, barnyardgrass and green foxtail with certain rates, while other species were not controlled by 2,4 DC alone at any rate. S-metolachlor alone controlled yellow foxtail, green foxtail, and barnyardgrass at all rates; quackgrass, common chickweed, and common lambsquarters were controlled at certain rates. All tank-mix combinations of 2,4 DC plus S-metolachlor controlled common chickweed, yellow foxtail, green foxtail, and barnyardgrass; most combinations controlled common lambsquarters and quackgrass. The table below highlights unexpected synergistic effects of the tested combinations.

### 2,4 DC + S-metolachlor- Common lambsquarters- 28 DAT

| Tmt | X | Y | Expected | observed | synergy^{α} | 2,4-DC^{β} | *S*-metolachlor^{ρ} |
|---|---|---|---|---|---|---|---|
| 1 | 2 | 7 | 8.86 | 65 | Y | 125 | 267 |
| 2 | 2 | 75 | 75.5 | 85 | Y | 125 | 534 |
| 3 | 2 | 97 | 97.06 | 95 | N | 125 | 801 |
| 4 | 2 | 96 | 96.08 | 94 | N | 125 | 1070 |
| 5 | 2 | 7 | 8.86 | 75 | Y | 170 | 267 |
| 6 | 2 | 75 | 75.5 | 87 | Y | 170 | 534 |
| 7 | | 97 | 97.06 | 94 | N | 170 | 801 |
| 8 | 2 2 | 96 | 96.08 | 96 | N | 170 | 1070 |
| 9 | 8 | 7 | 14.44 | 86 | Y | 210 | 267 |
| 10 | 8 | 75 | 77 | 89 | Y | 210 | 534 |
| 11 | 8 | 97 | 97.24 | 95 | N | 210 | 801 |
| 12 | 8 | 96 | 96.32 | 96 | N | 210 | 1070 |
| 13 | 8 | 7 | 14.44 | 82 | Y | 250 | 267 |
| 14 | 8 | 75 | 77 | 91 | Y | 250 | 534 |
| 15 | 8 | 97 | 97.24 | 96 | N | 250 | 801 |
| 16 | 8 | 96 | 96.32 | 96 | N | 250 | 1070 |

| | | | | | | | |
|---|---|---|---|---|---|---|---|
| α - measurement of synergistic behavior as Y = YES; N = NO β and p- Rate - g ai/ha | | | | | | | |

### Example 22- 2,4 DC Weed Efficacy When Tank-mixed with S-metolachlor preemergence (PRE) on Brazilian Weed Spectrum

In this example a greenhouse study was conducted to determine weed efficacy when multiple rates of 2,4 DC are applied alone (reference) or as a tank-mix with S-metolachlor at various rates Preemergence against the following weeds: Johnsongrass (*Sorghum halepense,* SORHA); wild mustard *(Sinapis arvensis,* SINAR); Benghal dayflower (*Commelina benghalensis,* COMBE); prickly sida (*Sida spinosa,* SIDSP); hairy beggarticks (*Bidens pilosa,* BIDPI); morningglory (*Ipomoea spp.* IPO sp): common lambsquarters (*Chenopodium album,* CHEAL); goosegrass (*Eleusine indica,* ELEIN).

### Materials and Methods

2,4 DC (36.7% CS) was applied PRE at 0, 125, 170, 210, or 250 g ai/ha alone or as a tank-mix with S-metolachlor (Dual II Magnum^{®}, 82.4%) at 0, 267, 534, 801, or 1070 g ai/ha. Reference formulations: pyroxasulfone plus fluthiacet-methyl (Anthem^{™}, 23.3%) applied at 169.9 g ai/ha, and the tank-mix of mesotrione (Callisto^{®}, 40%) at 123 g plus S-metolachlor (Dual II Magnum^{®}, 82.4%) at 1252 g were included as a standards for comparison. Johnsongrass, wild mustard, Benghal dayflower, prickly sida, hairy beggarticks, morningglory, common lambsquarters, and goosegrass were direct seeded into 6" x 10" (15 x 25 cm) fiber flats utilizing Pennington soil. Flats were watered after seeding but prior to treatment. After application flats were placed in the greenhouse and lightly watered.

Thereafter flats were watered and fertilized routinely. Each treatment was replicated three times. Treatments were applied using compressed air in a track spray chamber at 40 psi (280 kPa) and a spray volume of 30 GPA using a TeeJet 8001E nozzle. Visual percent weed control was recorded at 14, 21, and 28 days after treatment (DAT). Weed control was evaluated using a scale of 0 (no control) to 100 (complete plant death). Data were analyzed using Minitab statistical software at 95% confidence interval.

### Results at 28 DAT:

2,4 DC applied alone controlled (≥85% injury) Johnsongrass at 210 g ai/ha, common lambsquarters at 250 g and goosegrass at all rates. 2,4 DC plus *S*-metolachlor as tank-mix controlled Johnsongrass, common lambsquarters, and goosegrass with all combinations, Benghal dayflower was controlled with 13 of 16 combinations, (the other 3 combinations provided control in the range of 70 - 84%). Eleven combinations gave fair control to prickly sida, while three combinations provided control. Five combinations controlled hairy beggarticks, and no combination controlled wild mustard or morningglory. S-metolachlor applied alone controlled Johnsongrass and goosegrass at all rates and controlled Benghal dayflower, prickly sida and common lambsquarters at 801 g. Mesotrione plus S-metolachlor as tank-mix controlled all weeds, the premix of fluthiacet-methyl plus pyroxasulfone controlled all weeds except hairy beggarticks.

In summary, 2,4 DC applied alone controlled goosegrass at all rates while controlling Johnsongrass and common lambsquarters at certain rates, other species were not controlled by 2,4 DC alone. S-metolachlor alone controlled Johnsongrass and goosegrass at all rates, Benghal dayflower, prickly sida, and common lambsquarters at certain rates. All tank-mix combinations controlled Johnsongrass, common lambsquarters, and goosegrass; most controlled Benghal dayflower while certain combinations controlled prickly sida and hairy beggarticks. Wild mustard and morningglory were not controlled by any treatment containing 2,4 DC or *S-*metolachlor. The tables below highlight unexpected synergistic effects of the tested combinations.

### 2,4-DC + S-metolachlor-Benghal dayflower-28 DAT

| Tmt | X | Y | Expected | observed | synergy^{α} | 2,4-DC^{β} | *S*-metolachlor^{ρ} |
|---|---|---|---|---|---|---|---|
| 1 | 8 | 67 | 69.64 | 84 | Y | 125 | 267 |
| 2 | 8 | 72 | 74.24 | 92 | Y | 125 | 534 |
| 3 | 8 | 94 | 94.48 | 95 | Y | 125 | 801 |
| 4 | 8 | 90 | 90.8 | 96 | Y | 125 | 1070 |
| 5 | 13 | 67 | 71.29 | 95 | Y | 170 | 267 |
| 6 | 13 | 72 | 75.64 | 94 | Y | 170 | 534 |
| 7 | 13 | 94 | 94.78 | 98 | Y | 170 | 801 |
| 8 | 13 | 90 | 91.3 | 98 | Y | 170 | 1070 |
| 9 | 43 | 67 | 81.19 | 82 | Y | 210 | 267 |
| 10 | 43 | 72 | 84.04 | 92 | Y | 210 | 534 |
| 11 | 43 | 94 | 96.58 | 95 | N | 210 | 801 |
| 12 | 43 | 90 | 94.3 | 96 | Y | 210 | 1070 |
| 13 | 40 | 67 | 80.2 | 80 | N | 250 | 267 |
| 14 | 40 | 72 | 83.2 | 93 | Y | 250 | 534 |
| 15 | 40 | 94 | 96.4 | 97 | Y | 250 | 801 |
| 16 | 40 | 90 | 94 | 96 | Y | 250 | 1070 |

| | | | | | | | |
|---|---|---|---|---|---|---|---|
| α - measurement of synergistic behavior as Y = YES; N = NO β and p- Rate - g ai/ha | | | | | | | |

### 2,4-DC + S-metolachlor- Hairy beggarticks- 28 DAT

| Tmt | X | Y | Expected | observed | synergy^{α} | 2,4-DC^{β} | *S*-metolachlor^{ρ} |
|---|---|---|---|---|---|---|---|
| 1 | 37 | 40 | 62.2 | 40 | N | 125 | 267 |
| 2 | 37 | 50 | 68.5 | 40 | N | 125 | 534 |
| 3 | 37 | 52 | 69.76 | 65 | N | 125 | 801 |
| 4 | 37 | 62 | 76.06 | 53 | N | 125 | 1070 |
| 5 | 40 | 40 | 64 | 40 | N | 170 | 267 |
| 6 | 40 | 50 | 70 | 62 | N | 170 | 534 |
| 7 | 40 | 52 | 71.2 | 89 | Y | 170 | 801 |
| 8 | 40 | 62 | 77.2 | 91 | Y | 170 | 1070 |
| 9 | 50 | 40 | 70 | 53 | N | 210 | 267 |
| 10 | 50 | 50 | 75 | 63 | N | 210 | 534 |
| 11 | 50 | 52 | 76 | 77 | Y | 210 | 801 |
| 12 | 50 | 62 | 81 | 95 | Y | 210 | 1070 |
| 13 | 40 | 40 | 64 | 53 | N | 250 | 267 |
| 14 | 40 | 50 | 70 | 80 | Y | 250 | 534 |
| 15 | 40 | 52 | 71.2 | 90 | Y | 250 | 801 |
| 16 | 40 | 62 | 77.2 | 90 | Y | 250 | 1070 |

| | | | | | | | |
|---|---|---|---|---|---|---|---|
| α - measurement of synergistic behavior as Y = YES; N = NO β and p- Rate - g ai/ha | | | | | | | |

### Example 24- PRE efficacy of 2,4 DC and pyroxasulfone tank-mix combinations.

In this example a greenhouse study was conducted to determine preemergence (PRE) efficacy of 2,4 DC and pyroxasulfone tank-mixes when 2,4 DC or pyroxasulfone are applied at different rates. The tested weeds include Giant foxtail (*Setaria faberi,* SETFA), green foxtail (*Setaria virdis,* SETVI), yellow foxtail (*Setaria pumila,* SETLU), black nightshade (*Solanum nigrum,* SOLNI*)*, kochia *(Kochia scoparia,* KCHSC*)*, redroot pigweed *(Amaranthus retroflexus,* AMARE*)*, common ragweed *(Ambrosia artemisiifolia,* AMBEL*)*, barnyardgrass *(Echinochloa crus-galli,* ECHCG), large crabgrass *(Digitaria sanguinalis,* DIGSA*)*.

### Materials and Methods

To determine PRE efficacy, five levels of 2,4 DC-21 (36.7% CS) 0, 125, 170, 210, or 250 g ai/ha and five levels of pyroxasulfone (KIH485-85WG) 0, 50, 65, 80, or 95 g ai/ha were applied either alone (reference) or as tank-mix. Additional reference treatments consisted of premix of pyroxasulfone plus fluthiacet-methyl (Anthem^{™} 23.3%) at 169.9 g ai/ha, *S-*metolachlor (Dual II Magnum^{®}, 82.4%) at 1388 g, and tank-mix of mesotrione (Callisto^{®}, 40%) at 123 g plus S-metolachlor at 1252 g. A non-treated check was included as reference standard. Treatments were applied before the emergence of black nightshade, giant foxtail, green foxtail, yellow foxtail, large crabgrass, kochia, redroot pigweed, common ragweed, and barnyardgrass. Weed species were planted in fiber flats (6" X 10" (15 x 25 cm)) containing Pennington soil and flats were watered well before application and watered lightly after application. Flats were watered and fertilized routinely after treatment application. Each treatment was replicated three times. Treatments were applied using compressed air track spray chamber at 30 GPA using a TeeJet 8001E nozzle at 40 PSI (280 kPa). Visual percent weed control data were recorded at 14, 21, and 28 days after treatment using a scale of 0 (no control) to 100 (complete plant death). Data (not included) were analyzed using Minitab statistical software at 95% confidence interval.

### Results:

All sixteen combinations controlled (≥85%) black nightshade, kochia, redroot pigweed, barnyardgrass, large crabgrass, giant foxtail, green foxtail, and yellow foxtail. Out of 16 combinations, 14 combinations gave control of common ragweed. 2,4 DC alone controlled kochia at 210 g ai/ha, barnyardgrass and large crabgrass at 125 g, giant foxtail and green foxtail at 170 g. Regardless of rates, pyroxasulfone controlled all species except common ragweed which was not controlled at any rate. Premix of pyroxasulfone plus fluthiacet-methyl and tank-mix of mesotrione plus S-metolachlor controlled all species. S-metolachlor controlled black nightshade, redroot pigweed, barnyardgrass, large crabgrass, and all three foxtail species.

In summary, nearly all combinations performed effectively (≥85% control) on all weed species. 2,4 DC alone gave control of kochia at 210 g ai/ha and controlled all grass species except yellow foxtail at 170 g. Pyroxasulfone at all rates controlled all weeds except common ragweed. The table below highlights analyzed data for the unexpected synergistic effects of the tested combinations

### 2,4-DC + pyroxasulfone- Pitted morningglory-28 DAT

| Tmt | X | Y | Expected | observed | synergy^{α} | 2,4-DC^{β} | pyroxasulfone^{ρ} |
|---|---|---|---|---|---|---|---|
| 2 | 10 | 73 | 75.7 | 96 | Y | 125 | 50 |
| 3 | 10 | 95 | 95.5 | 77 | N | 125 | 65 |
| 4 | 10 | 97 | 97.3 | 97 | N | 125 | 80 |
| 5 | 10 | 100 | 100 | 98 | N | 125 | 95 |
| 6 | 28 | 73 | 80.56 | 95 | Y | 170 | 50 |
| 7 | 28 | 95 | 96.4 | 97 | Y | 170 | 65 |
| 8 | 28 | 97 | 97.84 | 98 | Y | 170 | 80 |
| 9 | 28 | 100 | 100 | 83 | N | 170 | 95 |
| 10 | 17 | 73 | 77.59 | 17 | N | 210 | 50 |
| 11 | 17 | 95 | 95.85 | 91 | N | 210 | 65 |
| 12 | 17 | 97 | 97.51 | 99 | Y | 210 | 80 |
| 13 | 17 | 100 | 100 | 95 | N | 210 | 95 |
| 14 | 27 | 73 | 80.29 | 98 | Y | 250 | 50 |
| 15 | 27 | 95 | 96.35 | 100 | Y | 250 | 65 |
| 16 | 27 | 97 | 97.81 | 92 | N | 250 | 80 |
| 17 | 27 | 100 | 100 | 97 | N | 250 | 95 |

| | | | | | | | |
|---|---|---|---|---|---|---|---|
| α - measurement of synergistic behavior as Y = YES; N = NO β and p- Rate - g ai/ha | | | | | | | |

### 2,4-DC + pyroxasulfone-PRE Johnsongrass-28 DAT

| Tmt | X | Y | Expected | observed | synergy^{α} | 2,4-DC^{β} | pyroxasulfone^{ρ} |
|---|---|---|---|---|---|---|---|
| 2 | 14 | 69 | 73.34 | 100 | Y | 125 | 50 |
| 3 | 17 | 100 | 100 | 100 | N | 125 | 65 |
| 4 | 23 | 100 | 100 | 100 | N | 125 | 80 |
| 5 | 33 | 100 | 100 | 100 | N | 125 | 95 |
| 6 | 14 | 69 | 73.34 | 100 | Y | 170 | 50 |
| 7 | 17 | 100 | 100 | 100 | N | 170 | 65 |
| 8 | 23 | 100 | 100 | 100 | N | 170 | 80 |
| 9 | 33 | 100 | 100 | 100 | N | 170 | 95 |
| 10 | 14 | 69 | 73.34 | 0 | N | 210 | 50 |
| 11 | 17 | 100 | 100 | 100 | N | 210 | 65 |
| 12 | 23 | 100 | 100 | 100 | N | 210 | 80 |
| 13 | 33 | 100 | 100 | 100 | N | 210 | 95 |
| 14 | 14 | 69 | 73.34 | 100 | Y | 250 | 50 |
| 15 | 17 | 100 | 100 | 100 | N | 250 | 65 |
| 16 | 23 | 100 | 100 | 100 | N | 250 | 80 |
| 17 | 33 | 100 | 100 | 100 | N | 250 | 95 |

| | | | | | | | |
|---|---|---|---|---|---|---|---|
| α - measurement of synergistic behavior as Y = YES; N = NO β and p- Rate - g ai/ha | | | | | | | |

### 2,4-DC + pyroxasulfone Quackgrass-28 DAT

| Tmt | X | Y | Expected | observed | synergy^{α} | 2,4-DC^{β} | pyroxasulfone^{ρ} |
|---|---|---|---|---|---|---|---|
| 1 | 1 | 23 | 23.77 | 83 | Y | 125 | 50 |
| 2 | 1 | 35 | 35.65 | 83 | Y | 125 | 65 |
| 3 | 1 | 70 | 70.3 | 85 | Y | 125 | 80 |
| 4 | 1 | 85 | 85.15 | 92 | Y | 125 | 95 |
| 5 | 3 | 23 | 25.31 | 89 | Y | 170 | 50 |
| 6 | 3 | 35 | 36.95 | 83 | Y | 170 | 65 |
| 7 | 3 | 70 | 70.9 | 89 | Y | 170 | 80 |
| 8 | 3 | 85 | 85.45 | 92 | Y | 170 | 95 |
| 9 | 13 | 23 | 33.01 | 0 | N | 210 | 50 |
| 10 | 13 | 35 | 43.45 | 90 | Y | 210 | 65 |
| 11 | 13 | 70 | 73.9 | 83 | Y | 210 | 80 |
| 12 | 13 | 85 | 86.95 | 88 | Y | 210 | 95 |
| 13 | 15 | 23 | 34.55 | 78 | Y | 250 | 50 |
| 14 | 15 | 35 | 44.75 | 85 | Y | 250 | 65 |
| 15 | 15 | 70 | 74.5 | 86 | Y | 250 | 80 |
| 16 | 15 | 85 | 87.25 | 93 | Y | 250 | 95 |

| | | | | | | | |
|---|---|---|---|---|---|---|---|
| α - measurement of synergistic behavior as Y = YES; N = NO β and p- Rate - g ai/ha | | | | | | | |

### Example 25- 2,4 DC Weed Efficacy and Crop Selectivity When Tank-mixed with Pyroxasulfone preemergence (PRE).

In this example a greenhouse study was conducted to determine weed efficacy and crop selectivity with multiple rates of 2,4 DC applied alone (reference) or as a tank-mix with pyroxasulfone at various rates PRE against Jimsonweed (*Datura stramonium,* DATST); wild poinsettia (*Euphorbia heterophylla,* EUHHL), hairy beggarticks (*Bidens pilosa,* BIDPI); black nightshade (*Solanum nigrum,* SOLNI). The crop tested in this study was Corn.

### Materials and Methods:

2,4 DC-21 (36.7% CS) was applied PRE at 0, 125, 170, 210, or 250 g ai/ha alone or as a tank-mix with pyroxasulfone (KIH-485, 85% WP) at 0, 50, 65, 80, or 95 g ai/ha. Reference formulations: pyroxasulfone plus fluthiacet-methyl (Anthem^{™}, 23.3%) applied at 169.9 g ai/ha, s-metolachlor (Dual II Magnum^{®}, 82.4%) applied at 1389 g, and the tank-mix of mesotrione (Callisto^{®}, 40%) at 123 g plus s-metolachlor (Dual II Magnum^{®}, 82.4%) at 1252 g were included as standards for comparison. A non-treated check was included as reference standard. Jimsonweed, wild poinsettia, hairy beggarticks, black nightshade, and corn were direct seeded into 6" x 10" (15 x 25 cm) fiber flats utilizing Pennington soil. Flats were watered after seeding but prior to treatment. After application flats were placed in the greenhouse and lightly watered. Thereafter flats were watered and fertilized routinely. Treatments were applied using compressed air in a track spray chamber at 40 psi (280 kPa) and a spray volume of 30 GPA using a TeeJet 8001E nozzle. Visual percent weed control and crop injury data were recorded at 14, 21, and 28 days after treatment (DAT). Weed control was evaluated using a scale of 0 (no control) to 100 (complete plant death). Crop injury was evaluated for bleaching, stunting and necrosis, using a scale of 0 (no injury) to 100 (complete plant death). Data (not included) were analyzed using Minitab statistical software at 95% confidence interval.

### Results:

2,4 DC applied alone controlled (≥85% injury) black nightshade at 170 g ai/ha, did not provide control of other weeds tested when applied alone at any rate, and was safe on corn at all rates. 2,4 DC plus pyroxasulfone controlled black nightshade with all tank-mix combinations, controlled Jimsonweed with all except one combination, controlled wild poinsettia with two combinations and hairy beggarticks with one combination. No tank-mix combination caused bleaching injury (≥10%) to corn, 7 combinations caused moderate (11-20%) stunting to corn and 3 combinations caused severe stunting (≥20%) to corn. No tank-mix combination of 2,4 DC plus pyroxasulfone caused necrosis greater than 10%. When total combined injury was considered, (percent bleaching + percent stunting + percent necrosis) only one tank-mix combination was safe on corn; 5 combinations were moderately safe while 10 combinations caused severe injury to corn. Fluthiacet-methyl plus pyroxasulfone controlled Jimsonweed and black nightshade and caused severe stunting to corn. *S*-metolachlor controlled only black nightshade and also caused severe stunting to corn. Mesotrione plus *s*-metolachlor controlled all weeds tested and caused moderate stunting to corn.

In summary, 2,4 DC applied alone controlled black nightshade with most rates; other weeds were not controlled by 2,4 DC alone. 2,4 DC plus pyroxasulfone controlled black nightshade with all applications, Jimsonweed with most combinations, and wild poinsettia or hairy beggarticks with certain tank-mix applications. All rates of 2,4 DC alone were safe on corn, tank-mixes of 2,4 DC plus pyroxasulfone injured corn with most applications. The table below highlights the analyzed data for unexpected synergistic effects of the tested combinations.

### 2,4-DC + pyroxasulfone- Jimsonweed-28 DAT

| Tmt | X | Y | Expected | observed | synergy^{α} | 2,4-DC^{β} | pyroxasulfone^{ρ} |
|---|---|---|---|---|---|---|---|
| 1 | 40 | 60 | 76 | 77 | Y | 125 | 50 |
| 2 | 40 | 70 | 82 | 91 | Y | 125 | 65 |
| 3 | 40 | 85 | 91 | 94 | Y | 125 | 80 |
| 4 | 40 | 85 | 91 | 95 | Y | 125 | 95 |
| 5 | 47 | 60 | 78.8 | 91 | Y | 170 | 50 |
| 6 | 47 | 70 | 84.1 | 92 | Y | 170 | 65 |
| 7 | 47 | 85 | 92.05 | 93 | Y | 170 | 80 |
| 8 | 47 | 85 | 92.05 | 96 | Y | 170 | 95 |
| 9 | 70 | 60 | 88 | 91 | Y | 210 | 50 |
| 10 | 70 | 70 | 91 | 95 | Y | 210 | 65 |
| 11 | 70 | 85 | 95.5 | 93 | N | 210 | 80 |
| 12 | 70 | 85 | 95.5 | 92 | N | 210 | 95 |
| 13 | 73 | 60 | 89.2 | 98 | Y | 250 | 50 |
| 14 | 73 | 70 | 91.9 | 96 | Y | 250 | 65 |
| 15 | 73 | 85 | 95.95 | 97 | Y | 250 | 80 |
| 16 | 73 | 85 | 95.95 | 98 | Y | 250 | 95 |

| | | | | | | | |
|---|---|---|---|---|---|---|---|
| α - measurement of synergistic behavior as Y = YES; N = NO β and p- Rate - g ai/ha | | | | | | | |

### 2,4-DC + pyroxasulfone- PRE- Wild poinsettia-28 DAT

| Tmt | X | Y | Expected | observed | synergy^{α} | 2,4-DC^{β} | pyroxasulfone^{ρ} |
|---|---|---|---|---|---|---|---|
| 1 | 2 | 40 | 41.2 | 17 | N | 125 | 50 |
| 2 | 2 | 47 | 48.06 | 13 | N | 125 | 65 |
| 3 | 2 | 60 | 60.8 | 83 | Y | 125 | 80 |
| 4 | 2 | 79 | 79.42 | 97 | Y | 125 | 95 |
| 5 | 7 | 40 | 44.2 | 10 | N | 170 | 50 |
| 6 | 7 | 47 | 50.71 | 50 | N | 170 | 65 |
| 7 | 7 | 60 | 62.8 | 80 | Y | 170 | 80 |
| 8 | 7 | 79 | 80.47 | 83 | Y | 170 | 95 |
| 9 | 38 | 40 | 62.8 | 20 | N | 210 | 50 |
| 10 | 38 | 47 | 67.14 | 87 | Y | 210 | 65 |
| 11 | 38 | 60 | 75.2 | 30 | N | 210 | 80 |
| 12 | 38 | 79 | 86.98 | 57 | N | 210 | 95 |
| 13 | 47 | 40 | 68.2 | 12 | N | 250 | 50 |
| 14 | 47 | 47 | 71.91 | 40 | N | 250 | 65 |
| 15 | 47 | 60 | 78.8 | 53 | N | 250 | 80 |
| 16 | 47 | 79 | 88.87 | 83 | N | 250 | 95 |

| | | | | | | | |
|---|---|---|---|---|---|---|---|
| α - measurement of synergistic behavior as Y = YES; N = NO β and p- Rate - g ai/ha | | | | | | | |

### 2,4-DC + pyroxasulfone- Hairy beggarticks-28 DAT

| Tmt | X | Y | Expected | observed | synergy^{α} | 2,4-DC^{β} | pyroxasulfone^{ρ} |
|---|---|---|---|---|---|---|---|
| 1 | 35 | 47 | 65.55 | 83 | Y | 125 | 50 |
| 2 | 35 | 63 | 75.95 | 78 | Y | 125 | 65 |
| 3 | 35 | 60 | 74 | 85 | Y | 125 | 80 |
| 4 | 35 | 75 | 83.75 | 82 | N | 125 | 95 |
| 5 | 50 | 47 | 73.5 | 72 | N | 170 | 50 |
| 6 | 50 | 63 | 81.5 | 74 | N | 170 | 65 |
| 7 | 50 | 60 | 80 | 77 | N | 170 | 80 |
| 8 | 50 | 75 | 87.5 | 73 | N | 170 | 95 |
| 9 | 57 | 47 | 77.21 | 84 | Y | 210 | 50 |
| 10 | 57 | 63 | 84.09 | 67 | N | 210 | 65 |
| 11 | 57 | 60 | 82.8 | 81 | N | 210 | 80 |
| 12 | 57 | 75 | 89.25 | 83 | N | 210 | 95 |
| 13 | 52 | 47 | 74.56 | 82 | Y | 250 | 50 |
| 14 | 52 | 63 | 82.24 | 65 | N | 250 | 65 |
| 15 | 52 | 60 | 80.8 | 60 | N | 250 | 80 |
| 16 | 52 | 75 | 88 | 70 | N | 250 | 95 |

| | | | | | | | |
|---|---|---|---|---|---|---|---|
| α - measurement of synergistic behavior as Y = YES; N = NO β and p- Rate - g ai/ha | | | | | | | |

### Example 28- Weed efficacy/crop selectivity with tank-mix combinations of 2,4 DC and metazachlor plus napropamide preemergence (PRE)..

In this example a greenhouse study was conducted to determine the weed efficacy/crop selectivity when 2,4 DC or metazachlor plus napropamide when these herbicides are applied alone (reference) or in three-way combination. The tested weeds in this study are redroot pigweed (*Amaranth retroflexus,* AMARE), Italian ryegrass (*Lolium perenne. multiflorum,* LOLMU), wild mustard (*Sinapis arvensis,* SINAR), annual bluegrass (*Poa annua,* POAAN), wild oat (*Avena fatua,* AVEFA), blackgrass (*Alopecurus myosuroides,* ALOMY), common lambsquarters (*Chenopodium album,* CHEAL), littleseed canarygrass (*Phalaris minor,* PHAMI), common chickweed (*Stellaria media,* STEME), corn poppy (*Papaver rhoeas,* PAPRH*)*, and silky windgrass *(Apera spica-venti,* APESV*)*. The tested crops are wheat and canola.

### Materials and Methods

To determine the efficacy and crop selectivity with 2,4 DC or its potential tank-mix partners, 2,4 DC, metazachlor plus napropamide were applied either alone (reference) or in three-way combinations at the following rates: 2,4 DC (36% SC) at 50, 100, or 200 g ai/ha; Metazachlor (43.1% Butisan^{®} S) at 250, 500, or 750 g ai/ha; and Napropamide (Devrinol^{®} 50DF) at 315 g ai/ha. Additionally, 2,4 DC was applied alone at 400 g ai/ha. Other reference treatments included tank-mix application of clomazone (Command 3ME ^{®}31.4%) plus metazachlor plus napropamide at 100 + 750 + 315 g ai/ha and an application of clomazone (2.13%) plus metazachlor (13%) plus napropamide (13.6%) premix at 1572 g ai/ha. A non-treated check was included as reference standard.

Treatments were applied before the emergence of redroot pigweed, Italian ryegrass, wild oat, blackgrass, littleseed canarygrass, common chickweed, common lambsquarters, corn poppy, wild mustard, annual bluegrass, silky windgrass, canola, and wheat. Plant species were planted in fiber flats (6" X 10" (15 cm X 25 cm)) containing Pennington soil and flats were watered well before application and watered lightly after application. Flats were watered and fertilized routinely after treatment application. Treatments were applied using compressed air track spray chamber at 30 GPA using a TeeJet 8001E nozzle at 40 PSI (280 kPa). Visual percent weed control and percent visual crop injury data were collected at 14, 21, and 28 days after treatment using a scale of 0 (no control/no injury) to 100 (complete plant death). Data (not included) were analyzed using Minitab statistical software at 95% confidence interval.

### Results at 28 DAT:

2,4 DC/ Metazachlor/ Napropamide at all three-way combinations provided good control of redroot pigweed, corn poppy, Italian ryegrass, annual bluegrass, wild oat, lambsquarters, canarygrass, chickweed and silky windgrass. Blackgrass was controlled with eight combinations. No combination was safe on wheat and canola.

2,4 DC alone provided control of pigweed and corn poppy at 400 g, Italian ryegrass at ≥ 200 g, blackgrass and lambsquarters at 400 g, and chickweed at all rates. 2,4 DC caused greater than 10% injury to canola at all rates and 2,4 DC was safe on wheat up to 200 g ai/ha.

Metazachlor plus Napropamide at all combinations provided control of nearly all species at all rates except mustard with metazachlor at ≤ 500 g and napropamide at 315 g and wild oat and blackgrass at the lowest rates of the combination. No combination was safe on canola and wheat.

Clomazone/ Metazachlor / Napropamide three-way (tank-mix/premix) provided Control of all species except wild mustard and blackgrass that were not controlled with premix. Both tank-mix and premix caused severe injury to wheat and canola.

In summary, all 2,4 DC plus metazachlor plus napropamide combinations completely controlled redroot pigweed, corn poppy, Italian ryegrass, annual bluegrass, wild oat, common lambsquarters, littleseed canarygrass, common chickweed, and silky windgrass at 28 DAT. Blackgrass control with eight combinations was greater than or equal to 85%. Injury to wheat was severe with all combinations. 2,4 DC alone controlled pigweed, poppy, blackgrass, lambsquarters at 400 g, Italian ryegrass at 200 g and chickweed at all rates. Metazachlor plus napropamide gave similar control/crop injury as compared to three-way combinations. The following tables highlight the unexpected synergistic results observed in the tested combinations.

### 2,4-DC + metazachlor + napropamide- Wild oat- 28 DAT

| Tmt | X | Y | Expected | observed | synergy^{α} | 2,4-DC^{β} | Metazachlor + Napropamide^{ρ} |
|---|---|---|---|---|---|---|---|
| 1 | 42 | 82 | 89.56 | 90 | Y | 50 | 250 + 315 |
| 2 | 42 | 93 | 95.94 | 95 | N | 50 | 500 + 315 |
| 3 | 42 | 93 | 95.94 | 100 | Y | 50 | 750 + 315 |
| 4 | 43 | 82 | 89.74 | 88 | N | 100 | 250 + 315 |
| 5 | 43 | 93 | 96.01 | 92 | N | 100 | 500 + 315 |
| 6 | 43 | 93 | 96.01 | 91 | N | 100 | 750 + 315 |
| 7 | 43 | 82 | 89.74 | 91 | Y | 200 | 250 + 315 |
| 8 | 43 | 93 | 96.01 | 98 | Y | 200 | 500 + 315 |
| 9 | 43 | 93 | 96.01 | 95 | N | 200 | 750 + 315 |

| | | | | | | | |
|---|---|---|---|---|---|---|---|
| α - measurement of synergistic behavior as Y = YES; N = NO β and p- Rate - g ai/ha | | | | | | | |

### 2,4-DC + metazachlor + napropamide- Blackgrass - 28 DAT

| Tmt | X | Y | Expected | observed | synergy | 2,4-DC^{α} | Metazachlor + Napropamide^{β} |
|---|---|---|---|---|---|---|---|
| 1 | 15 | 82 | 84.7 | 75 | N | 50 | 250 + 315 |
| 2 | 15 | 88 | 89.8 | 95 | Y | 50 | 500 + 315 |
| 3 | 15 | 87 | 88.95 | 96 | Y | 50 | 750 + 315 |
| 4 | 32 | 82 | 87.76 | 91 | Y | 100 | 250 + 315 |
| 5 | 32 | 88 | 91.84 | 90 | N | 100 | 500 + 315 |
| 6 | 32 | 87 | 91.16 | 88 | N | 100 | 750 + 315 |
| 7 | 75 | 82 | 95.5 | 90 | N | 200 | 250 + 315 |
| 8 | 75 | 88 | 97 | 99 | Y | 200 | 500 + 315 |
| 9 | 75 | 87 | 96.75 | 99 | Y | 200 | 750 + 315 |

| | | | | | | | |
|---|---|---|---|---|---|---|---|
| α - measurement of synergistic behavior as Y = YES; N = NO β and p- Rate - g ai/ha | | | | | | | |

### Example 29- Tank-mix weed efficacy/crop selectivity of 2,4 DC with dimethachlor preemergence (PRE).

In this example a greenhouse study was conducted to determine the weed efficacy/crop selectivity of 2,4 DC with dimethachlor. The tested weeds include Italian ryegrass *(Lolium perenne. multiflorum,* LOLMU), wild mustard (*Sinapis arvensis,* SINAR), annual bluegrass (*Poa annua,* POAAN), wild oat (*Avena fatua,* AVEFA), blackgrass *(Alopecurus myosuroides,* ALOMY), common lambsquarters (*Chenopodium album,* CHEAL), littleseed canarygrass (*Phalaris minor,* PHAMI), common chickweed (*Stellaria media,* STEME), corn poppy (*Papaver rhoeas, PAPRH),* redroot pigweed *(Amaranthus retroflexus,* AMARE), silky windgrass *(Apera spica-venti,* APSEV), wild buckwheat (*Polygonum convolvulus,* POLCO). The crops tesed were Wheat and canola.

### Materials and Methods

To determine PRE weed efficacy and crop selectivity, 2,4 DC (36% SC) was applied alone (reference) at 50, 100, or 200 g ai/ha and in combination with dimethachlor (Teridox 48%) at 333, 667, or 1000 g ai/ha. Other reference treatments included the single application of 2,4 DC at 400 g ai/ha, dimethachlor alone at rate mentioned previously, and tank-mix of clomazone (Command 3ME 31.4%) plus dimethachlor at 100 + 1000 g ai/ha. A non-treated check was included as reference standard. Treatments were applied before the emergence of Italian ryegrass, wild oat, wild buckwheat, blackgrass, littleseed canarygrass, common chickweed, common lambsquarters, corn poppy, silky windgrass, redroot pigweed, wild mustard, annual bluegrass, canola, and wheat. Plant species were planted in fiber flats (6" X 10" (15 x 25 cm)) containing Pennington soil and flats were watered well before application and watered lightly after application. Flats were watered and fertilized routinely after treatment application. Treatments were applied using compressed air track spray chamber at 30 GPA using a TeeJet 8001E nozzle at 40 PSI (280 kPa). Visual percent weed control and percent visual crop injury data were collected at 14, 21, and 28 days after treatment using a scale of 0 (no control/no injury) to 100 (complete plant death). Data (not included) were analyzed using Minitab statistical software at 95% confidence interval.

### Result at 28 DAT:

2,4 DC alone gave control of pigweed and Italian ryegrass at ≥200 g ai/ha, corn poppy and wild oat at 400 g, blackgrass at ≥ 100 g, and common chickweed at all rates. 2,4 DC was selective on wheat up to 200 g and on canola up to 100 g. Dimethachlor alone provided control of lambsquarters at 1000 g ai/ha, wild oat, wild buckwheat, littleseed canarygrass, and annual bluegrass at ≥667 g, pigweed, silky windgrass, corn poppy, Italian ryegrass, and chickweed at all rates. Dimethachlor caused 18% injury to canola at 100 g, it was not selective to wheat at any rate.

All combination of 2,4 DC and dimethachlor nearly controlled corn poppy, annual bluegrass, Italian ryegrass, lambsquarters, pigweed, silky windgrass, wild buckwheat, littleseed canarygrass, wild oat, blackgrass, and common chickweed. However, all combinations caused severe injury to wheat (>60%) and to canola at 28 DAT. No combination yielded control of wild mustard.

Clomazone and dimethachlor controlled all species except wild mustard. Tank-mix combination caused severe injury to wheat and canola.

In summary, in most cases, 2,4 DC and dimethachlor tank-mix combinations controlled all weed species at 28 DAT. Almost all combinations resulted in high injury to wheat and canola. 2,4 DC alone at 200 g was selective to wheat and gave control of redroot pigweed, Italian ryegrass, common chickweed, and blackgrass. The following tables highlight the unexpected synergistic results observed in the tested combination.

### 2,4-DC + dimethachlor- Common lambsquarters- 28 DAT

| Tmt | X | Y | Expected | observed | synergy^{α} | 2,4-DC^{β} | Dimethachor^{ρ} |
|---|---|---|---|---|---|---|---|
| 1 | 50 | 80 | 90 | 83 | N | 50 | 333 |
| 2 | 50 | 78 | 89 | 87 | N | 50 | 667 |
| 3 | 50 | 93 | 96.5 | 94 | N | 50 | 100 |
| 4 | 53 | 80 | 90.6 | 88 | N | 100 | 333 |
| 5 | 53 | 78 | 89.66 | 94 | Y | 100 | 667 |
| 6 | 53 | 93 | 96.71 | 100 | Y | 100 | 100 |
| 7 | 65 | 80 | 93 | 97 | Y | 200 | 333 |
| 8 | 65 | 78 | 92.3 | 100 | Y | 200 | 667 |
| 9 | 65 | 93 | 97.55 | 100 | Y | 200 | 100 |

| | | | | | | | |
|---|---|---|---|---|---|---|---|
| α - measurement of synergistic behavior as Y = YES; N = NO β and p- Rate - g ai/ha | | | | | | | |

### 2,4-DC + dimethachlor- Wild oat - 28 DAT

| Tmt | X | Y | Expected | observed | synergy^{α} | 2,4-DC^{β} | Dimethachlor^{ρ} |
|---|---|---|---|---|---|---|---|
| 1 | 18 | 67 | 72.94 | 82 | Y | 50 | 333 |
| 2 | 18 | 85 | 87.7 | 85 | N | 50 | 667 |
| 3 | 18 | 93 | 94.26 | 91 | N | 50 | 100 |
| 4 | 37 | 67 | 79.21 | 85 | Y | 100 | 333 |
| 5 | 37 | 85 | 90.55 | 94 | Y | 100 | 667 |
| 6 | 37 | 93 | 95.59 | 93 | N | 100 | 100 |
| 7 | 57 | 67 | 85.81 | 85 | N | 200 | 333 |
| 8 | 57 | 85 | 93.55 | 87 | N | 200 | 667 |
| 9 | 57 | 93 | 96.99 | 92 | N | 200 | 100 |

| | | | | | | | |
|---|---|---|---|---|---|---|---|
| α - measurement of synergistic behavior as Y = YES; N = NO β and p- Rate - g ai/ha | | | | | | | |

### 2,4-DC + dimethachlor- Wild buckwheat - 28 DAT

| Tmt | X | Y | Expected | observed | synergy^{α} | 2,4- DC^{β} | Dimethachlor^{ρ} |
|---|---|---|---|---|---|---|---|
| 1 | 20 | 67 | 73.6 | 100 | Y | 50 | 333 |
| 2 | 20 | 100 | 100 | 100 | N | 50 | 667 |
| 3 | 20 | 100 | 100 | 100 | N | 50 | 100 |
| 4 | 23 | 67 | 74.59 | 100 | Y | 100 | 333 |
| 5 | 23 | 100 | 100 | 100 | N | 100 | 667 |
| 6 | 23 | 100 | 100 | 100 | N | 100 | 100 |
| 7 | 33 | 67 | 77.89 | 100 | Y | 200 | 333 |
| 8 | 33 | 100 | 100 | 100 | N | 200 | 667 |
| 9 | 33 | 100 | 100 | 100 | N | 200 | 100 |

| | | | | | | | |
|---|---|---|---|---|---|---|---|
| α - measurement of synergistic behavior as Y = YES; N = NO β and p- Rate - g ai/ha | | | | | | | |

### 2,4-DC + dimethachlor- Littleseed canarygrass - 28 DAT

| Tmt | X | Y | Expected | observed | synergy^{α} | 2,4- DC^{β} | Dimethachlor^{ρ} |
|---|---|---|---|---|---|---|---|
| 1 | 20 | 75 | 80 | 90 | Y | 50 | 333 |
| 2 | 20 | 90 | 92 | 99 | Y | 50 | 667 |
| 3 | 20 | 100 | 100 | 100 | N | 50 | 100 |
| 4 | 39 | 75 | 84.75 | 82 | N | 100 | 333 |
| 5 | 39 | 90 | 93.9 | 99 | Y | 100 | 667 |
| 6 | 39 | 100 | 100 | 100 | N | 100 | 100 |
| 7 | 70 | 75 | 92.5 | 96 | Y | 200 | 333 |
| 8 | 70 | 90 | 97 | 99 | Y | 200 | 667 |
| 9 | 70 | 100 | 100 | 100 | N | 200 | 100 |

| | | | | | | | |
|---|---|---|---|---|---|---|---|
| α - measurement of synergistic behavior as Y = YES; N = NO β and p- Rate - g ai/ha | | | | | | | |

### 2,4-DC + dimethachlor- Blackgrass - 28 DAT

| Tmt | X | Y | Expected | observed | synergy^{α} | 2,4- DC^{β} | Dimethachlor^{ρ} |
|---|---|---|---|---|---|---|---|
| 1 | 58 | 57 | 81.94 | 82 | Y | 50 | 333 |
| 2 | 58 | 77 | 90.34 | 87 | N | 50 | 667 |
| 3 | 58 | 80 | 91.6 | 96 | Y | 50 | 100 |
| 4 | 91 | 57 | 96.13 | 88 | N | 100 | 333 |
| 5 | 91 | 77 | 97.93 | 99 | Y | 100 | 667 |
| 6 | 91 | 80 | 98.2 | 100 | Y | 100 | 100 |
| 7 | 97 | 57 | 98.71 | 100 | Y | 200 | 333 |
| 8 | 97 | 77 | 99.31 | 100 | Y | 200 | 667 |
| 9 | 97 | 80 | 99.4 | 100 | Y | 200 | 100 |

| | | | | | | | |
|---|---|---|---|---|---|---|---|
| α - measurement of synergistic behavior as Y = YES; N = NO; β and p- Rate - g ai/ha | | | | | | | |

### 2,4-DC + dimethachlor- Annual bluegrass - 28 DAT

| Tmt | X | Y | Expected | observed | synergy^{α} | 2,4- DC^{β} | Dimethachlor^{ρ} |
|---|---|---|---|---|---|---|---|
| 1 | 23 | 82 | 86.14 | 89 | Y | 50 | 333 |
| 2 | 23 | 100 | 100 | 100 | N | 50 | 667 |
| 3 | 23 | 100 | 100 | 100 | N | 50 | 100 |
| 4 | 30 | 82 | 87.4 | 85 | N | 100 | 333 |
| 5 | 30 | 100 | 100 | 100 | N | 100 | 667 |
| 6 | 30 | 100 | 100 | 100 | N | 100 | 100 |
| 7 | 47 | 82 | 90.46 | 100 | Y | 200 | 333 |
| 8 | 47 | 100 | 100 | 100 | N | 200 | 667 |
| 9 | 47 | 100 | 100 | 100 | N | 200 | 100 |

| | | | | | | | |
|---|---|---|---|---|---|---|---|
| α - measurement of synergistic behavior as Y = YES; N = NO β and p- Rate - g ai/ha | | | | | | | |

### Example 30. Weed Control with 2,4-DC, and Dimethachlor plus Metazachlor Tank-mix Combinations.

In this example a greenhouse study was conducted to determine the weed efficacy of 2,4-DC, with 2,4-DC alone (reference) or in three-way combination with dimethachlor plus metazachlor as preemergence (PRE) treatment against the following weeds: Italian ryegrass *(Lolium perenne. multiflorum,* LOLMU), wild mustard (*Sinapis arvensis,* SINAR), annual bluegrass (*Poa annua,* POAAN), wild oat (*Avena fatua,* AVEFA), blackgrass (*Alopecurus myosuroides,* ALOMY), common lambsquarters (*Chenopodium album,* CHEAL), littleseed canarygrass (*Phalaris minor,* PHAMI), common chickweed (*Stellaria media,* STEME), corn poppy (*Papaver rhoeas, PAPRH),* redroot pigweed *(Amaranthus retroflexus,* AMARE), silky windgrass *(Apera spica-venti,* APSEV).

### Methods:

2,4-DC (SC 36%) was applied at 50, 100, or 200 g ai/ha alone or as tank-mix with dimethachlor (48%) and metazachlor (43.1%). Dimethachlor rates for alone or tank-mix application were 500 or 1000 g ai/ha and metazachlor rates were 375 or 750 g ai/ha. A non-treated check was included as reference standard. Treatments were applied before the emergence of Italian ryegrass, wild oat, blackgrass, littleseed canarygrass, common chickweed, common lambsquarters, corn poppy, silky windgrass, redroot pigweed, wild mustard, annual bluegrass, canola, and wheat. Plant species were planted in fiber flats (6" X 10" (15 cm X 25 cm)) containing Pennington soil and flats were watered well before application and watered lightly after application. Flats were watered and fertilized routinely after treatment application. Treatments were applied using compressed air track spray chamber at 30 GPA using a TeeJet 8001E nozzle at 40 PSI (280 kPa). Visual percent weed control and percent visual crop injury data were collected at 14, 21, and 28 days after treatment using a scale of 0 (no control/no injury) to 100 (complete plant death). Data (not included) were analyzed using Minitab statistical software at 95% confidence interval.

### Results:

2,4-DC alone gave control of pigweed, corn poppy, and Italian ryegrass at ≥200 g ai/ha, wild oat at 400 g, blackgrass at ≥ 100 g, and common chickweed at all rates. 2,4-DC caused 11% injury to wheat at 200 g and 11% injury to canola at 100 g. (Dimethachlor + metazachlor) alone provided control of all weed species except mustard. All combinations were not safe on wheat; all combinations showed not more than 15% injury on canola except one with highest rates which caused 28% injury. All combinations of 2,4-DC + dimethachlor + metazachlor gave control of all weed species except wild mustard which controlled with only four combinations. All combinations caused severe injury to wheat (>80%) while injury to canola was >20%.

In summary, all three-way tank mix combinations of 2, 4 DC plus dimethachlor plus metazachlor controlled all weed species except mustard at 28 DAT. Almost all combinations resulted in high injury to wheat and canola. 2, 4 DC alone at 100 g and 200 g was selective to wheat and canola, respectively. 2, 4 DC at 200 g controlled blackgrass, Italian ryegrass, pigweed, corn poppy, and chickweed. The following table highlights the unexpected synergistic results observed in the tested combination.

### 2,4-DC + dimethachlor + metazachlor- Wild mustard- 28 DAT

| Tmt | X | Y | Expected | observed | synergy^{α} | 2,4-DC^{β} | Metazachlor + Napropamide^{ρ} |
|---|---|---|---|---|---|---|---|
| 1 | 10 | 63 | 66.7 | 82 | Y | 50 | 500 + 375 |
| 2 | 10 | 73 | 75.7 | 74 | N | 50 | 1000 + 375 |
| 3 | 10 | 73 | 75.7 | 83 | Y | 50 | 500 + 750 |
| 4 | 10 | 76 | 78.4 | 85 | Y | 50 | 1000 + 750 |
| 5 10 | 25 | 63 | 72.25 | 75 | Y | 100 | 500 + 375 |
| 6 | 25 | 73 | 79.75 | 82 | Y | 100 | 1000 + 375 |
| 7 | 25 | 73 | 79.75 | 85 | Y | 100 | 500 + 750 |
| 8 | 25 | 76 | 82 | 87 | Y | 100 | 1000 + 750 |
| 9 | 28 | 63 | 73.36 | 78 | Y | 200 | 500 + 375 |
| | 28 | 73 | 80.56 | 73 | N | 200 | 1000 + 375 |
| 11 | 28 | 73 | 80.56 | 73 | N | 200 | 500 + 750 |
| 12 | 28 | 76 | 82.72 | 90 | Y | 200 | 1000 + 750 |

| | | | | | | | |
|---|---|---|---|---|---|---|---|
| α - measurement of synergistic behavior as Y = YES; N = NO β and p- Rate - g ai/ha | | | | | | | |

### Example 32. Weed Control with 2,4-DC, and Pyroxasulfone plus Sulfentrazone Tank-mix Combinations.

In this example a greenhouse study was conducted to determine the weed efficacy of 2,4-DC, with 2,4-DC alone (reference) or in combination with pyroxasulfone plus sulfentrazone as preemergence (PRE) treatment against the following weeds: Italian ryegrass *(Lolium perenne. multiflorum,* LOLMU), field bindweed (*Convolvulus* arvensis, CONAR), green foxtail (*Setaria viridis,* SETVI), quackgrass (*Elymus repens,* AGGRE), common chickweed (*Stellaria media,* STEME), wild oat (*Avena fatua,* AVEFA), littleseed canarygrass (*Phalaris minor,* PHAMI), white clover (*Trifolium repens,* TRFRE), dandelion (*Taraxacum officinale,* TAROF), yellow nutsedge (*Cyperus esculentus,* CYPES), and redroot pigweed (*Amaranthus retroflexus,* AMARE).

### Methods:

2,4-DC (SC 36%) was applied at 0, 50, 100, or 200 g ai/ha alone or as tank-mix with pyroxasulfone (WG 85%) at 30, 60 or 90 g ai/ha and sulfentrazone at 105 or 210 g ai/ha. A non-treated check was included as reference standard. Other treatments included single application of 2,4-DC at 400 g and three-way tank-mix application of clomazone (Command 3ME 31.4%) at 200 g with pyroxasulfone at 90 g plus sulfentrazone either at 105 or 210 g. Treatments were applied at the time of planting to Italian ryegrass, green foxtail, littleseed canarygrass, wild oat, quackgrass, dandelion, common chickweed, white clover, yellow nutsedge, redroot pigweed, field bindweed, canola, and wheat. Plant species were planted in fiber flats containing Pennington soil and flats were watered well before application and watered lightly after application. Flats were watered and fertilized routinely after treatment application. Treatments were applied using compressed air track spray chamber at 30 GPA using a TeeJet 8001E nozzle at 40 PSI (280 kPa). Visual percent weed control and percent visual crop injury were recorded at 14, 21, and 28 days after treatment using a scale of 0 (no control/no injury) to 100 (complete plant death). Data (not included) were analyzed using Minitab statistical software at 95% confidence interval.

### Results:

All eighteen three-way combinations gave control (≥85%) of Italian ryegrass, common chickweed, field bindweed, green foxtail, white clover, wild oat, littleseed canarygrass, redroot pigweed, and dandelion at 28 DAT. Quackgrass control was achieved with 13 combinations while yellow nutsedge was controlled with 10 combinations. All combinations were unsafe (>10% injury) on wheat at 21 DAT and canola at 28 DAT.

2,4-DC alone controlled Italian ryegrass and wild oat at 400 g; common chickweed was controlled at all rates; green foxtail was controlled at ≥100 g; littleseed canarygrass and redroot pigweed were controlled at 200 g. Control of quackgrass, field bindweed, white clover, and yellow nutsedge did not reach 85% with any rate. 2,4-DC was safe on wheat at ≤100 g.

All two-way tank-mix combinations of pyroxasulfone plus sulfentrazone controlled Italian ryegrass, common chickweed, field bindweed, green foxtail, white clover, littleseed canarygrass, redroot pigweed, and dandelion. Quackgrass was controlled with three combinations. Wild oat control was noted when pyroxasulfone was added either at 60 or 90 g with either rate of sulfentrazone. Control of yellow nutsedge was seen with sulfentrazone at 210 g irrespective the rates of pyroxasulfone. All combinations were not safe on wheat at 21 DAT and canola at 28 DAT.

In summary, all combinations of 2,4 DC plus pyroxasulfone plussulfentrazone and all combinations of pyroxasulfone plus sulfentrazone provided control of Italian ryegrass, common chickweed, field bindweed, green foxtail, white clover, littleseed canarygrass, redroot pigweed, and dandelion. 2, 4 DC was safe on wheat up to 100 g ai/ha and it controlled Italian ryegrass (400 g), common chickweed (all rates), green foxtail (≥100 g), wild oat (400 g), littleseed canarygrass (≥200 g), pigweed (≥200 g), and dandelion (all rates). The table below highlights unexpected synergistic effects of the tested combinations.

### 2,4-DC + Pyroxasulfone + Sulfentrazone - Quackgrass-28 DAT

| Tmt | X | Y | Expected | observed | synergy^{α} | 2,4-DC^{β} | Pyroxasulfone + Sulfentrazone^{ρ} |
|---|---|---|---|---|---|---|---|
| 1 | 0 | 78 | 78 | 85 | Y | 50 | 30 + 105 |
| 2 | 0 | 90 | 90 | 85 | N | 50 | 60 + 105 |
| 3 | 0 | 93 | 93 | 88 | N | 50 | 90 + 105 |
| 4 | 0 | 80 | 80 | 80 | N | 50 | 30 + 210 |
| 5 | 0 | 82 | 82 | 90 | Y | 50 | 60 + 210 |
| 6 | 0 | 96 | 96 | 94 | N | 50 | 90 + 210 |
| 7 | 7 | 78 | 79.54 | 83 | Y | 100 | 30 + 105 |
| 8 | 7 | 90 | 90.7 | 85 | N | 100 | 60 + 105 |
| 9 | 7 | 93 | 93.49 | 95 | Y | 100 | 90 + 105 |
| 10 | 7 | 80 | 81.4 | 79 | N | 100 | 30 + 210 |
| 11 | 7 | 82 | 83.26 | 78 | N | 100 | 60 + 210 |
| 12 | 7 | 96 | 96.28 | 88 | N | 100 | 90 + 210 |
| 13 | 10 | 78 | 80.2 | 83 | Y | 200 | 30 + 105 |
| 14 | 10 | 90 | 91 | 92 | Y | 200 | 60 + 105 |
| 15 | 10 | 93 | 93.7 | 88 | N | 200 | 90 + 105 |
| 16 | 10 | 80 | 82 | 88 | Y | 200 | 30 + 210 |
| 17 | 10 | 82 | 83.8 | 93 | Y | 200 | 60 + 210 |
| 18 | 10 | 96 | 96.4 | 95 | N | 200 | 90 + 210 |

| | | | | | | | |
|---|---|---|---|---|---|---|---|
| α - measurement of synergistic behavior as Y = YES; N = NO β and p- Rate - g ai/ha | | | | | | | |

### 2,4-DC + Pyroxasulfone + Sulfentrazone - Wild oat-28 DAT

| Tmt | X | Y | Expected | observed | synergy^{α} | 2,4-DC^{β} | Pyroxasulfone+ Sulfentrazone^{ρ} |
|---|---|---|---|---|---|---|---|
| 1 | 28 | 72 | 79.84 | 98 | Y | 50 | 30 + 105 |
| 2 | 28 | 95 | 96.4 | 97 | Y | 50 | 60 + 105 |
| 3 | 28 | 95 | 96.4 | 100 | Y | 50 | 90 + 105 |
| 4 | 28 | 72 | 79.84 | 99 | Y | 50 | 30 + 210 |
| 5 | 28 | 90 | 92.8 | 100 | Y | 50 | 60 + 210 |
| 6 | 28 | 97 | 97.84 | 100 | Y | 50 | 90 + 210 |
| 7 | 28 | 72 | 79.84 | 94 | Y | 100 | 30 + 105 |
| 8 | 28 | 95 | 96.4 | 100 | Y | 100 | 60 + 105 |
| 9 | 28 | 95 | 96.4 | 97 | Y | 100 | 90 + 105 |
| 10 | 28 | 72 | 79.84 | 94 | Y | 100 | 30 + 210 |
| 11 | 28 | 90 | 92.8 | 100 | Y | 100 | 60 + 210 |
| 12 | 28 | 97 | 97.84 | 97 | N | 100 | 90 + 210 |
| 13 | 67 | 72 | 90.76 | 96 | Y | 200 | 30 + 105 |
| 14 | 67 | 95 | 98.35 | 98 | N | 200 | 60 + 105 |
| 15 | 67 | 95 | 98.35 | 100 | Y | 200 | 90 + 105 |
| 16 | 67 | 72 | 90.76 | 100 | Y | 200 | 30 + 210 |
| 17 | 67 | 90 | 96.7 | 97 | Y | 200 | 60 + 210 |
| 18 | 67 | 97 | 99.01 | 97 | N | 200 | 90 + 210 |

| | | | | | | | |
|---|---|---|---|---|---|---|---|
| α - measurement of synergistic behavior as Y = YES; N = NO β and p- Rate - g ai/ha | | | | | | | |

### 2,4-DC + Pyroxasulfone + Sulfentrazone - Yellow nutsedge-28 DAT

| Tmt | X | Y | Expected | observed | synergy^{α} | 2,4-DC^{β} | Pyroxasulfone + Sulfentrazone^{ρ} |
|---|---|---|---|---|---|---|---|
| 2 | 0 | 73 | 73 | 80 | Y | 50 | 30 + 105 |
| 2 | 0 | 83 | 83 | 88 | Y | 50 | 60 + 105 |
| 3 | 0 | 80 | 80 | 78 | N | 50 | 90 + 105 |
| 4 | 0 | 92 | 92 | 90 | N | 50 | 30 + 210 |
| 5 | 0 | 85 | 85 | 87 | Y | 50 | 60 + 210 |
| 6 | 0 | 100 | 100 | 91 | N | 50 | 90 + 210 |
| 7 | 0 | 73 | 73 | 73 | N | 100 | 30 + 105 |
| 8 | 0 | 83 | 83 | 80 | N | 100 | 60 + 105 |
| 9 | 0 | 80 | 80 | 76 | N | 100 | 90 + 105 |
| 10 | 0 | 92 | 92 | 91 | N | 100 | 30 + 210 |
| 11 | 0 | 85 | 85 | 91 | Y | 100 | 60 + 210 |
| 12 | 0 | 100 | 100 | 90 | N | 100 | 90 + 210 |
| 13 | 17 | 73 | 77.59 | 83 | Y | 200 | 30 + 105 |
| 14 | 17 | 83 | 85.89 | 65 | N | 200 | 60 + 105 |
| 15 | 17 | 80 | 83.4 | 95 | Y | 200 | 90 + 105 |
| 16 | 17 | 92 | 93.36 | 92 | N | 200 | 30 + 210 |
| 17 | 17 | 85 | 87.55 | 80 | N | 200 | 60 + 210 |
| 18 | 17 | 100 | 100 | 95 | N | 200 | 90 + 210 |

| | | | | | | | |
|---|---|---|---|---|---|---|---|
| α - measurement of synergistic behavior as Y = YES; N = NO β and p- Rate - g ai/ha | | | | | | | |

### Example 33. Weed Control with 2,4-DC, and Fluthiacet-Methyl plus Pyroxasulfone Tank-mix Combinations.

In this example a greenhouse study was conducted to determine the weed efficacy of 2,4-DC, with 2,4-DC alone (reference) or in combination with and Fluthiacet-Methyl plus Pyroxasulfone as preemergence treatment against the following weeds: Palmer amaranth (*Amaranthus palmeri,* AMAPA); Pennsylvania smartweed (*Polygonum pensylvanicum,* POLPY); velvetleaf (*Abutilon theophrasti,* ABUTH); green foxtail (*Setaria viridis,* SETVI); morningglory spp. (*Ipomoea spp.*); Italian ryegrass (*Lolium perenne L. ssp. multiflorum,* LOLMU); prickly sida (*Sida spinosa,* SIDSP); yellow nutsedge (*Cyperus esculentus,* CYPES).

### Methods:

2,4-DC (46.2%) was applied at 31, 63, 125, 350 or 375 g ai/ha alone or as tank-mix with Fluthiacet-methyl (CADET^{®}, 10.3%) at 4.9 g ai/ha and pyroxasulfone (85WG, 85%) at 30, 60, or 90 g ai/ha were applied in combination alone or with 2,4-DC at above mentioned rates. ANTHEM^{®} (fluthiacet-methyl, 0.69% plus pyroxasulfone, 22.61%) was included as a standard at labeled rate, Fluthiacet-methyl at 4.9 g ai/ha and pyroxasulfone at 165 g ai/ha. A non-treated check was included as reference standard. The following weeds were screened, Palmer amaranth, Pennsylvania smartweed, velvetleaf, green foxtail, morningglory, Italian ryegrass, prickly sida, and yellow nutsedge. Crops screened were cotton, lentil, mung bean, bush bean, and cowpea. All plants were direct seeded into 6" x 10" (15 cm x 25 cm) fiber flats utilizing Pennington soil. Flats were watered after seeding but prior to treatment. After application flats were placed in the greenhouse and lightly watered. Thereafter flats were watered and fertilized routinely. Treatments were applied using compressed air in a track spray chamber at 30 GPA using a TeeJet 8001E nozzle at 40 PSI (280 kPa). Visual percent weed control and crop injury were recorded at 14, 21, and 28 days after treatment (DAT), using a scale of 0 (no control/no injury) to 100 (complete plant death). Data (not included) were analyzed using Minitab statistical software at 95% confidence interval.

### Results:

All eighteen three-way combinations gave control (≥85%) of Italian ryegrass, common chickweed, field bindweed, green foxtail, white clover, wild oat, littleseed canarygrass, redroot pigweed, and dandelion at 28 DAT. Quackgrass control was achieved with 13 combinations while yellow nutsedge was controlled with 10 combinations. All combinations were unsafe (>10% injury) on wheat at 21 DAT and canola at 28 DAT.

Combinations of 2,4-DC plus Fluthiacet-methyl and pyroxasulfone applied PRE, controlled prickly sida, Palmer amaranth, green foxtail, and Italian ryegrass with all tank-mix combinations. Pennsylvania smartweed was controlled with 14 of 15 combinations, velvetleaf with 11 combinations, morningglory with 1 combination and yellow nutsedge was not controlled by any combination. When applied alone at 31 g ai/ha, 2,4-DC controlled prickly sida, at 125 g controlled green foxtail. Pennsylvania smartweed and Italian ryegrass were controlled at 250 g; Palmer amaranth and velvet leaf at 375 g of 2,4-DC. Fluthiacet-methyl at 4.9 g plus pyroxasulfone at 30 g controlled prickly sida, Palmer amaranth, green foxtail, and Italian ryegrass, Fluthiacet-methyl at 4.9 g plus pyroxasulfone at 60 g controlled Pennsylvania smartweed and velvetleaf, Fluthiacet-methyl at 4.9 g plus pyroxasulfone at 90 g controlled morningglory. ANTHEM^{®} controlled all weeds in the assay.

2, 4 DC plus Fluthiacet-methyl plus pyroxasulfone in was generally safe on cotton when pyroxasulfone was applied at rates less than 90 g. Mung bean was safe with 5 of 15 combinations of 2, 4 DC plus Fluthiacet-methyl plus pyroxasulfone, cowpea was safe with 4 combinations, bush bean with 3 combinations, and lentil was injured with all combinations. 2, 4 DC applied alone PRE was safe on cotton, mung bean, bush bean, and cowpea at all rates, lentil was not safe at any rate. Fluthiacet-methyl at 4.9 g plus pyroxasulfone at 30 g was safe on mung bean and cowpea, Fluthiacet-methyl at 4.9 g plus pyroxasulfone up to 60 g was safe on cotton. Bush bean and lentil were injured by all treatments of Fluthiacet-methyl and pyroxasulfone. Anthem was not safe on any crop in the assay

In summary, 2, 4 DC alone controlled prickly sida at 31 g ai/ha, green foxtail at 125 g, Pennsylvania smartweed and Italian ryegrass at 250 g and Palmer amaranth and velvetleaf at 375 g. 2, 4 DC plus fluthiacet-methyl at 4.9 g and pyroxasulfone at 30, 60, or 90 g, controlled prickly sida, Palmer amaranth, green foxtail and Italian ryegrass with all combinations (Anthem, included as a standard at labeled rate of 9 fl oz/A, controlled all species in the assay.

2, 4 DC applied alone was safe on cotton, mung bean, cowpea and bush bean at all rates, while not safe on lentil at any rate. Fluthiacet-methyl plus pyroxasulfone injured mung bean and cowpea with pyroxasulfone at 60 g, injured cotton with pyroxasulfone at 90 g and injured lentil and bush bean at all rates. Anthem at labeled rate injured all crops.

The table below highlights unexpected synergistic effects of the tested combinations.

### 2,4-DC + Fluthiacet-methyl + Pyroxasulfone - Pennsylvania Smartweed-28 DAT

| Tmt | X | Y | Expected | observed | synergy^{α} | 2,4-DC^{β} | Fluthiacet-methyl + Pyroxasulfone^{ρ} |
|---|---|---|---|---|---|---|---|
| 1 | 10 | 43 | 48.7 | 70 | Y | 31 | 4.9 + 30 |
| 2 | 10 | 100 | 100 | 93 | N | 31 | 4.9 + 60 |
| 3 | 10 | 100 | 100 | 97 | N | 31 | 4.9 + 90 |
| 4 | 23 | 43 | 56.11 | 94 | Y | 63 | 4.9 + 30 |
| 5 | 23 | 100 | 100 | 97 | N | 63 | 4.9 + 60 |
| 6 | 23 | 100 | 100 | 99 | N | 63 | 4.9 + 90 |
| 7 | 57 | 43 | 75.49 | 100 | Y | 125 | 4.9 + 30 |
| 8 | 57 | 100 | 100 | 100 | N | 125 | 4.9 + 60 |
| 9 | 57 | 100 | 100 | 100 | N | 125 | 4.9 + 90 |
| 10 | 100 | 43 | 100 | 100 | N | 250 | 4.9 + 30 |
| 11 | 100 | 100 | 100 | 100 | N | 250 | 4.9 + 60 |
| 12 | 100 | 100 | 100 | 100 | N | 250 | 4.9 + 90 |
| 13 | 99 | 43 | 99.43 | 100 | Y | 375 | 4.9 + 30 |
| 14 | 99 | 100 | 100 | 100 | N | 375 | 4.9 + 60 |
| 15 | 99 | 100 | 100 | 100 | N | 375 | 4.9 + 90 |

| | | | | | | | |
|---|---|---|---|---|---|---|---|
| α - measurement of synergistic behavior as Y = YES; N = NO β and p- Rate - g ai/ha | | | | | | | |

### 2,4-DC + Fluthiacet-methyl + Pyroxasulfone - Velvetleaf-28 DAT

| Tmt | X | Y | Expected | observed | synergy^{α} | 2,4-DC^{β} | Fluthiacet-methyl + Pyroxasulfone^{ρ} |
|---|---|---|---|---|---|---|---|
| 1 | 7 | 62 | 64.66 | 47 | N | 31 | 4.9 + 30 |
| 2 | 7 | 98 | 98.14 | 77 | N | 31 | 4.9 + 60 |
| 3 | 7 | 98 | 98.14 | 95 | N | 31 | 4.9 + 90 |
| 4 | 23 | 62 | 70.74 | 65 | N | 63 | 4.9 + 30 |
| 5 | 23 | 98 | 98.46 | 100 | Y | 63 | 4.9 + 60 |
| 6 | 23 | 98 | 98.46 | 99 | Y | 63 | 4.9 + 90 |
| 7 | 27 | 62 | 72.26 | 97 | Y | 125 | 4.9 + 30 |
| 8 | 27 | 98 | 98.54 | 78 | N | 125 | 4.9 + 60 |
| 9 | 27 | 98 | 98.54 | 99 | Y | 125 | 4.9 + 90 |
| 10 | 30 | 62 | 73.4 | 93 | Y | 250 | 4.9 + 30 |
| 11 | 30 | 98 | 98.6 | 99 | Y | 250 | 4.9 + 60 |
| 12 | 30 | 98 | 98.6 | 99 | Y | 250 | 4.9 + 90 |
| 13 | 89 | 62 | 95.82 | 99 | Y | 375 | 4.9 + 30 |
| 14 | 89 | 98 | 99.78 | 100 | Y | 375 | 4.9 + 60 |
| 15 | 89 | 98 | 99.78 | 99 | N | 375 | 4.9 + 90 |

| | | | | | | | |
|---|---|---|---|---|---|---|---|
| α - measurement of synergistic behavior as Y = YES; N = NO β and p- Rate - g ai/ha | | | | | | | |

### Example 34. Weed Control with 2,4-DC and Napropamide Tank-mix Combinations.

In this example a greenhouse study was conducted to determine the weed efficacy of 2,4-DC, with 2,4-DC alone (reference) or in combination with napropamide as preemergence (PRE) treatment against the following weeds: Littleseed canarygrass (*Phalaris minor,* PHAMI); common lambsquarters (*Chenopodium album,* CHEAL); blackgrass (*Alopecurus myosuroides,* ALOMY); wild buckwheat (*Polygonum convolvulus,* POLCO); wild oat (*Avena fatua,* AVEFA); annual bluegrass (*Poa annua,* POANN); common chickweed (*Stellaria media,* STEME); Italian ryegrass (*Lolium perenne L. ssp. multiflorum,* LOLMU); wild mustard (*Sinapis arvensis,* SINAR).

### Methods:

2,4-DC (SC 36%) was applied at 31.2, 62.5, 125, 250, or 375 g ai/ha alone or as tank-mix with napropamide (Devrinol^{®}-50DF) at 315, 630, or 1260 g ai/ha. A non-treated check was included as reference standard. Clomazone (Command 3ME^{®}, 31.4%) plus napropamide at 1260 g ai/ha was added as standard. Littleseed canarygrass, common lambsquarters, blackgrass, wild buckwheat, wild oat, annual bluegrass, common chickweed, Italian ryegrass, wild mustard, and canola were direct seeded into 6x10" (15 x 25 cm) fiber flats filled with Pennington soil. Flats were watered after seeding but prior to treatment. After application flats were placed in the greenhouse and lightly watered. Thereafter flats were watered and fertilized routinely. Treatments were applied using compressed air in a track spray chamber at 30 GPA using a TeeJet 8001E nozzle at 40 PSI (280 kPa). Visual percent weed control/crop injury were recorded at 14, 21, and 27 days after treatment (DAT), using a scale of 0 (no control/no injury) to 100 (complete plant death). Data (not included) were analyzed using Minitab statistical software at 95% confidence interval.

### Results:

2,4 DC plus napropamide provided control of common chickweed with all tank-mix combinations. Annual bluegrass was controlled with 11 of 15 tank-mixes, littleseed canarygrass and common lambsquarters were controlled by 12, Italian ryegrass by 10, blackgrass by 9, and wild buckwheat and wild oat by 1 combination. Canola was safe with 3 tank-mixes of 2,4-DC plus napropamide. 2,4-DC applied alone at 31.2 g ai/ha controlled common chickweed, at 125 g controlled common lambsquarters and injured canola, at 250 g controlled blackgrass and Italian ryegrass. Applied alone 2,4-DC failed to control littleseed canarygrass, wild buckwheat, wild oat, annual bluegrass, and wild mustard. Napropamide alone at 630 g controlled littleseed canarygrass, at 1260 g controlled common lambsquarters, annual bluegrass and Italian ryegrass and was safe on canola at all rates. Clomazone at 375 g plus napropamide at 1260 g controlled all weeds except wild mustard and injured canola.

In summary, 2, 4 DC napropamide controlled common chickweed at all rates, littleseed canarygrass, common lambsquarters and annual bluegrass with most rates, and blackgrass and Italian ryegrass with all tank-mix combinations with 2, 4 DC applied at ≥125 g. 2, 4 DC alone controlled common chickweed at all rates, common lambsquarters at 125 g and blackgrass and Italian ryegrass at 250 g. Napropamide alone controlled littleseed canarygrass at 630 g, and common lambsquarters, annual bluegrass and Italian ryegrass at 1260 g. Canola was not injured by 3 tank-mix combinations, when 2, 4 DC was applied alone at ≤ 62.5 g, or by napropamide alone at all three rates. Clomazone plus napropamide include as standard for comparison, controlled all weeds except wild mustard and was not safe on canola. The table below highlights unexpected synergistic effects of the tested combinations.

### 2,4-DC + napropamide - Littleseed canarygrass-28 DAT

| Tmt | X | Y | Expected | observed | synergy^{α} | 2,4-DC^{β} | Napropamide^{ρ} |
|---|---|---|---|---|---|---|---|
| 1 | 8 | 50 | 54 | 84 | Y | 31 | 315 |
| 2 | 8 | 87 | 88.04 | 93 | Y | 31 | 630 |
| 3 | 8 | 100 | 100 | 96 | N | 31 | 1260 |
| 4 | 12 | 50 | 56 | 78 | Y | 63 | 315 |
| 5 | 12 | 87 | 88.56 | 96 | Y | 63 | 630 |
| 6 | 12 | 100 | 100 | 100 | N | 63 | 1260 |
| 7 | 18 | 50 | 59 | 77 | Y | 125 | 315 |
| 8 | 18 | 87 | 89.34 | 98 | Y | 125 | 630 |
| 9 | 18 | 100 | 100 | 98 | N | 125 | 1260 |
| 10 | 27 | 50 | 63.5 | 88 | Y | 250 | 315 |
| 11 | 27 | 87 | 90.51 | 95 | Y | 250 | 630 |
| 12 | 27 | 100 | 100 | 100 | N | 250 | 1260 |
| 13 | 53 | 50 | 76.5 | 87 | Y | 375 | 315 |
| 14 | 53 | 87 | 93.89 | 90 | N | 375 | 630 |
| 15 | 53 | 100 | 100 | 99 | N | 375 | 1260 |

| | | | | | | | |
|---|---|---|---|---|---|---|---|
| α - measurement of synergistic behavior as Y = YES; N = NO β and p- Rate - g ai/ha | | | | | | | |

### 2,4-DC + napropamide - Common lambsquarters- 28DAT

| Tmt | X | Y | Expected | observed | synergy^{α} | 2,4-DC^{β} | Napropamide^{ρ} |
|---|---|---|---|---|---|---|---|
| 1 | 28 | 50 | 64 | 43 | N | 31 | 315 |
| 2 | 28 | 73 | 80.56 | 87 | Y | 31 | 630 |
| 3 | 28 | 91 | 93.52 | 89 | N | 31 | 1260 |
| 4 | 43 | 50 | 71.5 | 60 | N | 63 | 315 |
| 5 | 43 | 73 | 84.61 | 85 | Y | 63 | 630 |
| 6 | 43 | 91 | 94.87 | 90 | N | 63 | 1260 |
| 7 | 85 | 50 | 92.5 | 83 | N | 125 | 315 |
| 8 | 85 | 73 | 95.95 | 94 | N | 125 | 630 |
| 9 | 85 | 91 | 98.65 | 94 | N | 125 | 1260 |
| 10 | 91 | 50 | 95.5 | 92 | N | 250 | 315 |
| 11 | 91 | 73 | 97.57 | 94 | N | 250 | 630 |
| 12 | 91 | 91 | 99.19 | 97 | N | 250 | 1260 |
| 13 | 93 | 50 | 96.5 | 96 | N | 375 | 315 |
| 14 | 93 | 73 | 98.11 | 97 | N | 375 | 630 |
| 15 | 93 | 91 | 99.37 | 98 | N | 375 | 1260 |

| | | | | | | | |
|---|---|---|---|---|---|---|---|
| α - measurement of synergistic behavior as Y = YES; N = NO β and p- Rate - g ai/ha | | | | | | | |

### 2,4-DC + napropamide - Blackgrass-28 DAT

| Tmt | X | Y | Expected | observed | synergy^{α} | 2,4-DC^{β} | Napropamide^{ρ} |
|---|---|---|---|---|---|---|---|
| 1 | 10 | 5 | 14.5 | 18 | Y | 31 | 315 |
| 2 | 10 | 7 | 16.3 | 62 | Y | 31 | 630 |
| 3 | 10 | 15 | 23.5 | 67 | Y | 31 | 1260 |
| 4 | 18 | 5 | 22.1 | 70 | Y | 63 | 315 |
| 5 | 18 | 7 | 23.74 | 72 | Y | 63 | 630 |
| 6 | 18 | 15 | 30.3 | 83 | Y | 63 | 1260 |
| 7 | 84 | 5 | 84.8 | 89 | Y | 125 | 315 |
| 8 | 84 | 7 | 85.12 | 91 | Y | 125 | 630 |
| 9 | 84 | 15 | 86.4 | 85 | N | 125 | 1260 |
| 10 | 93 | 5 | 93.35 | 93 | N | 250 | 315 |
| 11 | 93 | 7 | 93.49 | 96 | Y | 250 | 630 |
| 12 | 93 | 15 | 94.05 | 95 | Y | 250 | 1260 |
| 13 | 97 | 5 | 97.15 | 97 | N | 375 | 315 |
| 14 | 97 | 7 | 97.21 | 97 | N | 375 | 630 |
| 15 | 97 | 15 | 97.45 | 97 | N | 375 | 1260 |

| | | | | | | | |
|---|---|---|---|---|---|---|---|
| α - measurement of synergistic behavior as Y = YES; N = NO β and p- Rate - g ai/ha | | | | | | | |

### 2,4-DC + napropamide - Wild buckwheat-28 DAT

| Tmt | X | Y | Expected | observed | synergy^{α} | 2,4-DC^{β} | Napropamide^{ρ} |
|---|---|---|---|---|---|---|---|
| 1 | 10 | 23 | 30.7 | 22 | N | 31 | 315 |
| 2 | 10 | 23 | 30.7 | 30 | N | 31 | 630 |
| 3 | 10 | 38 | 44.2 | 27 | N | 31 | 1260 |
| 4 | 8 | 23 | 29.16 | 37 | Y | 63 | 315 |
| 5 | 8 | 23 | 29.16 | 42 | Y | 63 | 630 |
| 6 | 8 | 38 | 42.96 | 43 | Y | 63 | 1260 |
| 7 | 8 | 23 | 29.16 | 73 | Y | 125 | 315 |
| 8 | 8 | 23 | 29.16 | 80 | Y | 125 | 630 |
| 9 | 8 | 38 | 42.96 | 73 | Y | 125 | 1260 |
| 10 | 23 | 23 | 40.71 | 75 | Y | 250 | 315 |
| 11 | 23 | 23 | 40.71 | 86 | Y | 250 | 630 |
| 12 | 23 | 38 | 52.26 | 80 | Y | 250 | 1260 |
| 13 | 37 | 23 | 51.49 | 57 | Y | 375 | 315 |
| 14 | 37 | 23 | 51.49 | 82 | Y | 375 | 630 |
| 15 | 37 | 38 | 60.94 | 78 | Y | 375 | 1260 |

| | | | | | | | |
|---|---|---|---|---|---|---|---|
| α - measurement of synergistic behavior as Y = YES; N = NO β and p- Rate - g ai/ha | | | | | | | |

### 2,4-DC + napropamide - Annual bluegrass-28 DAT

| Tmt | X | Y | Expected | observed | synergy^{α} | 2,4-DC^{β} | Napropamide^{ρ} |
|---|---|---|---|---|---|---|---|
| 1 | 0 | 1 | 1 | 0 | N | 31 | 315 |
| 2 | 0 | 77 | 77 | 85 | Y | 31 | 630 |
| 3 | 0 | 92 | 92 | 94 | Y | 31 | 1260 |
| 4 | 2 | 1 | 2.98 | 82 | Y | 63 | 315 |
| 5 | 2 | 77 | 77.46 | 82 | Y | 63 | 630 |
| 6 | 2 | 92 | 92.16 | 93 | Y | 63 | 1260 |
| 7 | 12 | 1 | 12.88 | 83 | Y | 125 | 315 |
| 8 | 12 | 77 | 79.76 | 89 | Y | 125 | 630 |
| 9 | 12 | 92 | 92.96 | 100 | Y | 125 | 1260 |
| 10 | 40 | 1 | 40.6 | 87 | Y | 250 | 315 |
| 11 | 40 | 77 | 86.2 | 90 | Y | 250 | 630 |
| 12 | 40 | 92 | 95.2 | 100 | Y | 250 | 1260 |
| 13 | 63 | 1 | 63.37 | 86 | Y | 375 | 315 |
| 14 | 63 | 77 | 91.49 | 95 | Y | 375 | 630 |
| 15 | 63 | 92 | 97.04 | 99 | Y | 375 | 1260 |

| | | | | | | | |
|---|---|---|---|---|---|---|---|
| α - measurement of synergistic behavior as Y = YES; N = NO β and p- Rate - g ai/ha | | | | | | | |

### Example 35. Weed Control with 2,4-DC, and Dimethachlor plus Napropamide Tank-mix Combinations.

In this example a greenhouse study was conducted to determine the weed efficacy of 2,4-DC, with 2,4-DC alone (reference) or in combination with dimethachlor plus napropamide as preemergence (PRE) treatment against the following weeds: Common lambsquarters (*Chenopodium album,* CHEAL); redroot pigweed (*Amaranthus retroflexus,* AMARE); silky windgrass (*Apera spica-venti,* APESV); Italian ryegrass (*Lolium perenne L. ssp. multiflorum,* LOLMU); corn poppy (*Papaver rhoeas,* PARPH); littleseed canarygrass (*Phalaris minor,* PHAMI); annual bluegrass (*Poa annua,* POAAN); shepherd's-purse (*Capsella bursa-pastoris,* CAPBP); blackgrass (*Alopecurus myosuroides,* ALOMY); wild buckwheat (*Polygonum convolvulus,* POLCO); wild oat (*Avena fatua,* AVEFA); wild mustard (*Sinapis arvensis,* SINAR); common chickweed (*Stellaria media,* STEME). Crops screened were wheat and canola.

### Methods:

2,4-DC (SC 36%) was applied at, 50, 100, or 200 g ai/ha alone or as tank-mix with dimethachlor (48%) and napropamide (DF 50). Dimethachlor rates for alone or tank-mix application were 500 or 1000 g ai/ha and napropamide rates were 630 or 1260 g ai/ha. A non-treated check was included as reference standard. An application of clomazone (COMMAND^{®} 3ME, 31.4%) at 100 g ai/ha plus dimethachlor at 1000 g plus napropamide at 1260 g was applied as a standard for comparison. Treatments were applied PRE to the following species, common lambsquarters, redroot pigweed, silky windgrass, Italian ryegrass, corn poppy, littleseed canarygrass, annual bluegrass, shepherd's-purse, blackgrass, wild buckwheat, wild oat, wild mustard, common chickweed, wheat, and canola. All plants were direct seeded into 6 x 10" (15 cm x 25 cm) fiber flats utilizing Pennington soil. Flats were watered after seeding but prior to treatment. After application flats were placed in the greenhouse and lightly watered. Thereafter flats were watered and fertilized routinely. Treatments were applied using compressed air at 40 PSI (280 kPa) in a track spray chamber and 30 GPA spray volume using a TeeJet 8001E nozzle. Visual percent weed control and crop injury data were recorded at 14, 21, and 28 days after treatment (DAT).

### Results:

2,4-DC alone at 50 g ai/ha controlled (≥85% injury) common chickweed, at 100 g controlled blackgrass and wild buckwheat. Common lambsquarters, redroot pigweed, Italian ryegrass, and corn poppy were controlled at 200 g; littleseed canarygrass, annual bluegrass, and shepherd's-purse were controlled by 400 g. 2,4-DC alone was safe on wheat and canola (≤10% injury) when applied at 50 and 100 g. 2,4-DC plus dimethachlor and napropamide controlled all weeds at all rates, except wild mustard. Wild mustard was controlled by 4 of 12 combinations. Canola was safe with one combination of 2,4-DC plus dimethachlor and napropamide, wheat was injured by all combinations. Clomazone plus dimethachlor and napropamide controlled all weeds and injured both crops.

In summary, 2,4 DC when applied alone at ≤ 200 g ai/ha controlled common lambsquarters, redroot pigweed, Italian ryegrass, corn poppy, blackgrass, wild oat, and common chickweed. 2,4 DC plus dimethachlor and napropamide controlled all weeds with all combinations except wild mustard.

The table below highlights unexpected synergistic effects of the tested combinations.

### 2,4-DC + dimethachlor + napropamide - (28 DAT)-PRE Wild mustard-28 DAT

| Tmt | X | Y | Expected | observed | synergy^{α} | 2,4-DC^{β} | Dimethachlor + Napropamide^{ρ} |
|---|---|---|---|---|---|---|---|
| 1 | 12 | 0 | 12 | 50 | Y | 50 | 500 + 630 |
| 2 | 12 | 77 | 79.76 | 88 | Y | 50 | 1000 + 630 |
| 3 | 12 | 68 | 71.84 | 78 | Y | 50 | 500 + 1260 |
| 4 | 12 | 94 | 94.72 | 92 | N | 50 | 1000 + 1260 |
| 5 | 37 | 0 | 37 | 80 | Y | 100 | 500 + 630 |
| 6 | 37 | 77 | 85.51 | 78 | N | 100 | 1000 + 630 |
| 7 | 37 | 68 | 79.84 | 87 | Y | 100 | 500 + 1260 |
| 8 | 37 | 94 | 96.22 | 82 | N | 100 | 1000 + 1260 |
| 9 | 47 | 0 | 47 | 67 | Y | 200 | 500 + 630 |
| 10 | 47 | 77 | 87.81 | 87 | N | 200 | 1000 + 630 |
| 11 | 47 | 68 | 83.04 | 75 | N | 200 | 500 + 1260 |
| 12 | 47 | 94 | 96.82 | 83 | N | 200 | 1000 + 1260 |

| | | | | | | | |
|---|---|---|---|---|---|---|---|
| α - measurement of synergistic behavior as Y = YES; N = NO β and p- Rate - g ai/ha | | | | | | | |

### Example 36. Weed Control with 2,4-DC and Metsulfuron-Methyl Tank-mix Combinations.

In this example a greenhouse study was conducted to determine the weed efficacy of 2,4-DC, with 2,4-DC alone (reference) or in combination with methsulfuron-methyl (AlluXP 60%) as postemergence treatment against the following weeds: Italian ryegrass (*Lolium perenne L. ssp. multiflorum,* LOLMU); wild oat (*Avena fatua,* AVEFA); common lambsquarters (*Chenopodium album,* CHEAL); blackgrass (*Alopecurus myosuroides,* ALOMY); littleseed canarygrass (*Phalaris minor,* PHAMI); annual bluegrass (*Poa annua,* POAAN); corn poppy (*Papaver rhoeas,* PARPH); common chickweed (*Stellaria media,* STEME); redroot pigweed (*Amaranthus retroflexus,* AMARE); wild mustard (*Sinapis arvensis,* SINAR); wild buckwheat (*Polygonum convolvulus,* POLCO). Crops screened were wheat and barley.

### Methods:

2,4-DC (SC 36%) was applied at 50, 100, or 200 g ai/ha alone or as tank-mix with metsulfuron-methyl (60%) at 6, 9, or 12 g ai/ha. A non-treated check was included as reference standard. An application of pyrasulfotole + bromoxynil (HUSKIE^{™}, 26.3%) at 271 g ai/ha and an application of thifensulfuron (HARMONY^{®} SG, 75%) at 17.4 g ai/ha were included as standards for comparison. Treatments were applied POST to the following species at the heights given in parenthesis, Italian ryegrass (2-4" (5-10 cm)), wild oat (3-4" (8-10 cm)), common lambsquarters (1" (3 cm)), blackgrass (2-3" (5-8 cm)), littleseed canarygrass (1-2" (3-5 cm)), annual bluegrass (0.5" (1 cm)), corn poppy (1" (3 cm)), common chickweed (0.5" (1 cm)), redroot pigweed (1" (3 cm)), wild mustard (1" (3 cm)), wild buckwheat (1" (3 cm)), wheat (3-4" (8-10 cm)), and barley (2-4" (5-10 cm)). All plants were direct seeded into 3" (8 cm) plastic pots utilizing Pennington soil. After application plants were placed in the greenhouse and foliage was allowed to dry for 24h. Thereafter plants were watered and fertilized routinely. Treatments were applied using compressed air at 40 PSI (280 kPa) in a track spray chamber and 30 GPA spray volume using a TeeJet 8001E nozzle. Visual percent weed control and crop injury were recorded at 7, 14, 21, and 28 days after treatment (DAT), using a scale of 0 (no control/no injury) to 100 (complete plant death). Data (not included) were analyzed using Minitab statistical software at 95% confidence interval.

### Results:

2,4-DC alone applied to barley was safe at 50 g ai/ha and wheat at wheat at ≤ 100 g. 2,4-DC + metsulfuron-methyl controlled (≥85% injury) common lambsquarters, littleseed canarygrass, corn poppy, common chickweed, redroot pigweed, and wild mustard with all combinations, wild buckwheat, and Italian ryegrass were controlled with two combinations. Wild oat, black grass and annual bluegrass were not controlled by any tank-mix combination. Wheat was not injured by three combinations while barley was safe with one tank-mix combination. HUSKIE^{™} controlled common lambsquarters, corn poppy, redroot pigweed, wild mustard, and wild buckwheat and was safe on barley; HARMONY^{®} controlled common lambsquarters, common chickweed, redroot pigweed, and wild buckwheat and was safe on wheat and barley.

In summary, 2,4 DC when applied alone POST at all rates failed to control any weed and was safe on barley at 50 g ai/ha and on wheat at ≤ 100 g. 2, 4 DC plus metsulfuron-methyl controlled common lambsquarters, littleseed canarygrass, corn poppy, common chickweed, redroot pigweed, and wild mustard with all tank-mix combinations and was safe on wheat with three combinations and barley with one. The table below highlights unexpected synergistic effects of the tested combinations.

### 2,4-DC + metsulfuron-methyl - Italian ryegrass- 28 DAT

| Tmt | X | Y | Expected | observed | synergy^{α} | 2,4-DC^{β} | metsulfuron-methyl^{ρ} |
|---|---|---|---|---|---|---|---|
| 1 | 22 | 6 | 26.68 | 22 | N | 50 | 6 |
| 2 | 22 | 18 | 36.04 | 45 | Y | 50 | 9 |
| 3 | 22 | 16 | 34.48 | 76 | Y | 50 | 12 |
| 4 | 18 | 6 | 22.92 | 52 | Y | 100 | 6 |
| 5 | 18 | 18 | 32.76 | 68 | Y | 100 | 9 |
| 6 | 18 | 16 | 31.12 | 86 | Y | 100 | 12 |
| 7 | 29 | 6 | 33.26 | 68 | Y | 200 | 6 |
| 8 | 29 | 18 | 41.78 | 85 | Y | 200 | 9 |
| 9 | 29 | 16 | 40.36 | 83 | Y | 200 | 12 |

| | | | | | | | |
|---|---|---|---|---|---|---|---|
| α - measurement of synergistic behavior as Y = YES; N = NO β and p- Rate - g ai/ha | | | | | | | |

### Example 37. Weed Control with 2,4-DC and Atrazine Tank-mix Combinations.

In this example a greenhouse study was conducted to determine the weed efficacy of 2,4-DC, with 2,4-DC alone (reference) or in combination with atrazine as preemergence (PRE) treatment against the following weeds: Common cocklebur (*Xanthium strumarium,* XANST); velvetleaf (*Abutilon theophrasti,* ABUTH); Jimsonweed (*Datura stramonium,* DATST); barnyardgrass (*Echinochloa crus-galli,* ECHCG); redroot pigweed (*Amaranthus retroflexus,* AMARE).

### Methods:

2,4-DC (SC 36%) was applied at 50, 100 or 200 g ai/ha alone or as tank-mix with atrazine (4L, 42.6%) at 140, 280, or 560 g ai/ha. A non-treated check was included as reference standard. *S*-metolachlor (DUAL II MAGNUM^{®}, 82.4%) at 525 g ai/h plus atrazine at 560 g ai/h was included as a standard for comparison. Common cocklebur, velvetleaf, Jimsonweed, barnyardgrass, redroot pigweed, corn, sweet corn, and sorghum were direct seeded into 6" x 10" (15 x 25 cm) fiber flats utilizing Pennington soil. Flats were watered after seeding but prior to treatment. After application flats were placed in the greenhouse and lightly watered. Thereafter flats were watered and fertilized routinely. Treatments were applied using compressed air in a track spray chamber at 30 GPA using a TeeJet 8001E nozzle at 40 PSI (280 kPa). Visual percent weed control and crop injury were recorded at 14, 21, and 28 days after treatment (DAT) using a scale of 0 (no control/no injury) to 100 (complete plant death). Data were analyzed using Minitab statistical software at 95% confidence interval.

### Results:

2,4-DC applied alone at ≥50 g ai/ha controlled barnyardgrass 28 DAT. 2,4-DC applied alone at ≥ 200 g controlled velvetleaf and redroot pigweed, applied alone at 400 g 2,4-DC controlled Jimsonweed. Common cocklebur was not controlled by any rate of 2,4-DC applied alone. 2,4-DC plus atrazine controlled velvetleaf, Jimsonweed, barnyardgrass and redroot pigweed with all combinations. Common cocklebur was controlled with 6 tank-mix combinations of 2,4-DC plus atrazine. 2,4 DC applied alone was safe on corn ≤200 g, sweet corn or sorghum were not injured (>10%) by 2, 4 DC ≤100 g. 2,4 DC plus atrazine as tank-mix generally well tolerated on corn, sweet corn and on sorghum.

In summary, 2, 4 DC alone controlled barnyardgrass at all rates, velvetleaf and redroot pigweed at 200 g ai/ha, and Jimsonweed at 400 g. 2, 4 DC plus atrazine controlled common cocklebur with 6 out of 9 combinations and controlled velvetleaf, Jimsonweed, barnyardgrass and redroot pigweed with all combinations. The table below highlights unexpected synergistic effects of the tested combinations.

### 2,4-DC + Atrazine - Common cocklebur- 28DAT

| Tmt | X | Y | Expected | observed | synergy^{α} | 2,4-DC^{β} | Atrazine^{ρ} |
|---|---|---|---|---|---|---|---|
| 1 | 0 | 57 | 57 | 59 | Y | 50 | 140 |
| 2 | 0 | 92 | 92 | 97 | Y | 50 | 280 |
| 3 | 0 | 97 | 97 | 100 | Y | 50 | 560 |
| 4 | 7 | 57 | 60.01 | 100 | Y | 100 | 140 |
| 5 | 7 | 92 | 92.56 | 100 | Y | 100 | 280 |
| 6 | 7 | 97 | 97.21 | 100 | Y | 100 | 560 |
| 7 | 60 | 57 | 82.8 | 75 | N | 200 | 140 |
| 8 | 60 | 92 | 96.8 | 82 | N | 200 | 280 |
| 9 | 60 | 97 | 98.8 | 100 | Y | 200 | 560 |

| | | | | | | | |
|---|---|---|---|---|---|---|---|
| α - measurement of synergistic behavior as Y = YES; N = NO β and p- Rate - g ai/ha | | | | | | | |

### 2,4-DC + Atrazine - Velvetleaf- 28 DAT

| Tmt | X | Y | Expected | observed | synergy^{α} | 2,4-DC^{β} | Atrazine^{ρ} |
|---|---|---|---|---|---|---|---|
| 1 | 18 | 53 | 61.46 | 97 | Y | 50 | 140 |
| 2 | 18 | 63 | 69.66 | 99 | Y | 50 | 280 |
| 3 | 18 | 96 | 96.72 | 93 | N | 50 | 560 |
| 4 | 19 | 53 | 61.93 | 89 | Y | 100 | 140 |
| 5 | 19 | 63 | 70.03 | 97 | Y | 100 | 280 |
| 6 | 19 | 96 | 96.76 | 100 | Y | 100 | 560 |
| 7 | 90 | 53 | 95.3 | 100 | Y | 200 | 140 |
| 8 | 90 | 63 | 96.3 | 100 | Y | 200 | 280 |
| 9 | 90 | 96 | 99.6 | 100 | Y | 200 | 560 |

| | | | | | | | |
|---|---|---|---|---|---|---|---|
| α - measurement of synergistic behavior as Y = YES; N = NO β and p- Rate - g ai/ha | | | | | | | |

### Example 38. Weed Control with 2,4-DC and Pyroxasulfone Tank-mix Combinations.

In this example a greenhouse study was conducted to determine the weed efficacy of 2,4-DC, with 2,4-DC alone (reference) or in combination with pyroxasulfone as preemergence (PRE) treatment against the following weeds: Yellow nutsedge (*Cyperus esculentus,* CYPES); Italian ryegrass (*Lolium perenne spp. multiflorum,* LOLMU); morningglory spp (*Ipomea spp*); redroot pigweed (*Amaranthus retroflexus,* AMARE); velvetleaf (*Abutilon theophrasti,* ABUTH); kochia (*Kochia scoparia,* KCHSC); field bindweed (*Convolvulus arvensis,* CONAR).

### Methods:

2,4-DC (SC 36%) was applied at 0, 50, 100 or 200 g ai/ha alone or as tank-mix with pyroxasulfone (85%) at 30, 60, or 90 g ai/ha. A non-treated check was included as reference standard. Pyroxasulfone plus fluthiacet-methyl (ANTHEM^{™}, 23.3%) applied at 165 g ai/ha was included as a standard for comparison. Yellow nutsedge, Italian ryegrass, morningglory, redroot pigweed, velvetleaf, kochia, field bindweed, wheat, and corn were direct seeded into 6" x 10" (15 cm x 25 cm) fiber flats utilizing Pennington soil. Flats were watered after seeding but prior to treatment. After application flats were placed in the greenhouse and lightly watered. Thereafter flats were watered and fertilized routinely. Treatments were applied using compressed air in a track spray chamber at 40 psi (280 kPa) and a spray volume of 30 GPA using a TeeJet 8001E nozzle. Visual percent weed control and crop injury were recorded at 14, 21, and 28 days after treatment (DAT) using a scale of 0 (no control/no injury) to 100 (complete plant death). Data were analyzed using Minitab statistical software at 95% confidence interval.

### Results:

2,4-DC applied alone at ≥ 50 g ai/ha controlled (≥ 85%) kochia, at ≥ 200 g controlled Italian ryegrass or redroot pigweed, and controlled velvetleaf at 400 g. 2,4-DC was selective to (≤ 10% injury) wheat when applied at ≤ 100 g, and selective to corn when applied at ≤ 200 g. 2,4-DC plus pyroxasulfone controlled Italian ryegrass, redroot pigweed and kochia with all combinations. Velvetleaf was controlled with all combinations except when 2,4-DC was applied at 50 gai/ha and pyroxasulfone was applied at 30 g ai/ha. Yellow nutsedge, morningglory or field bindweed were not controlled by any combination of 2,4-DC plus pyroxasulfone. Wheat was injured by 8 of 9 combinations, while corn was injured by 6 of 9 combinations of 2,4-DC plus pyroxasulfone. ANTHEM^{™} applied at 165 g ai/ha controlled all weeds except morningglory and field bindweed.

In summary, 2, 4 DC applied alone controlled kochia at all rates, Italian ryegrass and redroot pigweed at 200 g ai/ha, and velvetleaf at 400 g ai/ha. Wheat was not injured by 50 or 100 g of 2, 4 DC alone, while corn was safe at rates up to and including 200 g ai/ha. Tank-mix of 2,4 DC plus pyroxasulfone controlled Italian ryegrass, redroot pigweed, and kochia with all combinations, velvet leaf with certain combinations and failed to control yellow nutsedge, morningglory, or field bindweed with any combination. Wheat was not injured by one combination. Safety resuts were favorable for corn with the tested combinations.

The table below highlights unexpected synergistic effects of the tested combinations.

### 2,4-DC + pyroxasulfone - Morningglory sp.-28 DAT

| Tmt | X | Y | Expected | observed | synergy^{α} | 2,4-DC^{β} | pyroxasulfone^{ρ} |
|---|---|---|---|---|---|---|---|
| 1 | 0 | 9 | 9 | 8 | N | 50 | 30 |
| 2 | 0 | 60 | 60 | 30 | N | 50 | 60 |
| 3 | 0 | 65 | 65 | 45 | N | 50 | 90 |
| 4 | 2 | 9 | 10.82 | 0 | N | 100 | 30 |
| 5 | 2 | 60 | 60.8 | 12 | N | 100 | 60 |
| 6 | 2 | 65 | 65.7 | 87 | Y | 100 | 90 |
| 7 | 2 | 9 | 10.82 | 12 | Y | 200 | 30 |
| 8 | 2 | 60 | 60.8 | 67 | Y | 200 | 60 |
| 9 | 2 | 65 | 65.7 | 50 | N | 200 | 90 |

| | | | | | | | |
|---|---|---|---|---|---|---|---|
| α - measurement of synergistic behavior as Y = YES; N = NO β and p- Rate - g ai/ha | | | | | | | |

### Example 39. Weed Control with 2,4-DC, and Pyroxasulfone plus Carfentrazone Tank-mix Combinations.

In this example a greenhouse study was conducted to determine the weed efficacy of 2,4-DC, with 2,4-DC alone (reference) or in combination with Pyroxasulfone plus Carfentrazone as preemergence (PRE) treatment against the following weeds: Redroot pigweed (*Amaranthus retroflexus,* AMARE); littleseed canarygrass (*Phalaris minor,* PHAMI); Canada thistle (*Cirsium arvense,* CIRAR); dandelion (*Taraxacum officinale,* TAROF); green foxtail (*Setaria viridis,* SETVI); wild oat (*Avena fatua,* AVEFA); white clover (*Trifolium repens,* TRFRE); yellow nutsedge (*Cyperus esculentus,* CYPES); Italian ryegrass (*Lolium perenne spp. multiflorum,* LOLMU); common chickweed (*Stellaria media,* STEME); quackgrass (*Elytrigia repens,* AGRRE); field *bindweed*(*Convolvulus arvensis,* CONAR).

### Methods:

2,4-DC (SC 36%) was applied at 50, 100, or 200 g ai/ha alone or as tank-mix with pyroxasulfone (KIH485 WG 85%) and carfentrazone-ethyl (AimEC^{®} 22.3%.) Pyroxasulfone rates for alone or tank-mix application were 30, 60, or 90 g ai/ha and the carfentrazone-ethyl rate was 25 g ai/ha. A non-treated check was included as reference standard. Clomazone (COMMAND^{®} 3ME) at 200 g plus pyroxasulfone at 90 g and carfentrazone-ethyl at 25 g was included as a standard for comparison. Redroot pigweed, littleseed canarygrass, Canada thistle, dandelion, green foxtail, wild oat, white clover, yellow nutsedge, Italian ryegrass, common chickweed, quackgrass, field bindweed, canola, and wheat were direct seeded into 6" x 10" (15 x 25 cm) fiber flats utilizing Pennington soil. Flats were watered after seeding but prior to treatment. After application flats were placed in the greenhouse and lightly watered. Thereafter flats were watered and fertilized routinely. Treatments were applied using compressed air in a track spray chamber at 30 GPA using a TeeJet 8001E nozzle at 40 PSI (280 kPa). Visual percent weed control and crop injury were recorded at 14, 21, and 28 days after treatment (DAT) using a scale of 0 (no control/no injury) to 100 (complete plant death). Data (not included) were analyzed using Minitab statistical software at 95% confidence interval.

### Results:

2,4-DC alone at ≥ 50 g ai/ha controlled (≥ 85%) Canada thistle, dandelion, or common chickweed. Applied at 100 g, 2,4-DC controlled redroot pigweed and Italian ryegrass; littleseed canarygrass and wild oat were controlled at 200 g. 2,4-DC combined as tank-mix with pyroxasulfone plus carfentrazone-ethyl controlled redroot pigweed, littleseed canarygrass, Canada thistle, dandelion, green foxtail, wild oat, white clover, Italian ryegrass and common chickweed with all combinations. Quackgrass and field bindweed were controlled with 8 of 9 tank-mix combinations; yellow nutsedge was controlled with 1 combination. Clomazone plus pyroxasulfone and carfentrazone-ethyl applied as a standard for comparison controlled all weeds except yellow nutsedge.

2, 4 DC applied alone controlled Canada thistle, dandelion, green foxtail, and common chickweed at all rates, redroot pigweed, Italian ryegrass, littleseed canary grass, and wild oat were controlled at certain rates. 2, 4 DC was safe on wheat at lower rates and canola at most rates. 2, 4 DC plus pyroxasulfone and carfentrazone-ethyl controlled all weeds with all combinations except quackgrass and field bindweed which were controlled with most combinations while yellow nutsedge was controlled with 1 combination. Canola was not safe with any combination. The table below highlights unexpected synergistic effects of the tested combinations.

### 2,4-DC + pyroxasulfone + carfentrazone - Yellow nutsedge-28 DAT

| Tmt | X | Y | Expected | observed | synergy^{α} | 2,4-DC^{β} | pyroxasulfone + carfentrazone^{ρ} |
|---|---|---|---|---|---|---|---|
| 1 | 1 | 2 | 2.98 | 0 | N | 50 | 30 + 25 |
| 2 | 1 | 17 | 17.83 | 32 | Y | 50 | 60 + 25 |
| 3 | 1 | 80 | 80.2 | 63 | N | 50 | 90 + 25 |
| 4 | 3 | 2 | 4.94 | 20 | Y | 100 | 30 + 25 |
| 5 | 3 | 17 | 19.49 | 53 | Y | 100 | 60 + 25 |
| 6 | 3 | 80 | 80.6 | 91 | Y | 100 | 90 + 25 |
| 7 | 3 | 2 | 4.94 | 23 | Y | 200 | 30 + 25 |
| 8 | 3 | 17 | 19.49 | 73 | Y | 200 | 60 + 25 |
| 9 | 3 | 80 | 80.6 | 79 | N | 200 | 90 + 25 |

| | | | | | | | |
|---|---|---|---|---|---|---|---|
| α - measurement of synergistic behavior as Y = YES; N = NO β and p- Rate - g ai/ha | | | | | | | |

Unexpected crop safety has been observed for at least 7 crops: barley, canola, corn, cowpea, sorghum, sweet corn, and wheat. This unexpected crop safety results is noted in the following PRE/POST studies.

### Example 40. Crop Safety with 2,4-DC and Metsulfuron-Methyl Tank-mix Combinations.

In this example a greenhouse study was conducted to determine crop safety and weed efficacy of 2,4-DC, with 2,4-DC alone (reference) or in combination with methsulfuron-methyl as postemergence (POST) treatment against the following weeds: Wild oat (*Avena fatua,* AVEFA) wild buckwheat (*Polygonum convolvulus,* POLCO), common chickweed (*Stellaria media,* STEME), common lambsquarters (*Chenopodium album,* CHEAL), wild mustard (*Sinapis arvensis,* SINAR), Italian ryegrass (*Lolium perenne L. ssp. multiflorum,* LOLMU). Treatments were applied to barley and wheat crops.

### Methods:

2,4-DC (SC 36%) was applied at 125, 170, 210, or 250 g ai/ha alone or as tank-mix with metsulfuron-methyl (AllyXP 60%) 60%) at 2, 3, or 4 g ai/ha. A non-treated check was included as reference standard. Thifensulfuron-methyl + tribenuron-methyl + metsulfuron-methyl (ACCURATE EXTRA^{®}, 37.5%+18.75%+15%) at 31.48 g ai/ha or thifensulfuron-methyl + tribenuron-methyl (HARMONY EXTRA^{®}SG, 33.33%+16.67%) at 19.95 g ai/ha were applied as commercial standards. Non-ionic surfactant (NIS) was added to all treatments at 0.5% v/v. All plant species were direct seeded into 3" (8 cm) plastic pots using metro-mix as growth media. At treatment common lambsquarters was 1.75" (4.45 cm), common chickweed was 2" (5 cm), wild mustard was 2.25" (5.72 cm), wild oat was 5.5" (14 cm), wild buckwheat was 2-5" (5-13 cm), Italian ryegrass was 2-3" (5-8 cm), wheat was 5.5" (14 cm) and barley was 4.5" (11 cm) in height. Plants were watered well before application and not watered 24 h after application. Plants were watered and fertilized routinely after treatment application. Each treatment was replicated four times. Treated flats were placed in randomized block design in the greenhouse. Treatments were applied with compressed air in a track spray chamber at 30 GPA using a TeeJet 8001E nozzle at 40 PSI (280 kPa). Visual percent wheat and barley injury and weed control were recorded at 7, 14, 21, and 28 days after treatment (DAT), using a scale of 0 (no control/no crop injury) to 100 (complete plant death). Data were analyzed using Minitab statistical software at 95% confidence interval.

### Results:

All tank-mix applications of 2,4-DC plus metsulfuron-methyl gave ≥85% control of common chickweed, wild mustard, and common lambsquarters, 10 combinations controlled wild buckwheat. Wild oat and Italian ryegrass were not controlled by any tank-mix combination. Wheat was not injured by any combination; barley was moderately injured by 2 combinations and safe with all other tank-mix combinations.

Metsulfuron-methyl alone controlled wild buckwheat, common chickweed, wild mustard, and common lambsquarters at all rates and was safe on both crops at all rates. Thifensulfuron-methyl plus tribenuron-methyl plus metsulfuron-methyl or thifensulfuron-methyl plus tribenuron-methyl both controlled wild buckwheat, wild mustard, common chickweed, and common lambsquarters and were safe on barley and wheat; neither standard controlled wild oat or Italian ryegrass.

The 7 days safety results indicated favorable injury profile for combination treatments compared to individual ingredients applied alone. 2,4-DC applied alone was safe at all rates on both wheat and barley. Plant injury was greater than 10% with 2,4 DC alone at 170 g ai/hec compared to when 2,4 DC was applied at the same rates with metsulfuron-methyl. As such, in general, the combination showed a better safety profile compared to 2, 4 DC application at 170 g ai/hec and metsulfuron-methyl at 3 g ai/hec.

### 2,4-DC + metsulfuron-methyl- Barley-7 DAT Crop Injury

| Tmt | X | Y | Expected | observed^{ε} | 2,4-DC^{β} | Metsulfuron-methyl^{ρ} |
|---|---|---|---|---|---|---|
| 1 | 4 | 5 | 8.8 | 4 | 125 | 2 |
| 2 | 4 | 7 | 10.72 | 8 | 125 | 3 |
| 3 | 4 | 9 | 12.64 | 6 | 125 | 4 |
| 4 | 6 | 5 | 10.7 | 5 | 170 | 2 |
| 5 | 6 | 7 | 12.58 | 6 | 170 | 3 |
| 6 | 6 | 9 | 14.46 | 5 | 170 | 4 |
| 7 | 8 | 5 | 12.6 | 6 | 210 | 2 |
| 8 | 8 | 7 | 14.44 | 8 | 210 | 3 |
| 9 | 8 | 9 | 16.28 | 8 | 210 | 4 |
| 10 | 14 | 5 | 18.3 | 5 | 250 | 2 |
| 11 | 14 | 7 | 20.02 | 8 | 250 | 3 |
| 12 | 14 | 9 | 21.74 | 8 | 250 | 4 |

| | | | | | | |
|---|---|---|---|---|---|---|
| ε - measurement of % crop injury: safe (0-10%); moderate (11-20%); injured (≥20) β and p- Rate - g ai/ha | | | | | | |

### 2,4-DC + metsulfuron-methyl- Wheat-7 DAT Crop Injury

| Tmt | X | Y | Expected | observed^{ε} | 2,4-DC^{β} | Metsulfuron-methyl^{ρ} |
|---|---|---|---|---|---|---|
| 1 | 5 | 1 | 5.95 | 2 | 125 | 2 |
| 2 | 5 | 0 | 5 | 2 | 125 | 3 |
| 3 | 5 | 2 | 6.9 | 2 | 125 | 4 |
| 4 | 14 | 1 | 14.86 | 2 | 170 | 2 |
| 5 | 14 | 0 | 14 | 5 | 170 | 3 |
| 6 | 14 | 2 | 15.72 | 3 | 170 | 4 |
| 7 | 17 | 1 | 17.83 | 5 | 210 | 2 |
| 8 | 17 | 0 | 17 | 4 | 210 | 3 |
| 9 | 17 | 2 | 18.66 | 3 | 210 | 4 |
| 10 | 31 | 1 | 31.69 | 4 | 250 | 2 |
| 11 | 31 | 0 | 31 | 4 | 250 | 3 |
| 12 | 31 | 2 | 32.38 | 2 | 250 | 4 |

| | | | | | | |
|---|---|---|---|---|---|---|
| ε - measurement of % crop injury: safe (0-10%); moderate (11-20%); injured (≥20) β and p- Rate - g ai/ha | | | | | | |

### Example 43. Crop Safety with 2,4-DC, and Pyroxasulfone plus Carfentrazone Tank-mix Combinations.

In this example crop safety analysis of 2,4-DC, with 2,4-DC alone (reference) or in combination with Pyroxasulfone plus Carfentrazone as preemergence treatment was conducted against the following weeds: Redroot pigweed (*Amaranthus retroflexus,* AMARE); littleseed canarygrass (*Phalaris minor,* PHAMI); Canada thistle (*Cirsium arvense,* CIRAR); dandelion (*Taraxacum officinale,* TAROF); green foxtail (*Setaria viridis,* SETVI); wild oat (*Avena fatua,* AVEFA); white clover (*Trifolium repens,* TRFRE); yellow nutsedge (*Cyperus esculentus,* CYPES); Italian ryegrass (*Lolium perenne spp. multiflorum,* LOLMU); common chickweed (*Stellaria media,* STEME); quackgrass (*Elytrigia repens,* AGRRE); field *bindweed*(*Convolvulus arvensis,* CONAR). Treatments were applied to canola and wheat.

### Results:

2,4 DC alone was safe (≤10% injury) on canola at ≤ 200 g ai/ha and safe on wheat at ≤ 100 g. 2,4 DC plus pyroxasulfone plus carfentrazone-ethyl was not safe on canola with any tank-mix combination and was safe on wheat with 1 tank-mix combination. Clomazone plus pyroxasulfone plus carfentrazone-ethyl injured both crops. 2,4 DC alone provided safer alternative compared to the combinations tested.

### Example 44. Crop Safety with 2,4-DC, and Metazachlor plus Napropamide Tank-mix Combinations.

In this example, a greenhouse study was conducted to determine crop selectivity and weed efficacy of 2,4-DC, with 2,4-DC alone (reference) or in combination with Metazachlor plus Napropamide as preemergence treatment against the following weeds: Redroot pigweed (*Amaranth retroflexus,* AMARE), Italian ryegrass *(Lolium perenne. multiflorum,* LOLMU), wild mustard (*Sinapis arvensis,* SINAR), annual bluegrass (*Poa annua* POAAN), wild oat (*Avena fatua,* AVEFA), blackgrass (*Alopecurus myosuroides,* ALOMY), common lambsquarters (*Chenopodium album,* CHEAL), littleseed canarygrass (*Phalaris minor,* PHAMI), common chickweed (*Stellaria media,* STEME), corn poppy *(Papaver rhoeas, PAPRH) and silky windgrass* (*Apera spica-venti, APESV).* Crops tested included wheat and canola.

### Methods:

2,4-DC (SC 36%) was applied at 50, 100, or 200 g ai/ha alone or as tank-mix with metazachlor (Butisan^{®} 43.1%) and napropamide (Devrinol^{®} 50DF). Metazachlor rates for alone or tank-mix application were 250, 500, and 750 g ai/ha and the napropamide rate was 1260 g ai/ha. A non-treated check was included as reference standard. Other reference treatments included tank-mix application of clomazone (COMMAND^{®} 3ME 31.4%) plus metazachlor plus napropamide at 100 + 750 + 1260 g ai/ha and an application of clomazone (2.13%) plus metazachlor (13%) plus napropamide (13.6%) premix at 1572 g ai/ha. Treatments were applied before the emergence of redroot pigweed, Italian ryegrass, wild oat, blackgrass, littleseed canarygrass, common chickweed, common lambsquarters, corn poppy, wild mustard, annual bluegrass, silky windgrass, canola, and wheat. Plant species were planted in fiber flats (6" X 10" (15 cm X 25 cm)) containing Pennington soil and flats were watered well before application and watered lightly after application. Flats were watered and fertilized routinely after treatment application. Treatments were applied using compressed air track spray chamber at 30 GPA using a TeeJet 8001E nozzle at 40 PSI (280 kPa). Visual percent weed control and percent visual crop injury data were collected at 14, 21, and 28 days after treatment using a scale of 0 (no control/no injury) to 100 (complete plant death). Data were analyzed using Minitab statistical software at 95% confidence interval.

All combinations of 2,4-DC + Metazachlor + Napropamide caused 100% mortality of pigweed, corn poppy, Italian ryegrass, annual bluegrass, lambsquarters, canarygrass, chickweed and silky windgrass. Blackgrass was controlled with all nine combinations. No combination was safe on wheat while three combinations were safe on canola. For example, when 2,4-DC was coapplied with metazachlor + napropamide at same rates, injury to canola was reduced to 3%. 2,4-DC alone provided control of corn poppy at ≥ 100 g, Italian ryegrass at ≥ 200 g, lambsquarters, 400 g, blackgrass at ≥ 200 g, silky windgrass at ≥ 100 g and chickweed at all rates.

In summary, 2,4-DC caused greater than 10% injury to canola at all rates. 2,4-DC was safe on wheat up to 200 g ai/ha. When 2,4-DC was coapplied with metazachlor + napropamide at same rates, injury to canola was reduced to dramatically. All combinations of metazachlor + napropamide provided control of nearly all species at all rates and did not show selectivity to canola and wheat. The table below highlights unexpected safening effects of the tested combinations.

### Example 46 (reference). 2,4-DC safety on sorghum.

To compare preemergence (PRE) sorghum tolerance, 2,4-DC (42% SC), COMMAND^{®} 4EC (clomazone, 46.7%), and COMMAND^{®} 3ME (clomazone, 31.4%) were applied at 31, 63, 125, 250, and 375 g ai/ha. A non-treated check was included as reference standard. Treatments were applied to sorghum at the time of planting using Pennington soil. Each treatment was replicated four times. Soil was watered before and after application for herbicide activation. Plants were watered and fertilized routinely. Treatments were applied using compressed air track spray chamber at 30 GPA using a TeeJet 8001E nozzle at 40 PSI (280 kPa). Visual percent crop injury was recorded at 7, 14, 21, and 28 days after treatment using a scale of 0 (no injury) to 100 (complete plant death). Data were analyzed using Minitab statistical software at 95% confidence interval.

| Table. Percent sorghum injury at different rating intervals with 2,4-DC, COMMAND^{®} 4EC or 3ME when applied preemergence. | | | | | |
|---|---|---|---|---|---|
| Formulation | g ai/ha | Days after application | | | |
| | | 7 | 14 | 21 | 28 |
| Non-treated check | - | 0 | 0 | 0 | 0 |
| 2,4-DC | 31 | 0 | 0 | 0 | 0 |
| 2,4-DC | 63 | 2 | 0 | 0 | 0 |
| 2,4-DC | 125 | 9 | 7 | 5 | 5 |
| 2,4-DC | 250 | 25 | 17 | 12 | 12 |
| 2,4-DC | 375 | 38 | 28 | 20 | 13 |
| COMMAND^{®}4EC | 31 | 8 | 6 | 5 | 5F |
| COMMAND^{®}4EC | 63 | 6 | 8 | 8 | 6 |
| COMMAND^{®}4EC | 125 | 16 | 15 | 12 | 12 |
| COMMAND^{®}4EC | 250 | 35 | 43 | 35 | 25 |
| COMMAND^{®}4EC | 375 | 48 | 68 | 71 | 71 |
| COMMAND^{®}3ME | 31 | 5 | 7 | 5 | 5 |
| COMMAND^{®}3ME | 63 | 4 | 1 | 1 | 1 |
| COMMAND^{®}3ME | 125 | 10 | 10 | 9 | 9 |
| COMMAND^{®}3ME | 250 | 33 | 31 | 39 | 39 |
| COMMAND^{®}3ME | 375 | 38 | 58 | 58 | 58 |

In this study 2,4-DC was safe on sorghum at rates ranging from 31 to 125 g ai/ha irrespective of rating timings (Table given above). The injury to sorghum with 2,4-DC was greater than ≥ 11% at 250 and 375 g. Both formulations of clomazone (COMMAND^{®} 4EC & 3ME) were safe upto 63 g; however, 3ME showed safety at 125 g at 21 and 28 DAT (Table given above).

### Example 47 (reference). Volatility of formulations

The column method was used to determine clomazone volatility from moist double-sieved Pennington soil. Clomazone or 2,4-DC were applied to the soil at 1000 g ai/ha. The amount of clomazone trapped from the column during the 18-hour collection, averaged over four replicates, in units of micrograms was determined. The relative amount of volatilization compared to the 4EC formulation (mean value, shown as a percentage) was determined. Analysis of extracted methanol samples was conducted utilizing HPLC. The mean of those values, over 4 replicates, was then converted to obtain the total ugs per treatment.

| Example | Formulation type | % volatility control vs. COMMAND^{®} 4EC |
|---|---|---|
| COMMAND^{®} 3ME standard | CS | 84.9 |
| COMMAND^{®} 4EC reference | EC | 0.0 |
| 2,4-DC, Example 9A | CS | 85.1 |
| 2,4-DC, Example 9C | CS | 52.7 |
| 2,4-DC, Example 9D | CS | 31.1* |
| 2,4-DC, Example 9E | CS | 53.5 |
| 2,4-DC, Example 9F | CS | 100 |
| 2,4-DC, Example 9G | CS | 100 |
| 2,4-DC, Example 1A | SC | 64 |

| | | |
|---|---|---|
| *In this case microencapsulation provided less volatility control than for the SC formulation. | | |

## Claims

1. A composition comprising a first herbicide that is 2-(2,4-dichlorophenyl)methyl-4,4-dimethyl-3-isoxazolidinone (2,4 DC) and a second herbicide selected from:
(i) clomazone;
(ii) aclonifen;
(iii) pyroxasulfone;
(iv) diflufenican;
(v) napropamide;
(vi) dimethenamid-P;
(vii) bromoxynil;
(viii) S-metolachlor;
(ix) isoxaflutole;
(x) dimethachlor;
(xi) atrazine;
(xii) metsulfuron-methyl;
(xiii) a mixture of pyroxasulfone and sulfentrazone; or
(xiv) a mixture of pyroxasulfone and carfentrazone.

2. The composition of claim 1 wherein the second herbicide is selected from the group consisting of: clomazone; aclonifen; dimethenamid-P; diflufenican; S-metolachlor; pyroxasulfone; isoxaflutole; and napropamide.

3. The composition of claim 1 wherein the second herbicide is selected from the group consisting of: clomazone, aclonifen, pyroxasulfone, diflufenican, napropamide, bromoxynil, S-metolachlor, isoxaflutole, atrazine and metsulfuron-methyl.

4. A method of controlling undesired vegetation in a crop comprising applying to the locus of such vegetation an herbicidally-effective amount of a composition as defined in claim 1 wherein said crop is selected from the group consisting of broadleaf crops and grass crops, and wherein:
(i) the second herbicide is clomazone and the undesired vegetation is selected from the group consisting of: cheat, and wild oat;
(ii) the second herbicide is aclonifen and the undesired vegetation is selected from the group consisting of: wild oat and black nightshade;
(iii) the second herbicide is pyroxasulfone and the undesired vegetation is selected from the group consisting of: common ragweed, quackgrass, and jimsonweed;
(iv) the second herbicide is diflufenican and the undesired vegetation is selected from the group consisting of: common lambsquarters, and Italian ryegrass;
(v) the second herbicide is napropamide and the undesired vegetation is annual bluegrass;
(vi) the second herbicide is dimethenamid-P and the undesired vegetation is shepherd's purse;
(vii) the second herbicide is bromoxynil and the undesired vegetation is common chickweed;
(viii) the second herbicide is S-metolachlor and the undesired vegetation is selected from the group consisting of: jimsonweed, black nightshade, and Benghal dayflower;
(ix) the second herbicide is isoxaflutole and the undesired vegetation is ivyleaf momingglory;
(x) the second herbicide is dimethachlor and the undesired vegetation is blackgrass;
(xi) the second herbicide is atrazine and the undesired vegetation is velvetleaf;
(xii) the second herbicide is metsulfuron-methyl and the undesired vegetation is Italian ryegrass;
(xiii) the second herbicide is a mixture of pyroxasulfone and sulfentrazone, and the undesired vegetation is wild oat; or
(xiv) the second herbicide is a mixture of pyroxasulfone and carfentrazone and the undesired vegetation is yellow nutsedge.

5. The method of claim 4, wherein:
(i) the second herbicide is clomazone and the undesired vegetation is selected from the group consisting of: wild oat;
(ii) the second herbicide is aclonifen and the undesired vegetation is wild oat;
(iii) the second herbicide is pyroxasulfone and the undesired vegetation is selected from the group consisting of: common ragweed and quackgrass;
(v) the second herbicide is diflufenican and the undesired vegetation is Italian ryegrass;
(vii) the second herbicide is napropamide and the undesired vegetation is annual bluegrass;
(ix) the second herbicide is bromoxynil and the undesired vegetation is common chickweed;
(x) the second herbicide is S-metolachlor and the undesired vegetation is jimsonweed;
(xi) the second herbicide is isoxaflutole and the undesired vegetation is ivyleaf morningglory;
(xiii) the second herbicide is atrazine and the undesired vegetation is velvetleaf; or
(xv) the second herbicide is metsulfuron-methyl and the undesired vegetation is Italian ryegrass.

## Patentansprüche

1. Zusammensetzung, umfassend ein erstes Herbizid, bei dem es sich um 2-(2,4-Dichlorphenyl)methyl-4,4-dimethyl-3-isoxazolidinon (2,4 DC) handelt, und ein zweites Herbizid, ausgewählt aus:
(i) Clomazon;
(ii) Aclonifen;
(iii) Pyroxasulfon;
(iv) Diflufenican;
(v) Napropamid;
(vi) Dimethenamid-P;
(vii) Bromoxynil;
(viii) S-Metolachlor;
(ix) Isoxaflutol;
(x) Dimethachlor;
(xi) Atrazin;
(xii) Metsulfuron-methyl;
(xiii) einer Mischung aus Pyroxasulfon und Sulfentrazon oder
(xiv) einer Mischung aus Pyroxasulfon und Carfentrazon.

2. Zusammensetzung nach Anspruch 1, wobei das zweite Herbizid aus der Gruppe ausgewählt ist, bestehend aus Clomazon, Aclonifen, Dimethenamid-P, Diflufenican, S-Metolachlor, Pyroxasulfon, Isoxaflutol und Napropamid.

3. Zusammensetzung nach Anspruch 1, wobei das zweite Herbizid aus der Gruppe ausgewählt ist, bestehend aus Clomazon, Aclonifen, Pyroxasulfon, Diflufenican, Napropamid, Bromoxynil, S-Metolachlor, Isoxaflutol, Atrazin und Metsulfuron-methyl.

4. Verfahren zur Bekämpfung unerwünschter Vegetation in einer Kulturpflanze, umfassend das Aufbringen einer als Herbizid wirksamen Menge einer Zusammensetzung nach Anspruch 1 auf den Ort einer solchen Vegetation, wobei die Kulturpflanze aus der Gruppe ausgewählt ist, bestehend aus breitblättrigen Kulturen und Graskulturen, und wobei:
(i) das zweite Herbizid Clomazon ist und die unerwünschte Vegetation aus der Gruppe ausgewählt ist, bestehend aus: Trespe und Wildem Hafer;
(ii) das zweite Herbizid Aclonifen ist und die unerwünschte Vegetation aus der Gruppe ausgewählt ist, bestehend aus: Wildem Hafer und Schwarzem Nachtschatten;
(iii) das zweite Herbizid Pyroxasulfon ist und die unerwünschte Vegetation aus der Gruppe ausgewählt ist, bestehend aus: Beifuß-Ambrosie, Quecke und Gemeinem Stechapfel;
(iv) das zweite Herbizid Diflufenican ist und die unerwünschte Vegetation aus der Gruppe ausgewählt ist, bestehend aus: Weißem Gänsefuß und Italienischem Raygras;
(v) das zweite Herbizid Napropamid ist und die unerwünschte Vegetation Einjähriges Rispengras ist;
(vi) das zweite Herbizid Dimethenamid-P ist und die unerwünschte Vegetation Gewöhnliches Hirtentäschel ist;
(vii) das zweite Herbizid Bromoxynil ist und die unerwünschte Vegetation Gewöhnliche Vogelmiere ist;
(viii) das zweite Herbizid S-Metolachlor ist und die unerwünschte Vegetation aus der Gruppe ausgewählt ist, bestehend aus: Gemeinem Stechapfel, Schwarzem Nachtschatten und Bengalischer Tagblume;
(ix) das zweite Herbizid Isoxaflutol ist und die unerwünschte Vegetation Efeu-Prunkwinde ist;
(x) das zweite Herbizid Dimethachlor ist und die unerwünschte Vegetation Acker-Fuchsschwanz ist;
(xi) das zweite Herbizid Atrazin ist und die unerwünschte Vegetation Lindenblättrige Schönmalve ist;
(xii) das zweite Herbizid Metsulfuron-methyl ist und die unerwünschte Vegetation Italienisches Raygras ist;
(xiii) das zweite Herbizid eine Mischung aus Pyroxasulfon und Sulfentrazon ist und die unerwünschte Vegetation Wilder Hafer ist; oder
(xiv) das zweite Herbizid eine Mischung aus Pyroxasulfon und Carfentrazon ist und die unerwünschte Vegetation Erdmandel ist.

5. Verfahren nach Anspruch 4, wobei
(i) das zweite Herbizid Clomazon ist und die unerwünschte Vegetation aus der Gruppe ausgewählt ist, bestehend aus: Wildem Hafer;
(ii) das zweite Herbizid Aclonifen ist und die unerwünschte Vegetation Wilder Hafer ist;
(iii) das zweite Herbizid Pyroxasulfon ist und die unerwünschte Vegetation aus der Gruppe ausgewählt ist, bestehend aus: Beifuß-Ambrosie und Quecke;
(v) das zweite Herbizid Diflufenican ist und die unerwünschte Vegetation Italienisches Raygras ist;
(vii) das zweite Herbizid Napropamid ist und die unerwünschte Vegetation Einjähriges Rispengras ist;
(ix) das zweite Herbizid Bromoxynil ist und die unerwünschte Vegetation Gewöhnliche Vogelmiere ist;
(x) das zweite Herbizid S-Metolachlor ist und die unerwünschte Vegetation Gemeiner Stechapfel ist;
(xi) das zweite Herbizid Isoxaflutol ist und die unerwünschte Vegetation Efeu-Prunkwinde ist;
(xiii) das zweite Herbizid Atrazin ist und die unerwünschte Vegetation Lindenblättrige Schönmalve ist; oder
(xv) das zweite Herbizid Metsulfuron-methyl ist und die unerwünschte Vegetation Italienisches Raygrass ist.

## Revendications

1. Composition comprenant un premier herbicide qui est la 2-(2,4-dichlorophényl)méthyl-4,4-diméthyl-3-isoxazolidinone (2,4 DC) et un deuxième herbicide choisi parmi :
(i) clomazone ;
(ii) aclonifène ;
(iii) pyroxasulfone ;
(iv) diflufénican ;
(v) napropamide ;
(vi) diméthénamide-P ;
(vii) bromoxynil ;
(viii) S-métolachlore ;
(ix) isoxaflutole ;
(x) diméthachlore ;
(xi) atrazine ;
(xii) metsulfuron-méthyle ;
(xiii) un mélange de pyroxasulfone et de sulfentrazone ; ou
(xiv) un mélange de pyroxasulfone et de carfentrazone.

2. Composition selon la revendication 1, dans laquelle le deuxième herbicide est choisi dans le groupe constitué par clomazone ; aclonifène ; diméthénamide-P ; diflufénican ; S-métolachlore ; pyroxasulfone ; isoxaflutole ; et napropamide.

3. Composition selon la revendication 1, dans laquelle le deuxième herbicide est choisi dans le groupe constitué par clomazone, aclonifène, pyroxasulfone, diflufénican, napropamide, bromoxynil, S-métolachlore, isoxaflutole, atrazine et metsulfuron-méthyle.

4. Procédé de lutte contre de la végétation indésirable dans une culture, comprenant l'application, sur le site de cette végétation, d'une quantité efficace du point de vue herbicide d'une composition telle que définie dans la revendication 1, dans lequel ladite culture est choisie dans le groupe constitué par les cultures dicotylédones et les cultures de graminées, et dans lequel :
(i) le deuxième herbicide est le clomazone et la végétation indésirable est choisie dans le groupe constitué par : le brome des toits et l'avoine sauvage ;
(ii) le deuxième herbicide est l'aclonifène et la végétation indésirable est choisie dans le groupe constitué par : l'avoine sauvage et la morelle noire ;
(iii) le deuxième herbicide est la pyroxasulfone et la végétation indésirable est choisie dans le groupe constitué par : l'ambroisie à feuilles d'armoise, le chiendent rampant et la stramoine commune ;
(iv) le deuxième herbicide est le diflufénican et la végétation indésirable est choisie dans le groupe constitué par : le chénopode blanc et le ray-grass d'Italie ;
(v) le deuxième herbicide est le napropamide et la végétation indésirable est le pâturin annuel ;
(vi) le deuxième herbicide est le diméthénamide-P et la végétation indésirable est la bourse-à-pasteur ;
(vii) le deuxième herbicide est le bromoxynil et la végétation indésirable est le mouron des oiseaux ;
(viii) le deuxième herbicide est le S-métolachlore et la végétation indésirable est choisie dans le groupe constitué par : la stramoine commune, la morelle noire et la comméline du Bengale ;
(ix) le deuxième herbicide est l'isoxaflutole et la végétation indésirable est l'ipomée à feuilles de lierre ;
(x) le deuxième herbicide est le diméthachlore et la végétation indésirable est le vulpin des champs ;
(xi) le deuxième herbicide est l'atrazine et la végétation indésirable est l'abutilon ;
(xii) le deuxième herbicide est le metsulfuron-méthyle et la végétation indésirable est le ray-grass d'Italie ;
(xiii) le deuxième herbicide est un mélange de pyroxasulfone et de sulfentrazone, et la végétation indésirable est l'avoine sauvage ; ou
(xiv) le deuxième herbicide est un mélange de pyroxasulfone et de carfentrazone et la végétation indésirable est le souchet comestible.

5. Procédé selon la revendication 4, dans lequel :
(i) le deuxième herbicide est le clomazone et la végétation indésirable est choisie dans le groupe constitué par : l'avoine sauvage ;
(ii) le deuxième herbicide est l'aclonifène et la végétation indésirable est l'avoine sauvage ;
(iii) le deuxième herbicide est la pyroxasulfone et la végétation indésirable est choisie dans le groupe constitué par : l'ambroisie à feuilles d'armoise et le chiendent rampant ;
(v) le deuxième herbicide est le diflufénican et la végétation indésirable est le ray-grass d'Italie ;
(vii) le deuxième herbicide est le napropamide et la végétation indésirable est le pâturin annuel ;
(ix) le deuxième herbicide est le bromoxynil et la végétation indésirable est le mouron des oiseaux ;
(x) le deuxième herbicide est le S-métolachlore et la végétation indésirable est la stramoine commune ;
(xi) le deuxième herbicide est l'isoxaflutole et la végétation indésirable est l'ipomée à feuilles de lierre ;
(xiii) le deuxième herbicide est l'atrazine et la végétation indésirable est l'abutilon ; ou
(xv) le deuxième herbicide est le metsulfuron-méthyle et la végétation indésirable est le ray-grass d'Italie.
